(19) Europäisches Patentamt
European Patent Office
Office européen des brevets

(11) **EP 4 755 934 A1**

(12) **EUROPEAN PATENT APPLICATION**
published in accordance with Art. 153(4) EPC

(43) Date of publication:
**10.06.2026 Bulletin 2026/24**

(21) Application number: **24849266.2**

(22) Date of filing: **01.08.2024**

(51) International Patent Classification (IPC):
***C08F 36/04*** (2006.01) ***B60C 1/00*** (2006.01)
***C08F 297/04*** (2006.01) ***C08K 3/013*** (2018.01)
***C08L 9/00*** (2006.01) ***C08L 53/02*** (2006.01)

(52) Cooperative Patent Classification (CPC):
**B60C 1/00; C08F 36/04; C08F 297/04; C08K 3/013; C08L 9/00; C08L 53/02**

(86) International application number:
**PCT/JP2024/027614**

(87) International publication number:
**WO 2025/028621 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2023 JP 2023126215**

(71) Applicant: **ASAHI KASEI KABUSHIKI KAISHA
Tokyo 100-0006 (JP)**

(72) Inventors:
- **HISAMURA, Kenta
Tokyo 100-0006 (JP)**
- **ISHIZAKA, Takanobu
Tokyo 100-0006 (JP)**
- **KONDO, Tomohiro
Tokyo 100-0006 (JP)**

(74) Representative: **Strehl & Partner mbB
Maximilianstrasse 54
80538 München (DE)**

(54) **MODIFIED CONJUGATED DIENE POLYMER, BALE, METHOD FOR PRODUCING MODIFIED CONJUGATED DIENE POLYMER, RUBBER COMPOSITION, AND TIRE**

(57) A modified conjugated diene-based polymer, satisfying the following <condition (i)> to <condition (vi)>: <condition (i)> a Mooney viscosity measured at 100°C is 100 or more and 180 or less; <condition (ii)> a Mooney stress relaxation measured at 100°C is in a range of 0.10 to 0.40; <condition (iii)> a glass transition temperature is -95°C to -45°C; <condition (iV)> a content of silicon atoms is 100 ppm by mass or more with respect to a total amount of the modified conjugated diene-based polymer; <condition (V)> a content of nitrogen atoms is 50 ppm by mass or more with respect to a total amount of the modified conjugated diene-based polymer; and <condition (Vi)> a content of an antioxidant is 0.5 parts by mass or less with respect to 100 parts by mass of the modified conjugated diene-based polymer.

EP 4 755 934 A1

## Description

### Technical Field

The present invention relates to a modified conjugated diene-based polymer, a bale, a production method for a modified conjugated diene-based polymer, a rubber composition and a tire.

### Background Art

In recent years, there has been an increasing demand for reduction of fuel consumption in vehicles, and improvement of rubber materials used in a vehicle tire, particularly, in a tire tread coming in contact with a road surface is required. Owing to increasing requirements for fuel economy regulations for vehicles, there are increasing requirements for using resins for vehicle members, and reducing the thickness of a tire for purposes of weight reduction of vehicles.

An example of a material meeting the aforementioned requirements includes a material containing a rubber and a reinforcing filler such as carbon black or silica.

For example, when a material containing silica is used, it is possible to improve the balance between a low hysteresis loss property and wet skid resistance. Also, an attempt has been made to reduce a hysteresis loss by improving dispersibility of silica in the material through introduction of a functional group having affinity or reactivity with silica into a molecular end of a rubber having high mobility, and furthermore, by reducing the mobility of the molecular end of the rubber through bonding with silica particles. In particular, an attempt has been made to further reduce hysteresis by introducing modifying groups at both ends of the polymer chain. Furthermore, higher molecular weights of modified conjugated diene-based polymers are being developed from the viewpoint of improving fracture strength and abrasion resistance.

However, modified conjugated diene-based polymers with high molecular weights have the problem that the polymer particles are easily peeled off from the surface of bales of the modified conjugated diene-based polymers themselves, and the area around the forming machine and the conveyor that transports bales after forming is polluted with the polymer particles, leaving room for improvement in terms of the work environment.

Furthermore, by introducing modifying groups at both ends of the polymer chain, the content of nitrogen atoms in the modified conjugated diene-based polymer increases, resulting in a decrease in thermal stability, and it is necessary to add a large amount of an antioxidant. Thus, there is room for reducing the amount used also from the viewpoints of reducing product cost and reducing environmental load.

Examples of the method for suppressing the peeling off of such modified conjugated diene-based polymers with high molecular weights from the surface of bales include a method in which a process oil is added.

For example, Patent Literature 1 discloses a method of suppressing the peeling off of polymer particles from the surface of bales by adding a process oil to a solution of a conjugated diene-based polymer to form an oil-extended conjugated diene-based polymer.

Furthermore, Patent Literatures 2 and 3 propose polymers functionalized by reacting a cyclic azasilacycle compound with a polymer active end.

Moreover, Patent Literatures 4 and 5 propose diene-based rubbers obtained by a coupling reaction of a polymer active end with a polyfunctional silane compound.

### Citation List

### Patent Literature

Patent Literature 1: Japanese Patent Laid-Open No. 2019-131810

Patent Literature 2: Japanese Patent Laid-Open No. 2005-290355

Patent Literature 3: Japanese Patent Laid-Open No. 11-189616

Patent Literature 4: International Publication No. WO 07/114203

Patent Literature 5: Japanese Patent Application No. 2018-534375

### Summary of Invention

## Technical Problem

Conventionally, modified conjugated diene-based polymers have generally been oil-extended modified conjugated diene-based polymers to which a process oil has been added from the viewpoint of improving bale formability and processability after kneading. On the other hand, in recent years, it has become desirable to reduce the amount of a process oil to be added to conjugated diene-based polymers as much as possible from the viewpoint of improving the formulation flexibility when fabricating rubber compositions.

However, in the case of the bales of conjugated diene-based polymer disclosed in Patent Literature 1, there is a problem that sufficient formability may not be obtained when the amount of a process oil to be added is reduced.

For example, when the molecular weight of modified conjugated diene-based polymer is increased in order to improve abrasion resistance, or when the glass transition temperature of modified conjugated diene-based polymer is set lower in order to improve a low hysteresis loss property, if the amount of a process oil to be added is small or no process oil is included in the composition, the polymer particles are easily peeled off from the surface of bales. Furthermore, an increase in the nitrogen content tends to deteriorate thermal stability, and there is a problem that it is necessary to increase the amount of antioxidant to be added when preparing a bale formed body.

## Solution to Problem

The present inventors have made earnest studies to solve the above-described problems, resulting in finding that a modified conjugated diene-based polymer having a predetermined Mooney viscosity and Mooney stress relaxation rate (MSR), having a glass transition temperature in a predetermined range, and having a predetermined content of silicon atoms and content of nitrogen atoms can be formed into a bale formed body while suppressing the content of an antioxidant, thereby solving the above-described problems, and thus, the present invention has been accomplished.

Specifically, the present invention is as follows:

[1] A modified conjugated diene-based polymer, satisfying the following condition (i) to the following condition (vi):

<condition (i)>
a Mooney viscosity measured at 100°C is 100 or more and 180 or less;
<condition (ii)>
a Mooney stress relaxation measured at 100°C is in a range of 0.10 to 0.40;
<condition (iii)>
a glass transition temperature is -95°C to -45°C;
<condition (iV)>
a content of silicon atoms is 100 ppm by mass or more with respect to a total amount of the modified conjugated diene-based polymer;
<condition (V)>
a content of nitrogen atoms is 50 ppm by mass or more with respect to a total amount of the modified conjugated diene-based polymer; and
<condition (Vi)>
a content of an antioxidant is 0.5 parts by mass or less with respect to 100 parts by mass of the modified conjugated diene-based polymer.

[2] The modified conjugated diene-based polymer according to [1], wherein the Mooney viscosity measured at 100°C of the <condition (i)> is 105 or more and 180 or less.

[3] The modified conjugated diene-based polymer according to [1] or [2], wherein the Mooney stress relaxation measured at 100°C of the <condition (ii)> is 0.10 to 0.35.

[4] The modified conjugated diene-based polymer according to any one of [1] to [3], wherein the glass transition temperature of the <condition (iii)> is -95°C to -55°C.

[5] The modified conjugated diene-based polymer according to any one of [1] to [4], wherein the content of nitrogen atoms of the <condition (V)> is 80 ppm by mass or more with respect to a total amount of the modified conjugated diene-based polymer.

[6] The modified conjugated diene-based polymer according to any one of [1] to [5], wherein a molecular weight distribution (PDI; MWD) is 1.4 to 2.5.

[7] The modified conjugated diene-based polymer according to any one of [1] to [6], wherein an amount of 1,2-vinyl bond is 45.0 mol% or less with respect to a total mass of the modified conjugated diene-based polymer.

[8] The modified conjugated diene-based polymer according to any one of [1] to [7], wherein a branch number (Bn) measured by viscosity detector-equipped GPC-light scattering measurement is 2 or more.

[9] The modified conjugated diene-based polymer according to any one of [1] to [8],

having a nitrogen atom at least at one end, and

having at least one branched chain with a star structure,

wherein the branched chain with a star structure has a portion derived from a vinyl-based monomer containing an alkoxysilyl group or a halosilyl group, and

wherein the portion derived from a vinyl-based monomer containing an alkoxysilyl group or a halosilyl group has a further main chain branch structure and has a coupling structure centered on a nitrogen-containing alkoxysilane substituent.

[10] The modified conjugated diene-based polymer according to any one of [1] to [9],

wherein, in the coupling structure centered on a nitrogen-containing alkoxysilane substituent, a nitrogen-containing alkoxysilane modifier residue has at least four silicon atoms and alkoxy groups and/or hydroxy groups, and

wherein a modified conjugated diene-based polymer chain having a main chain branch structure is bonded to the silicon atoms, and in the modifier residue, a number of the alkoxy groups and/or the hydroxy groups is larger than a number of the silicon atoms on average.

[11] A bale comprising 100 parts by mass of the modified conjugated diene-based polymer according to any one of [1] to [10] and 2 parts by mass or less of a softener component.

[12] A bale comprising 100 parts by mass of the modified conjugated diene-based polymer according to any one of [1] to [10] and less than 1 part by mass or less of a softener component.

[13] A method for producing the modified conjugated diene-based polymer according to any one of [1] to [10], the method comprising:

a step of polymerizing at least a conjugated diene compound in the presence of an organic lithium compound having at least one nitrogen atom in a molecule; and

a branching step of obtaining a branched conjugated diene-based polymer having a main chain branch structure, using a branching agent,

wherein, in a step of coupling the branched conjugated diene-based polymer using a coupling agent and/or a step of modifying the branched conjugated diene-based polymer with a modifier having a nitrogen-containing group, the coupling agent and/or the modifier is added in excess.

[14] A rubber composition comprising:

100 parts by mass of a rubber component; and

5.0 parts by mass or more and 150 parts by mass or less of a filler,

wherein the rubber component contains 10 parts by mass or more of the modified conjugated diene-based polymer according to any one of [1] to [10] or the bale according to [11] or [12] with respect to 100 parts by mass of a total amount of the rubber component.

[15] A tire comprising the rubber composition according to [14].

## Advantageous Effect of Invention

The present invention can provide a modified conjugated diene-based polymer having excellent fuel efficiency and processability, and being excellent in bale formability even though it is a non-oil-extended product to which no process oil has been added.

## Description of Embodiments

Now, an embodiment for practicing the present invention (hereinafter referred to as the "present embodiment") will be described in detail.

It is noted that the following present embodiment is merely an example for describing the present invention and the present invention is not limited to the following embodiment. The present invention can be practiced with various modifications made within the scope thereof.

[Modified Conjugated Diene-based Polymer]

A modified conjugated diene-based polymer of the present embodiment satisfies the following <condition (i)> to the following <condition (vi)>:

<condition (i)>
a Mooney viscosity measured at 100°C is 100 or more and 180 or less;
<condition (ii)>
a Mooney stress relaxation measured at 100°C is in a range of 0.10 to 0.40.
<condition (iii)>
a glass transition temperature is -95°C to -45°C;
<condition (iV)>
a content of silicon atoms is 100 ppm by mass or more with respect to a total amount of the modified conjugated diene-based polymer;
<condition (V)>
a content of nitrogen atoms is 50 ppm by mass or more with respect to a total amount of the modified conjugated diene-based polymer; and
<condition (Vi)>
a content of an antioxidant is 0.5 parts by mass or less with respect to 100 parts by mass of the modified conjugated diene-based polymer.

The modified conjugated diene-based polymer of the present embodiment has excellent fuel efficiency and processability, suppresses a decrease in thermal stability even though it is a non-oil-extended product to which no process oil has been added, and is excellent in bale formability.

When the modified conjugated diene-based polymer of the present embodiment is formed into a vulcanizate, it has extremely excellent processability, and there is a tendency that a particularly excellent balance between a low hysteresis loss property and wet skid resistance can be realized when formed into a vulcanizate. Also, when the modified conjugated diene-based polymer of the present embodiment is formed into a vulcanizate, it tends to have excellent abrasion resistance, good strain dispersion at 50°C, excellent repeated strain strength, and practically sufficient fracture performance.

The modified conjugated diene-based polymer of the present embodiment may be any of the following: a homopolymer of a single conjugated diene compound; a polymer of different types of modified conjugated diene compounds, that is, a copolymer; and a copolymer of a conjugated diene compound and a vinyl aromatic compound.

Examples of the conjugated diene compound include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferred from the viewpoint that the effects of the present embodiment are effectively and definitely exhibited. One of these conjugated diene compounds may be singly used, or two or more of these may be used together.

Examples of the vinyl aromatic compound include, but are not limited to, styrene, p-methylstyrene, $\alpha$-methylstyrene, vinylethylbenzene, vinylxylene, vinylnaphthalene, and diphenylethylene. Among these, styrene is preferred from the viewpoint that the effects of the present embodiment are effectively and definitely exhibited. One of these vinyl aromatic compounds may be singly used, or two or more of these may be used together.

(Condition (i): Mooney Viscosity of Modified Conjugated Diene-based Polymer)

A Mooney viscosity is an index indicating the overall characteristics of a modified conjugated diene-based polymer, including information on the molecular weight, molecular weight distribution, branch number, softener content, and the like of the modified conjugated diene-based polymer. Also, the method for measuring Mooney viscosity is specified in ISO 289, and the error in measurement values due to machine differences is small, making it extremely effective in controlling the performance of the modified conjugated diene-based polymer.

The Mooney viscosity of the modified conjugated diene-based polymer of the present embodiment measured at 100°C (hereinafter also simply referred to as "Mooney viscosity" or "ML") is 100 or more, and from the viewpoint of steering stability, fracture strength, and abrasion resistance when crosslinkable rubber compositions are used for tires, it is preferably 105 or more, and more preferably 115 or more.

On the other hand, the upper limit is 180 or less, and from the viewpoints of formability and productivity of formed bodies with various shapes such as sheet or block shapes and rubber compositions of the present embodiment, as well as processability of rubber compositions in which a filler or the like has been compounded, it is preferably 170 or less, more preferably 160 or less, and further preferably 150 or less.

In general, as the Mooney viscosity increases, the steering stability, fracture strength, and abrasion resistance when the modified conjugated diene-based polymer and a rubber composition thereof are used for tires are improved. On the other hand, the formability of sheet-like or block-like formed bodies and rubber compositions containing the modified conjugated diene-based polymer tends to deteriorate. In general, if the Mooney viscosity is 100 or more, it is necessary to compound a process oil in order to form a bale. However, in the modified conjugated diene-based polymer of the present embodiment, the Mooney viscosity, Mooney stress relaxation rate, glass transition temperature, content of silicon atoms, and content of nitrogen atoms are particularly specified as described later. As a result, the modified conjugated diene-based polymer of the present embodiment has a significant characteristic in that even a polymer with a Mooney viscosity of 100 or more, which would normally be difficult to be formed into a bale without the addition of a process oil, can be formed into a bale. Also, by specifying the Mooney viscosity at 180 or less, the modified conjugated diene-based polymer is prevented from being peeled off from the bale, exhibiting good bale formability.

The Mooney viscosity of the modified conjugated diene-based polymer is measured by the following method.

First, a sample obtained by making the modified conjugated diene-based polymer into a plate with a pressurizing press is set in an apparatus, and the sample is first preheated at 100°C for 1 minute. Then, the rotor is then rotated at 2 rpm, the torque after 4 minutes is measured, and the measured value is taken as the Mooney viscosity ($ML_{(1+4)}$). More specifically, it can be measured by a method described in the examples below.

The Mooney viscosity of the modified conjugated diene-based polymer of the present embodiment can be controlled within the numerical range described above by adjusting the type, timing of use, and amount of branching agent and coupling modifier, as well as the molecular weight, molecular weight distribution, and branch number of the modified conjugated diene-based polymer.

(Condition (ii): Mooney Stress Relaxation of Modified Conjugated Diene-based Polymer)

The Mooney stress relaxation of the modified conjugated diene-based polymer of the present embodiment measured at 100°C (hereinafter also simply referred to as "Mooney stress relaxation" or "MSR") is 0.40 or less, and from the viewpoint of processability of rubber compositions with a filler or the like compounded, it is preferably 0.35 or less, and more preferably 0.30 or less. On the other hand, the Mooney stress relaxation is 0.10 or more, and from the viewpoint of steering stability and fracture strength when the conjugated diene-based polymer of the present embodiment is used as a material for tires, it is preferably 0.15 or more, and further preferably 0.20 or more.

Like the Mooney viscosity, the Mooney stress relaxation is also affected by the molecular weight, molecular weight distribution, branch number, and softener content of a modified conjugated diene-based polymer, and is an index indicating the overall characteristics of the modified conjugated diene-based polymer.

The MSR can be measured as follows, using a Mooney viscometer.

For a measurement temperature of the Mooney stress relaxation, a sample is first preheated at 100°C for 1 minute, the rotor is then rotated at 2 rpm, and the Mooney viscosity ($ML_{(1+4)}$) is measured from the torque after 4 minutes. Thereafter, the rotation of the rotor is immediately stopped. The torque is recorded in Mooney units every 0.1 second from 1.6 seconds to 5 seconds after the stoppage, the slope of the straight line obtained by log-log plotting both torque and time (seconds) is determined, and its absolute value is used as a Mooney stress relaxation (MSR).

More specifically, it can be measured by a method described in the examples below.

The Mooney stress relaxation of the modified conjugated diene-based polymer of the present embodiment can be controlled within the numerical range described above by adjusting the type, timing of use, and amount of branching agent and coupling modifier, as well as the molecular weight, molecular weight distribution, and branch number of the modified conjugated diene-based polymer.

(Condition (iii) Glass Transition Temperature of Modified Conjugated Diene-based Polymer)

The glass transition temperature (hereinafter also referred to as "Tg") of the modified conjugated diene-based polymer of the present embodiment is - 95°C or more, preferably -78°C or more, and more preferably -65°C or more. When the glass transition temperature is -95°C or more, the processability in vulcanization is excellent. Also, the glass transition temperature of the modified conjugated diene-based polymer of the present embodiment is -45°C or less, preferably -55°C or less, more preferably -58°C or less, and further preferably -60°C or less. When the glass transition temperature is -45°C or less, a vulcanizate of the modified conjugated diene-based polymer is excellent in fracture strength, abrasion resistance, and a low hysteresis loss property.

The glass transition temperature may fall in a range obtained by arbitrarily combining any of the upper limits and any of the lower limits. The glass transition temperature of the modified conjugated diene-based polymer can be measured in accordance with ISO 22768: 2017. More specifically, a DSC curve is recorded by measuring differential scanning calorimetry (DSC) with a temperature increased within a prescribed range, and a peak top (inflection point) of a DSC differential curve thus obtained is defined as the glass transition temperature. Specifically, it can be measured by a method described in the examples below.

(Condition (iv): Content of Silicon Atoms)

From the viewpoint of making the modified conjugated diene-based polymer of the present embodiment have excellent fuel efficiency even though it is a non-oil-extended product to which no process oil has been added, the silicon atom content is 100 ppm by mass or more with respect to the total amount of the modified conjugated diene-based polymer. The silicon atom content can be measured by using 0.5 g of the modified conjugated diene-based polymer as a sample and using an ultraviolet and visible spectrophotometer (trade name "UV-1800" manufactured by Shimadzu Corporation) in accordance with JIS K 0101 44.3.1, and quantified by the molybdenum blue absorption spectrophotometry.

In general, the content of silicon atoms serves as an index of the amounts to be added of the coupling agent and modifier, contained in the modified conjugated diene-based polymer. For example, in a modified conjugated diene-based polymer having a relatively low molecular weight, the silicon content may be high in general, and as the molecular weight increases, the amounts to be added of the coupling agent and modifier contained in the modified conjugated diene-based polymer decreases, and therefore, the silicon content tends to decrease. By containing silicon atoms, the interaction with a filler added when forming a composition, such as silica, tends to become stronger. The silicon atom content in the modified conjugated diene-based polymer of the present embodiment is 100 ppm by mass or more, preferably 130 ppm by mass or more, and more preferably 150 ppm by mass or more.

The silicon atom content in the modified conjugated diene-based polymer of the present embodiment is preferably 500 ppm by mass or less, more preferably 400 ppm by mass or less, and further preferably 350 ppm by mass or less.

There is a tendency that the content of silicon atoms can be controlled within the above range by adjusting the amounts to be added and reaction conditions of the modifier and the coupling agent.

(Condition (v): Content of Nitrogen Atoms)

In the modified conjugated diene-based polymer of the present embodiment, the content of nitrogen atoms is 50 ppm by mass or more with respect to the total amount of the modified conjugated diene-based polymer.

The content of nitrogen atoms (hereinafter also referred to as "nitrogen content") refers to the total amount of nitrogen atoms in nitrogen-containing functional groups of the modified conjugated diene-based polymer at a start end, in the main chain, and at a terminal end, for example.

From the viewpoints of processability, balance between a low hysteresis loss property and wet skid resistance, abrasion resistance, and fracture performance, the nitrogen content of the modified conjugated diene-based polymer is 50 ppm by mass or more, preferably 60 ppm by mass or more, more preferably 70 ppm by mass or more, and further preferably 80 ppm by mass or more, with respect to the total amount of the modified conjugated diene-based polymer. Also, from the viewpoint of processability, the nitrogen content is preferably 800 ppm by mass or less, more preferably 700 ppm by mass or less, further preferably 600 ppm by mass or less, and still further preferably 500 ppm by mass or less.

The content of nitrogen atoms can be measured by the oxidative combustion-chemiluminescence method (JIS-2609: Crude petroleum and petroleum products - Determination of nitrogen content).

More specifically, the content of nitrogen atoms can be measured by a method described in the examples below.

There is a tendency that the nitrogen content can be controlled by adjusting the amount to be added and reaction conditions of the modifier, and by this method, it can be set to 50 ppm by mass or more. For example, a method in which polymerization is performed by using, as a polymerization initiator, an organic lithium compound having at least one nitrogen atom in a molecule described later, or a method in which a modified conjugated diene-based polymer having

nitrogen atoms obtained by copolymerizing a monomer having at least one nitrogen atom in a molecule is reacted with a modifier having at least one nitrogen atom in a molecule, can be employed.

Moreover, as a method for obtaining a modified conjugated diene-based polymer having a nitrogen content of 500 ppm by mass or less, for example, a method of controlling the molecular weight of the modified conjugated diene-based polymer chain so that it is not too small can be mentioned.

(Condition (vi): Content of Antioxidant)

In the modified conjugated diene-based polymer of the present embodiment, the content of an antioxidant is 0.5 parts by mass or less with respect to 100 parts by mass of the modified conjugated diene-based polymer.

The content of an antioxidant (hereinafter also referred to as "antioxidant content") refers to the total content of the antioxidant contained in the modified conjugated diene-based polymer, which is added to ensure thermal stability. For example, in a modified conjugated diene-based polymer having a high molecular weight and a high Mooney viscosity, the amount of an antioxidant added may be high in general, and as the molecular weight increases, the amount added of the antioxidant contained in the modified conjugated diene-based polymer tends to increase.

Also, by introducing modifying groups at both ends of the polymer chain, the nitrogen content in the modified conjugated diene-based polymer increases, which may decrease thermal stability and require the addition of a large amount of an antioxidant. On the other hand, from the viewpoints of reducing product cost and reducing environmental load, it is preferable to reduce the amount of an antioxidant used. The modified conjugated diene-based polymer of the present embodiment can be formed into a bale while reducing the amount of an antioxidant added by satisfying predetermined conditions. From the above viewpoints, the content of an antioxidant with respect to 100 parts by mass of the modified conjugated diene-based polymer is 0.5 parts by mass or less, preferably 0.45 parts by mass or less, more preferably 0.40 parts by mass or less, and further preferably 0.35 parts by mass or less. Also, from the viewpoint of thermal stability, the content of an antioxidant is preferably 0.1 parts by mass or more, more preferably 0.2 parts by mass or more, and even more preferably 0.3 parts by mass or more.

The content of an antioxidant can be measured by an HPLC analysis method described later.

(Average Molecular Weight and Molecular Weight Distribution)

A weight average molecular weight measured by a GPC measurement method of the modified conjugated diene-based polymer of the present embodiment is preferably $45 \times 10^4$ or more, more preferably $50 \times 10^4$ or more, further preferably $60 \times 10^4$ or more, still further preferably $65 \times 10^4$ or more, and even more preferably $70 \times 10^4$ or more. When the weight average molecular weight measured by the GPC measurement method is $45 \times 10^4$ or more, a vulcanizate obtained therefrom is further excellent in a low hysteresis loss property. Besides, the weight average molecular weight is preferably $250 \times 10^4$ or less, more preferably $200 \times 10^4$ or less, further preferably $150 \times 10^4$ or less, and still further preferably $120 \times 10^4$ or less. When the weight average molecular weight is $250 \times 10^4$ or less, dispersibility of a filler in the vulcanizate obtained therefrom is further excellent, and practically sufficient fracture performance tends to be obtained.

The weight average molecular weight may fall in a range obtained by arbitrarily combining any of the upper limits and any of the lower limits.

The weight average molecular weight of the modified conjugated diene-based polymer can be measured by a method described in the examples below.

The number average molecular weight measured by the GPC measurement method of the modified conjugated diene-based polymer of the present embodiment is preferably $20 \times 10^4$ or more, more preferably $25 \times 10^4$ or more, and further preferably $30 \times 10^4$ or more. The number average molecular weight may be $35 \times 10^4$ or more. When the number average molecular weight measured by the GPC measurement method is $20 \times 10^4$ or more, processability in vulcanization is further excellent, and a vulcanizate obtained therefrom tends to be further excellent in a low hysteresis loss property. Besides, the number average molecular weight is preferably $100 \times 10^4$ or less, more preferably $90 \times 10^4$ or less, further preferably $80 \times 10^4$ or less, and still further preferably $70 \times 10^4$ or less. When the number average molecular weight is $20 \times 10^4$ or more, dispersibility of a filler in the vulcanizate obtained therefrom is further excellent, and practically sufficient fracture performance tends to be obtained.

The number average molecular weight may fall in a range obtained by arbitrarily combining any of the upper limits and any of the lower limits.

The number average molecular weight of the modified conjugated diene-based polymer can be measured by a method described in the examples below.

In the modified conjugated diene-based polymer of the present embodiment, a ratio (Mw/Mn) (molecular weight distribution, PDI (poly dispersity index); MWD) of the weight average molecular weight (Mw) measured by the GPC measurement method to the number average molecular weight (Mn) measured by the GPC measurement method is preferably 1.4 or more, more preferably 1.5 or more, further preferably 1.6 or more, and still further preferably 1.7 or more

from the viewpoints of processability in vulcanization, abrasion resistance of the vulcanizate, and fracture strength. Furthermore, the upper limit of the molecular weight distribution is not especially limited, and in general, it is preferably 2.5 or less, more preferably 2.2 or less, further preferably 2.0 or less, and still further preferably 1.9 or less.

The molecular weight distribution of the modified conjugated diene-based polymer can be controlled within the numerical range described above by adjusting the polymerization conditions, such as the type and amount of monomer, polymerization initiator, and polar compound to be added, the polymerization time, the polymerization temperature, the amount and type of coupling modifier to be added, and, when two or more types are used, their combination.

(Microstructure of Modified Conjugated Diene-based Polymer)

A microstructure (the amount of bound vinyl aromatic compound, the amount of bound conjugated diene compound, and the ratio of the amount of vinyl bond in the bound conjugated diene compound) of the modified conjugated diene-based polymer affects the glass transition temperature of the modified conjugated diene-based polymer. For this reason, there are preferred ranges for the amount of vinyl aromatic compound and the amount of vinyl bond from the viewpoint of controlling the glass transition temperature. In the microstructure of the modified conjugated diene-based polymer, the amount of bound vinyl aromatic compound is not especially limited, and it is preferably 1% by mass or more and 40% by mass or less, more preferably 1% by mass or more and 36% by mass or less, further preferably 1% by mass or more and 30% by mass or less, still further preferably 2% by mass or more and 29% by mass or less, even more preferably 3% by mass or more and 28% by mass or less, and particularly preferably 5% by mass or more and 27% by mass or less in the entire modified conjugated diene-based polymer. When the amount of bound vinyl aromatic compound falls in the above-described range, a vulcanizate of the modified conjugated diene-based polymer tends to be more superior in fracture strength, abrasion resistance, and a low hysteresis loss property. When the amount of bound vinyl aromatic compound is increased, the Tg of the modified conjugated diene-based polymer tends to be increased, and when it is decreased, the Tg tends to be decreased.

Herein, the term "amount of bound vinyl aromatic compound" means a content of a portion derived from the aromatic vinyl compound used as a monomer.

In modified conjugated diene-based polymers containing a vinyl aromatic compound, when the amount of vinyl bond in the conjugated diene bound unit or the content of the vinyl aromatic compound is set low, the Tg of the modified conjugated diene-based polymer tends to decrease and the abrasion resistance and low hysteresis property tend to increase when made into a vulcanizate, and therefore, there is a need to design polymers having such a structure. On the other hand, setting the amount of vinyl bond or the content of the vinyl aromatic compound low may have negative influence on formability when formed into a block-like bale formed body and on processability when made into a vulcanizate. Especially for non-oil-extended products that are difficult to be formed into bales, reduction of the amount of vinyl bond or the content of the vinyl aromatic compound tends to be limited in practical use.

To address these problems, the present inventors have found that by using the modified conjugated diene-based polymer of the present embodiment, the modified conjugated diene-based polymer can have good bale formability even when it is non-oil-extended. Therefore, the restriction of not being able to lower the amount of vinyl bond or the content of the vinyl aromatic compound in the microstructure design of non-oil-extended products is relaxed, making it possible to set the glass transition temperature low.

In the microstructure of the modified conjugated diene-based polymer, the amount of bound conjugated diene compound is not especially limited, and it is preferably 60% by mass or more and 99% by mass or less, more preferably 64% by mass or more and 99% by mass or less, further preferably 70% by mass or more and 99% by mass or less, still further preferably 71% by mass or more and 98% by mass or less, even more preferably 72% by mass or more and 97% by mass or less, and particularly preferably 73% by mass or more and 95% by mass or less in the entire modified conjugated diene-based polymer. When the amount of bound conjugated diene compound falls in the above-described range, a vulcanizate of the modified conjugated diene-based polymer tends to be more superior in fracture strength, abrasion resistance and a low hysteresis loss property. Herein, the term "amount of bound conjugated diene compound" means a content of a portion derived from the conjugated diene compound as a monomer.

In the microstructure of the modified conjugated diene-based polymer, the content of 1,2-vinyl bond with respect to the total mass of the modified conjugated diene-based polymer (hereinafter also simply referred to as "amount of vinyl bond") is not especially limited, and it is preferably 11.0% by mol or more and 60.0% by mol or less, more preferably 11.0% by mol or more and 45.0% by mol or less, further preferably 12.0% by mol or more and 35.0% by mol or less, still further preferably 13.0% by mol or more and 34.0% by mol or less, even more preferably 14.0% by mol or more and 33.0% by mol or less, and particularly preferably 15.0% by mol or more and 30.0% by mol or less. When the amount of vinyl bond falls in the above-described range, the modified conjugated diene-based polymer is increased in linearity in the structure of a conjugated diene portion, and increased in entanglement among polymer chains, and hence tends to be further excellent in fracture strength and abrasion resistance. Besides, when the amount of vinyl bond falls in the above-described range, a vulcanizate obtained therefrom tends to be more superior in a low hysteresis loss property.

When the amount of vinyl bond is increased, the Tg is increased, and when it is decreased, the Tg is decreased. Herein, the term "amount of vinyl bond in the bound conjugated diene" means a ratio of a portion having a vinyl bond in the portion derived from the conjugated diene compound (hereinafter referred to as "bound conjugated diene").

(Branch Number (Bn))

Herein, the branch number (Bn) is calculated by using a contracting factor (g') in accordance with an equation, g' = 6Bn/{(Bn + 1)(Bn + 2)}. Here, the contracting factor (g') is a value defined as follows.

In general, a polymer having a branch tends to have a smaller size of a molecule when compared with a straight-chain polymer having the same absolute molecular weight. Here, the term "size of a molecule" refers to a volume substantially occupied by the molecule. The contracting factor (g') relatively expresses the size of a molecule of a target polymer, and is an index of a ratio of the size of the molecule of the target polymer to a size of a molecule of a straight-chain polymer having the same absolute molecular weight as the target polymer. In other words, when the branch number of a polymer is high, the size is relatively small, and hence the contracting factor (g') tends to be small.

Here, it is known that there is a correlation between the molecule size of a polymer and a ratio of an intrinsic viscosity, and therefore, in the present embodiment, the contracting factor (g') is defined as a ratio of the intrinsic viscosity. In other words, the contracting factor (g') is defined as a ratio ($[\eta]/[\eta_0]$) of an intrinsic viscosity $[\eta]$ of the target polymer to an intrinsic viscosity $[\eta_0]$ of a straight-chain polymer having the same absolute molecular weight as the target polymer.

It is known that the intrinsic viscosity $[\eta_0]$ of a straight-chain polymer satisfies a relationship, $[\eta_0] = 10^{-3.498}M^{0.711}$. In this equation, M represents an absolute molecular weight. Accordingly, when the absolute molecular weight and the intrinsic viscosity of the target polymer are measured by viscosity detector-equipped GPC-light scattering measurement, the contracting factor (g') and the branch number (Bn) can be obtained. The thus calculated branch number (Bn) accurately expresses the number of polymer chains directly or indirectly bonded to a longest polymer main chain.

Here, the term "absolute molecular weight" means a molecular weight measured by a light scattering method. As described above, a polymer having a branch tends to have a smaller size of a molecule when compared with a straight-chain polymer having the same absolute molecular weight in general. Therefore, in employing a GPC measurement method in which a molecular weight is obtained by relative comparison with a standard polystyrene sample with a polymer screened in accordance with the size of a molecule, the molecular weight of a polymer having a branch structure tends to be underestimated. On the other hand, in the light scattering method, a molecular weight is measured by directly observing a molecule. Accordingly, in employing the light scattering method, a molecular weight can be accurately measured without being affected by the polymer structure or by interaction with a column filler. It is noted that an absolute molecular weight can be measured by a method described in the examples below.

The term "intrinsic viscosity" means a viscosity $[\eta]$ obtained ideally in accordance with the following equation (I).

In the equation (I), $\eta_1$ represents a viscosity obtained when a target polymer is dissolved in a solvent in a concentration c, and $\eta_2$ represents a viscosity of the solvent.

Herein, as the intrinsic viscosity, a value measured by a method described in the examples below is used.

$$[\eta] = \lim_{c \to 0}\left\{\frac{\eta_1 - \eta_2}{c\eta_2}\right\} \quad (I)$$

The above contracting factor expresses the rate of reduction in molecular size and does not accurately express the branch structure of the polymer.

Therefore, the branch number (Bn) of the modified conjugated diene-based polymer is calculated by using the value of the contracting factor (g') at each absolute molecular weight of the modified conjugated diene-based polymer. The "branch number (Bn)" thus calculated accurately expresses the number of polymers that are directly or indirectly bonded to each other with respect to the longest main chain structure.

The calculated branch number (Bn) serves as an index expressing the branch structure of the modified conjugated diene-based polymer. For example, in the case of a general 4-branched star polymer (in which 4 polymer chains are connected to the central portion), 2 polymer chain arms are bonded to the longest highly branched main chain structure, and hence the branch number (Bn) is evaluated as 2.

In the case of a general 8-branched star polymer, 6 polymer chain arms are bonded to the longest highly branched main chain structure, and hence the branch number (Bn) is evaluated as 6.

It is preferable that the modified conjugated diene-based polymer of the present embodiment has a branch number (Bn) of 2 or more. In such a case, it is meant that the modified conjugated diene-based polymer has, as a star polymer structure, the same branches as a 4-branched star polymer structure.

Here, the term "branch" refers to one formed by a direct or indirect bond of one polymer with another polymer.

Also, the term "branch number (Bn)" refers to the number of polymers that are directly or indirectly bonded to each other with respect to the longest main chain structure.

By having a branch number (Bn) of 2 or more, the modified conjugated diene-based polymer of the present embodiment is extremely excellent in processability when formed into a vulcanizate, and is excellent in abrasion resistance and fracture strength when formed into a vulcanizate.

In general, as the absolute molecular weight increases, processability tends to deteriorate. When the absolute molecular weight is increased in a linear polymer structure, the viscosity when formed into a vulcanizate increases significantly, and processability deteriorates substantially.

Therefore, even if a large number of functional groups are introduced into the polymer to improve affinity and/or reactivity with silica to be blended as a filler, the silica cannot be sufficiently dispersed in the polymer during the kneading process. As a result, the function of the introduced functional groups cannot be exhibited, and the expected improvement in a low hysteresis loss property and wet skid resistance due to the introduction of functional groups cannot be exhibited.

On the other hand, by setting the branch number (Bn) of the modified conjugated diene-based polymer of the present embodiment to 2 or more, the increase in viscosity when forming a vulcanizate due to an increase in absolute molecular weight is significantly suppressed. Therefore, for example, silica and the like can be sufficiently mixed during the kneading process, making it possible to disperse silica around the modified conjugated diene-based polymer. As a result, for example, in the modified conjugated diene-based polymer, setting a large molecular weight enables improvement of abrasion resistance and fracture strength, and sufficient kneading allows silica to be dispersed around the polymer, so that the functional groups can act and/or react. This makes it possible to achieve a practically sufficient low hysteresis loss property and wet skid resistance.

The absolute molecular weight of the modified conjugated diene-based polymer can be measured by a method described in the examples below.

The branch number (Bn) of the modified conjugated diene-based polymer of the present embodiment is preferably 2 or more, more preferably 3 or more, further preferably 4 or more, still further preferably 5 or more, particularly preferably 6 or more, and even more preferably 8 or more.

A modified conjugated diene-based polymer having a branch number (Bn) within this range tends to be excellent in processability when formed into a vulcanizate and in bale formability.

Also, the upper limit of the branch number (Bn) is not particularly limited and may be equal to or larger than the detection limit; however, it is preferably 84 or less, more preferably 80 or less, further preferably 60 or less, particularly preferably 40 or less, and even more preferably 20 or less.

By having a branch number (Bn) of 84 or less, the modified conjugated diene-based polymer of the present embodiment tends to be excellent in abrasion resistance when formed into a vulcanizate.

The branch number of the modified conjugated diene-based polymer can be controlled to 2 or more by the combination of the amount of branching agent to be added and the amount of end coupling agent to be added. Specifically, the control of the branch number can be achieved by the number of functional groups of the branching agent, the amount of branching agent to be added, the timing of adding the branching agent, the number of functional groups of the coupling agent or nitrogen atom-containing modifier, or the amount of the coupling agent or nitrogen atom-containing modifier to be added. More specifically, the control of the branch number will be described in the method for producing the modified conjugated diene-based polymer described later.

In general, the abrasion resistance and fracture strength of polymers tend to be excellent when the absolute molecular weight of polymers is higher. However, when the absolute molecular weight of polymers having a low branch number is increased, the polymer particles are easily peeled off from the surface of bales, resulting in poor bale formability. In addition, a viscosity in vulcanization is so largely increased that processability in the vulcanization tends to be largely deteriorated. Therefore, in a polymer having a low branch number, even when a large number of functional groups are introduced into the polymer for purposes of improving affinity and/or reactivity with silica to be blended as a filler, the silica cannot be sufficiently dispersed in the polymer during the kneading process. As a result, polymers having a low branch number lead to limited flexibility in designing molecular weight due to restrictions on processability.

(Modifying Group)

The modified conjugated diene-based polymer of the present embodiment preferably has a modifying group.

The term "modifying group" means a functional group having affinity or binding reactivity with a filler, and examples include a nitrogen atom-containing functional group.

Since the modified conjugated diene-based polymer of the present embodiment has such a modifying group, the interaction with a filler is further improved, and hence, when a modified conjugated diene-based polymer composition containing the modified conjugated diene-based polymer and the filler is obtained, fracture strength of the composition is further improved. From a similar viewpoint, the modified conjugated diene-based polymer of the present embodiment preferably has a modifying group having a nitrogen atom, and more preferably has a modifying group having a nitrogen

atom and a silicon atom. **It** is not necessary for one modifying group or coupling modifier to contain both a nitrogen atom and a silicon atom, and a combination of modifying groups or coupling modifiers having modifying groups containing only one of the two may be set up so that the polymer contains both nitrogen and silicon.

(Modification Ratio)

Herein, the term "modification ratio" refers to a content, expressed in % by mass, of a modified conjugated diene-based polymer component having a specific functional group having affinity or binding reactivity with a filler to the total amount of a mixture of conjugated diene-based polymers when the mixture of a modified conjugated diene-based polymer and a non-modified conjugated diene-based polymer is obtained by using a nitrogen-containing lithium compound as an initiator described later and modifying the conjugated diene-based polymer with a coupling modifier. Accordingly, when the specific functional group contains a nitrogen atom, the term indicates a mass ratio of a modified conjugated diene-based polymer containing a nitrogen atom to the total amount of the mixture of the conjugated diene-based polymers.

Herein, the term "conjugated diene-based polymer" encompasses a non-modified conjugated diene-based polymer and a modified conjugated diene-based polymer except where specifically noted, or except where they are definitely distinguished as in a case where they are together described like "a conjugated diene-based polymer or a modified conjugated diene-based polymer".

When they are together described like "a conjugated diene-based polymer or a modified conjugated diene-based polymer", the term "conjugated diene-based polymer" means a non-modified conjugated diene-based polymer.

For example, in a conjugated diene-based polymer containing a modified conjugated diene-based polymer modified by reacting a terminal end with a nitrogen atom-containing modifier, a mass ratio of a modified conjugated diene-based polymer having a nitrogen atom-containing functional group derived from the nitrogen atom-containing modifier to the total amount of conjugated diene-based polymers corresponds to a modification ratio.

The modified conjugated diene-based polymer of the present embodiment preferably has a nitrogen atom at least at its end, and is more preferably modified with a functional group containing a nitrogen atom and a silicon atom, in addition to the nitrogen atom at the end. Such a modified conjugated diene-based polymer is further excellent in processability in obtaining a rubber composition with a filler and the like compounded, and also tends to be further excellent in abrasion resistance, fracture strength, and a low hysteresis loss property obtained in a vulcanizate formed from the rubber composition. It is noted that, as described above, it is not necessary for one modifying group or coupling modifier to contain both a nitrogen atom and a silicon atom, and a combination of modifying groups or coupling modifiers containing only one of the two may be set up so that the modified conjugated diene-based polymer to be finally obtained contains both nitrogen and silicon.

From the viewpoint of improving a low hysteresis loss property in the vulcanizate, the modification ratio of the modified conjugated diene-based polymer of the present embodiment is preferably 85% by mass or more, more preferably 88% by mass or more, further preferably 89% by mass or more, still further preferably 90% by mass or more, and even more preferably 91% by mass or more with respect to the total amount of the modified conjugated diene-based polymer. The upper limit of the modification ratio is not especially limited, and it may be 100% by mass, 98% by mass or less, 96% by mass or less, or 95% by mass or less. In comparison among modified conjugated diene-based polymers having the same glass transition point, one having a higher modification ratio tends to be better in a low hysteresis loss property.

In the modified conjugated diene-based polymer of the present embodiment, the modification ratio can be measured by chromatography capable of separating a functional group-containing modified component and a non-modified component. As a method using the chromatography, a method in which a column for gel permeation chromatography using, as a filler, a polar material adsorbing a specific functional group, such as silica, is used for performing quantitative determination using an internal standard of a non-adsorbed component for comparison (column adsorption GPC method) can be employed.

More specifically, the modification ratio is obtained by measuring an amount of adsorption onto a silica-based column based on a difference between a chromatogram measured on a sample solution containing a sample and low molecular weight internal standard polystyrene using a polystyrene-based gel column and a chromatogram measured on the sample solution using the silica-based column. Specifically, the modification ratio can be measured by a method described in the examples below.

In the modified conjugated diene-based polymer of the present embodiment, the modification ratio can be controlled within the numerical range described above by adjusting the amount of a coupling modifier to be added, and a method for reacting the modified conjugated diene compound and the modifier.

For example, two or more of the following methods may be combined: a method in which polymerization is performed by using, as a polymerization initiator, an organic lithium compound having at least one nitrogen atom in a molecule as described later, a method in which a monomer having at least one nitrogen atom in a molecule is copolymerized, and a method in which a modifier having a structural formula described later is used.

(Structure of Modified Conjugated Diene-based Polymer)

It is preferable that the modified conjugated diene-based polymer of the present embodiment has a nitrogen atom at least at one end and has at least one branched chain with a star structure, in which the branched chain with a star structure has a portion derived from a vinyl-based monomer containing an alkoxysilyl group or a halosilyl group described later, and in which the portion derived from a vinyl-based monomer containing an alkoxysilyl group or a halosilyl group has a further main chain branch structure and has a coupling structure centered on a nitrogen-containing alkoxysilane substituent.

Herein, the phrase "the modified conjugated diene-based polymer chain is bonded to the modifier" indicates the state of a compound formed by the polymer chain bonded to a so-called coupling agent (modifier) during the polymer production process. Therefore, the structure of the "modifier" (also referred to as "modifier residue") in the polymer is different from the initial structure of the modifier, since the leaving group is eliminated from the modifier before reaction and the polymer chain is bonded. That is, the modifier (residue) contained in the modified conjugated diene-based polymer is a constituent unit of the modified conjugated diene-based polymer that is bonded to the modified conjugated diene-based polymer chain, and for example, it is a structural unit derived from a modifier produced by reacting a conjugated diene-based polymer with a modifier described later.

A modified conjugated diene-based polymer containing a nitrogen atom and a silicon atom in the modifier tends to have, compared to one containing only one of them, stronger interaction with a filler, such as silica, added when forming a composition.

<Star Branch Structural Body Having Main Chain Branch Structure in Nitrogen-containing Conjugated Diene-based Polymer Chain>

It is preferable that the modified conjugated diene-based polymer chain has a nitrogen atom at least at one end and has at least one branched chain with a star structure, in which the branched chain with a star structure has a portion derived from a vinyl-based monomer containing an alkoxysilyl group or a halosilyl group, and in which the portion derived from a vinyl-based monomer containing an alkoxysilyl group or a halosilyl group has a further main chain branch structure and has a coupling structure centered on a nitrogen-containing alkoxysilane substituent.

The structural unit derived from the modified conjugated diene-based polymer of the present embodiment is a constituent unit of the modified conjugated diene-based polymer, which may have, for example, a portion derived from a vinyl-based monomer containing an alkoxysilyl group or a halosilyl group with respect to a modified conjugated diene-based polymer chain having a nitrogen atom introduced at one end, derived from an organic lithium compound having at least one nitrogen atom in a molecule described later, the portion derived from a vinyl-based monomer containing an alkoxysilyl group or a halosilyl group having a further main chain branch structure, and may be obtained by reacting the modified conjugated diene-based polymer with a modifier.

Preferably, in the modified conjugated diene-based polymer of the present embodiment, it is preferable that the modified conjugated diene-based polymer chain having a nitrogen atom at its end has a portion derived from a vinyl-based monomer containing an alkoxysilyl group or a halosilyl group, a further main chain branch structure is formed in the portion derived from a vinyl-based monomer containing an alkoxysilyl group or a halosilyl group, and a star branch structure bonded to one modifier is further present, and it is more preferable that the number of alkoxysilane residues of the modifier should be larger than the number of conjugated diene-based polymer chains bonded to the modifier.

By having the above structure, there is a tendency that processability is excellent when formed into a vulcanizate and fuel efficiency is significantly improved.

<Nitrogen-containing Conjugated Diene-based Polymer Chain>

It is preferable that the conjugated diene-based polymer chain has a nitrogen atom in at least one conjugated diene-based polymer chain.

For example, it is a conjugated diene-based polymer chain having a functional group containing a nitrogen atom at any position, and the position of such a functional group may be at an end or in the middle of the main chain. The conjugated diene-based polymer chain having a nitrogen atom can be obtained by, for example, a method in which polymerization is performed by using, as a polymerization initiator, an organic lithium compound having at least one nitrogen atom in a molecule described later, or a method in which a monomer having at least one nitrogen atom in a molecule is copolymerized.

The modified conjugated diene-based polymer of the present embodiment or a conjugated diene-based polymer described later may be one in which all or part of the double bonds have been converted into a saturated hydrocarbon by further hydrogenation in an inert solvent. In such a case, heat resistance and weather resistance are improved, deterioration of the product during high-temperature processing can be prevented, and the dynamic performance as

a rubber tends to be improved. As a result, it exhibits further excellent performance in various applications such as automotive use. More specifically, the hydrogenation ratio of unsaturated double bonds derived from the conjugated diene compound can be arbitrarily selected depending on the purpose and is not particularly limited. When used as a vulcanizate, it is preferable that the double bonds in the conjugated diene portions remain partially. From such a viewpoint, the hydrogenation ratio of the conjugated diene portions in the conjugated diene-based polymer is preferably 3.0% or more and 70% or less, more preferably 5.0% or more and 65% or less, and further preferably 10% or more and 60% or less. In particular, selective hydrogenation of vinyl groups tends to improve heat resistance and dynamic performance. The hydrogenation ratio can be determined by a nuclear magnetic resonance (NMR) apparatus.

<Main Chain Branch Structure Part and Branching Agent>

A vinyl-based monomer containing an alkoxysilyl group or a halosilyl group used in constructing the "main chain branch structure part" as used herein is referred to as "branching agent".

As the branching agent, it is preferable to use a vinyl-based monomer containing an alkoxysilyl group or a halosilyl group represented by the following formula (1) or (2). That is, the "main chain branch structure part" is preferably constituted by an atomic group derived from a vinyl-based monomer containing an alkoxysilyl group or a halosilyl group represented by the following formula (1) or (2).

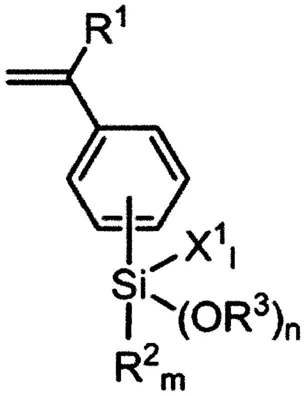

(1)

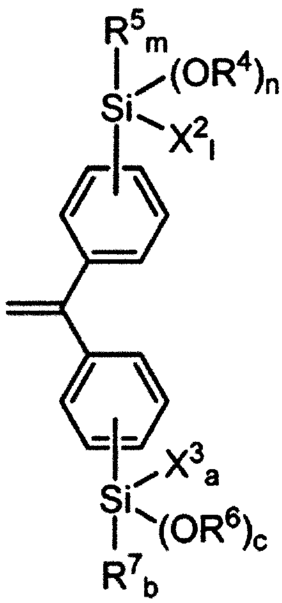

(2)

In the formula (1), $R^1$ represents a hydrogen atom, or an alkyl group having 1 to 20 carbon atoms or an aryl group having 6 to 20 carbon atoms, and may have a branch structure in a part thereof.

$R^2$ to $R^3$ each independently represent an alkyl group having 1 to 20 carbon atoms or an aryl group having 6 to 20 carbon atoms, and may have a branch structure in a part thereof. $R^1$ to $R^3$, if present in a plural number, are respectively independent.

$X^1$ represents an independent halogen atom.

m represents an integer of 0 to 2, n represents an integer of 0 to 3, and l represents an integer of 0 to 3. (m + n + l) represents 3.

In the formula (2), $R^4$ to $R^7$ each independently represent an alkyl group having 1 to 20 carbon atoms or an aryl group having 6 to 20 carbon atoms, and may have a branch structure in a part thereof.

$R^4$ to $R^7$, if present in a plural number, are respectively independent.

$X^2$ to $X^3$ represent independent halogen atoms.

m represents an integer of 0 to 2, n represents an integer of 0 to 3, and l represents an integer of 0 to 3.

(m + n + l) represents 3.

a represents an integer of 0 to 3, b represents an integer of 0 to 2, and c represents an integer of 0 to 3. (a + b + c) represents an integer of 3.

The conjugated diene-based polymer of the present embodiment preferably has a monomer unit based on a compound represented by the formula (1) wherein $R^1$ is a hydrogen atom and m = 0 in the formula (1).

This improves the overall number of branches in the conjugated diene copolymer, and provides the effect of improving abrasion resistance and processability.

Alternatively, the conjugated diene-based polymer of the present embodiment is preferably a modified conjugated diene-based polymer having a monomer unit based on a compound represented by the formula (2) wherein m = 0 and b = 0 in the formula (2).

This provides the effect of improving abrasion resistance and processability.

Alternatively, the conjugated diene-based polymer of the present embodiment preferably has a monomer unit based on a compound represented by the formula (1) wherein $R^1$ is a hydrogen atom, m = 0, and l = 0 in the formula (1).

This improves the overall branch number in the conjugated diene copolymer, and provides the effect of improving abrasion resistance and processability.

Alternatively, the conjugated diene-based polymer of the present embodiment is preferably a conjugated diene-based polymer having a monomer unit based on a compound represented by the formula (2) wherein m = 0, l = 0, a = 0, and b = 0 in the formula (2).

This provides the effect of improving abrasion resistance and processability.

Alternatively, the conjugated diene-based polymer of the present embodiment is further preferably a conjugated diene-based polymer having a monomer unit based on a compound represented by the formula (1) wherein R' is a hydrogen atom, l = 0, and n = 3 in the formula (1).

This improves the modification ratio and the branch number, and provides the effect of improving fuel efficiency, abrasion resistance, and processability.

As for the modified conjugated diene-based polymer of the present embodiment, it is preferable that, in the coupling structure centered on a nitrogen-containing alkoxysilane substituent, a nitrogen-containing alkoxysilane modifier residue has at least four silicon atoms and alkoxy groups and/or hydroxy groups, and a modified conjugated diene-based polymer chain having a main chain branch structure is bonded to the silicon atoms, and in the modifier residue described later, the number of the alkoxy groups and/or the hydroxy groups is larger than the number of the silicon atoms on average.

<Modifier Residue Having Silicon Atoms>

It is preferable that the modified conjugated diene-based polymer of the present embodiment has silicon atoms in the modifier residue.

For example, due to the presence of silicon atoms in a modifier described later, it is a modified conjugated diene-based polymer having a structural unit derived from the modifier.

It is also preferable that the modified conjugated diene-based polymer of the present embodiment has silicon atoms at any position.

The silicon atoms are preferably bonded, as functional groups containing silicon atoms, at an end of the conjugated diene-based polymer chain or in the middle of the main chain, or contained in the modifier residue. It is more preferable that at least one silicon atom contained in the modified conjugated diene-based polymer constitutes an alkoxysilyl group having 1 to 20 carbon atoms or a silanol group. As a result, the interaction with a filler added when forming a vulcanizate, such as silica, tends to become stronger. From the viewpoint that hydrogen halide may be generated by reaction with air, it is also preferable that the modified conjugated diene-based polymer does not contain a halogen.

It is preferable that at least one end of each of the 8 or more conjugated diene-based polymer chains is bonded to a silicon atom contained in the modifier residue. This tends to make the effects of the present embodiment more pronounced. In this case, the ends of multiple conjugated diene-based polymer chains may be bonded to one silicon atom. Furthermore, an end of a conjugated diene-based polymer chain and an alkoxy group having 1 to 20 carbon atoms or hydroxy group may be bonded to one silicon atom, and as a result, that silicon atom may constitute an alkoxysilyl group having 1 to 20 carbon atoms or a silanol group. From the viewpoint that hydrogen halide may be generated by reaction with

air or moisture, it is preferable that the modifier residue does not contain a halogen.

Also, the one central branch point herein refers to a set (atomic group) having an atom derived from the coupling modifier or a nitrogen atom-containing substituent derived from the modifier, and does not mean a single atom. For example, a set having an alkoxysilyl group spaced apart from an amino group by 1 to 5 carbon atoms, preferably 2 to 3 carbon atoms, is a typical central branch point.

<Modified Conjugated Diene-based Polymer Having Star Polymer Structure Part>

The modified conjugated diene-based polymer having a star polymer structure part is a conjugated diene-based polymer having a star polymer structure having 3 or more branches, constructed by constructing a branch structural site derived from the main chain branch structure part, and then continuing the polymerization to increase the molecular weight, followed by modification with a trifunctional or higher coupling modifier. Such a modified conjugated diene-based polymer has a portion derived from the vinyl-based monomer containing an alkoxysilyl group or a halosilyl group in a branched chain of at least one star structure.

With respect to a method for obtaining a conjugated diene-based polymer having a further main chain branch structure in the portion derived from the vinyl-based monomer containing an alkoxysilyl group or a halosilyl group, the "star polymer structure" can be formed by adjusting the number of functional groups of the modifier and the amount of the modifier to be added, and the "main chain branch structure" can be controlled by adjusting the number of functional groups of the branching agent, the amount of the branching agent to be added, and the timing of adding the branching agent.

The modified conjugated diene-based polymer of the present embodiment preferably contains a structure having a nitrogen atom-containing group represented by any of the following general formulas (5-1) to (5-4), (7-1) to (7-2), (8), and (9-1) to (9-2) in its star branch structure part.

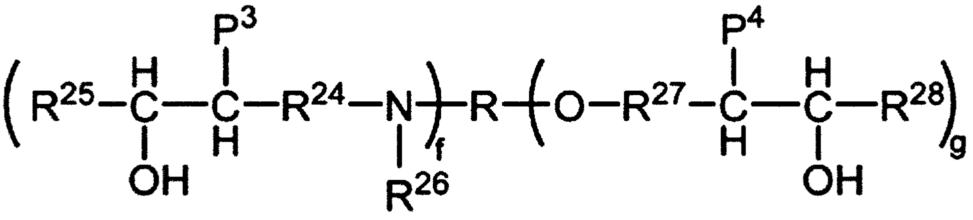

(5-1)

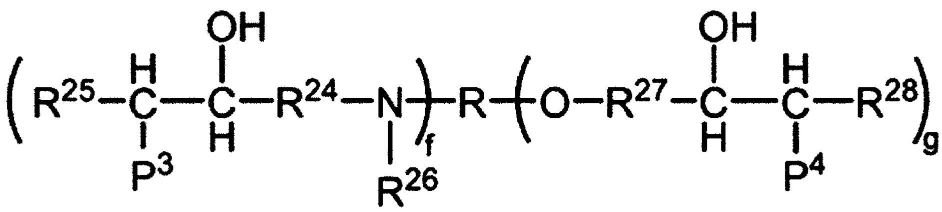

(5-2)

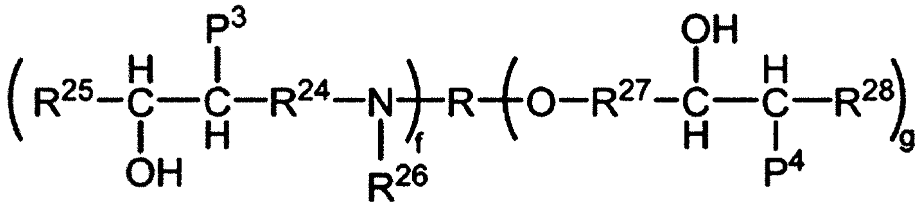

(5-3)

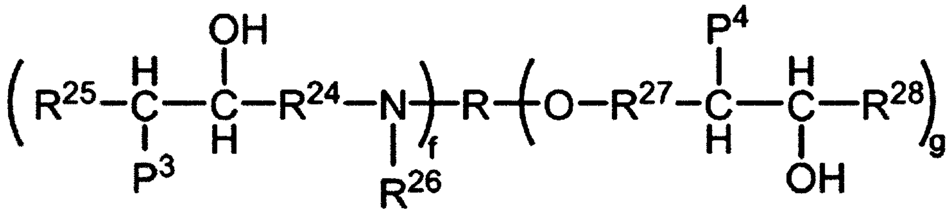

(5-4)

In the formulas (5-1) to (5-4), R represents a bivalent or higher hydrocarbon group, or a bivalent or higher organic group having at least one polar group selected from a polar group having oxygen such as ether, epoxy or ketone, a polar

group having sulfur such as thioether or thioketone, and a polar group having nitrogen such as a tertiary amino group or an imino group.

The bivalent or higher hydrocarbon group may be a saturated or unsaturated linear, branched or cyclic hydrocarbon group, and encompasses an alkylene group, an alkenylene group, a phenylene group and the like. The bivalent or higher hydrocarbon group is preferably a hydrocarbon group having 1 to 20 carbon atoms. Examples include methylene, ethylene, butylene, cyclohexylene, 1,3-bis(methylene)-cyclohexane, 1,3-bis(ethylene)-cyclohexane, o-, m- and p-phenylene, m- and p-xylene, and bis(phenylene)-methane.

In the formulas (5-1) to (5-4), $R^{24}$ and $R^{27}$ are hydrocarbon groups having 1 to 10 carbon atoms, and $R^{24}$ and $R^{27}$ may be the same as or different from each other.

In the formulas (5-1) to (5-4), $R^{25}$ and $R^{28}$ are hydrogen or hydrocarbon groups having 1 to 10 carbon atoms, and $R^{25}$ and $R^{28}$ may be the same as or different from each other.

In (5-1) to (5-4), $P^3$ and $P^4$ are polymer chains, and are fork-like parts [A] having a main chain branch structure part, or linear polymer chains not having a branch structure.

In the formulas (5-1) to (5-4), $R^{26}$ is a hydrocarbon group having 1 to 10 carbon atoms, or a structure of the following formulas (6-1) to (6-3).

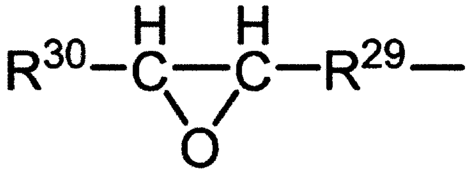

(6 − 1)

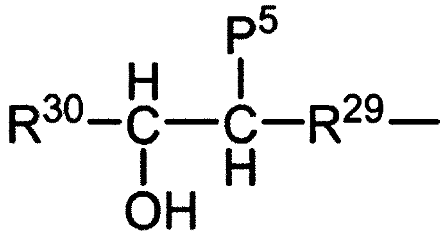

(6 − 2)

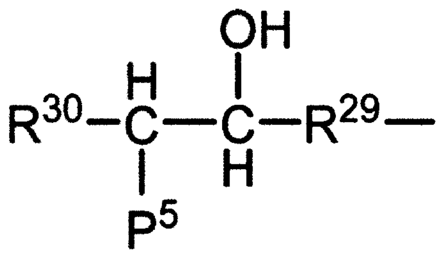

(6 − 3)

$R^{24}$, $R^{25}$ and $R^{26}$ may be a cyclic structure mutually bonded.

When $R^{26}$ is a hydrocarbon group, it may be a cyclic structure mutually bonded to R. In the case of the cyclic structure described above, N and R bonded to $R^{26}$ may be in the form of being directly bonded to each other.

In the formulas (5-1) to (5-4), f is an integer of 1 or more, and g is an integer of 0 or 1 or more.

In the formulas (6-1) to (6-3), $R^{29}$ and $R^{30}$ are defined the same respectively as $R^{24}$ and $R^{25}$ in the formulas (5-1) to (5-4), and in the formulas (6-1) to (6-3), $P^5$ is defined the same as $P^3$ and $P^4$ in the formulas (5-1) to (5-4).

$R^{29}$ and $R^{30}$ may be the same as or different from each other.

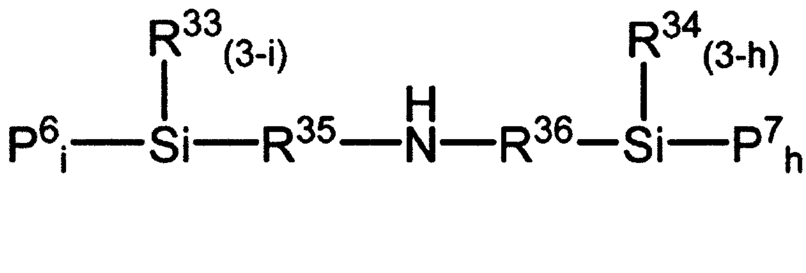

(7 − 1)

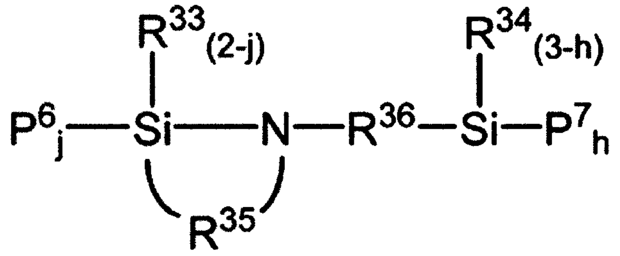

(7-2)

In the formulas (7-1) to (7-2), $P^6$ and $P^7$ are polymer chains, and are fork-like parts [A] having a main chain branch structure part, or linear polymer chains not having a branch structure.

When $P^6$ and $P^7$ are each bonded in a plural number (when h or i or j is an integer of 2 or more), they may be the same as or different from each other in each of $P^6$ and $P^7$.

$R^{33}$ and $R^{34}$ each independently represent an alkyl group or hydrocarbyl group having 1 to 20 carbon atoms, or an aryl group having 6 to 20 carbon atoms, $R^{35}$ represents an alkylene group having 1 to 10 carbon atoms, and $R^{36}$ represents an alkylene group having 1 to 20 carbon atoms.

h represents an integer of 1 to 3, i represents an integer of 1 to 3, j represents an integer of 1 or 2, and (h + i) and (h + j) represent integers of 3 or more.

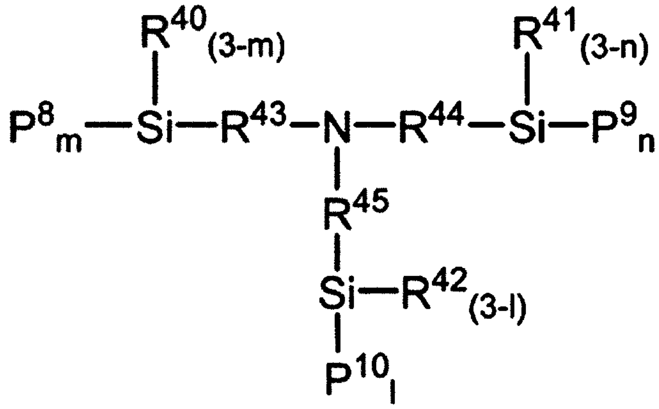

(8)

In the formula (8), $P^8$, $P^9$ and $P^{10}$ are polymer chains, and are fork-like parts [A] having a main chain branch structure, or linear polymer chains not having a branch structure.

When $P^8$, $P^9$ and $P^{10}$ are each bonded in a plural number (when m or n or l is an integer of 2 or more), they may be the same as or different from each other in each of $P^8$, $P^9$ and $P^{10}$.

$R^{40}$ to $R^{42}$ each independently represent an alkyl group or hydrocarbyl group having 1 to 20 carbon atoms, or an aryl group having 6 to 20 carbon atoms, and $R^{43}$ to $R^{45}$ each independently represent an alkylene group having 1 to 20 carbon atoms.

m, n and l each independently represent an integer of 1 to 3, and (m + n + l) represents an integer of 3 or more.

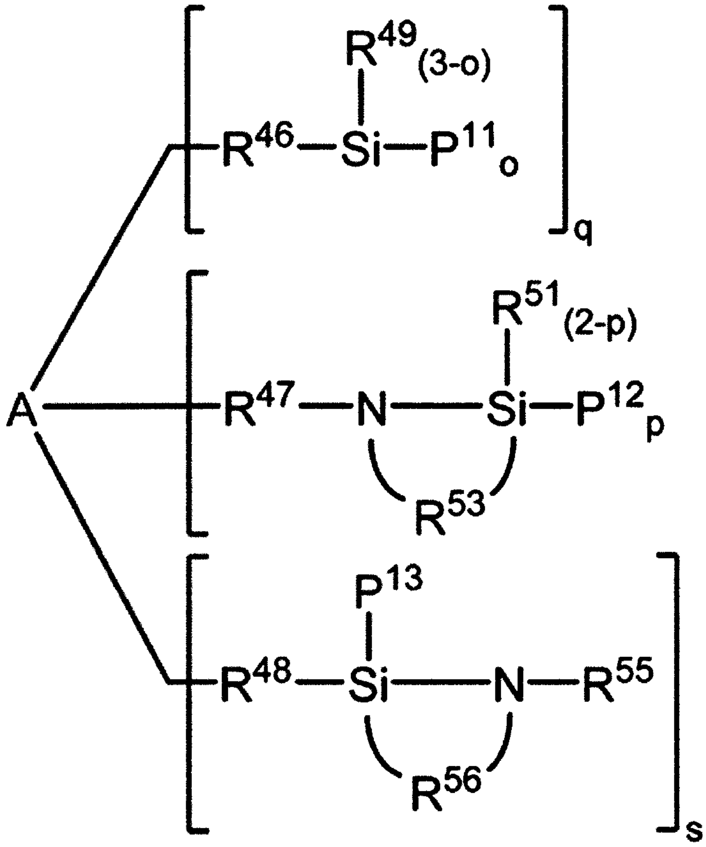

(9 − 1)

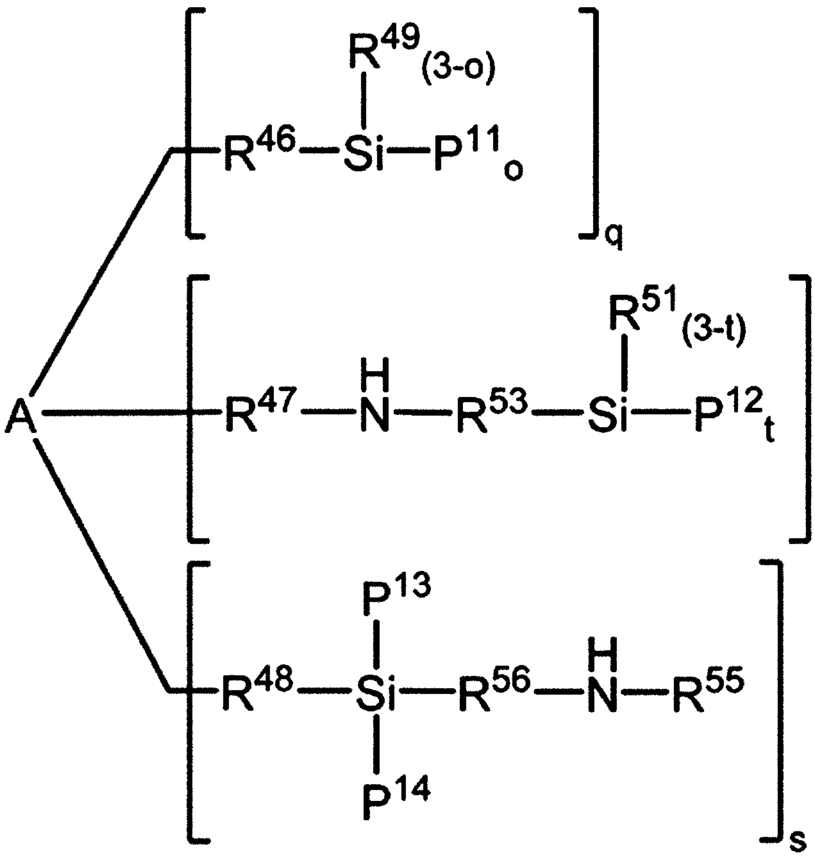

(9 − 2)

In the formulas (9-1) to (9-2), $P^{11}$ to $P^{14}$ are polymer chains, and are fork-like parts [A] having a main chain branch

structure part, or linear polymer chains not having a branch structure. When $P^{11}$ and $P^{12}$ are each bonded in a plural number (when o or p is an integer of 2 or more), they may be the same as or different from each other in each of $P^{11}$ and $P^{12}$.

$R^{46}$ to $R^{48}$ each independently represent a single bond or an alkylene group having 1 to 20 carbon atoms, $R^{49}$ and $R^{51}$ each independently represent an alkyl group or hydrocarbyl group having 1 to 20 carbon atoms, $R^{53}$ and $R^{56}$ each independently represent an alkylene group having 1 to 20 carbon atoms, and $R^{55}$ represents an alkyl group or trialkylsilyl group having 1 to 20 carbon atoms that contains S, O, or N and is optionally substituted with an organic group having no active hydrogen, in which an unsaturated bond may be present, and they may be the same as or different from each other.

o represents an integer of 1 to 3, p represents 1 or 2, and t represents an integer of 1 to 3.

Each of $R^{46}$ to $R^{56}$, o, p and t if present in a plural number, is respectively independent, and they may be the same as or different from each other.

q represents an integer of 0 to 6, r represents an integer of 0 to 6, s represents an integer of 0 to 6, and (q + r + s) is an integer of 4 to 10.

A represents a hydrocarbon group having 1 to 20 carbon atoms, or an organic group having at least one atom selected from the group consisting of an oxygen atom, a nitrogen atom, a silicon atom, a sulfur atom, and a phosphorus atom and having no active hydrogen.

In the formulas (9-1) to (9-2), A is preferably represented by any one of the following general formulas (I) to (IV).

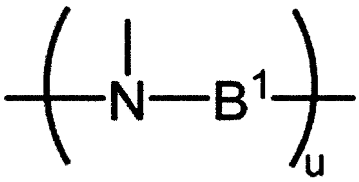

(I)

In the formula (I), $B^1$ represents a single bond or a hydrocarbon group having 1 to 20 carbon atoms, and u represents an integer of 1 to 10. $B^1$, if present in a plural number, is respectively independent.

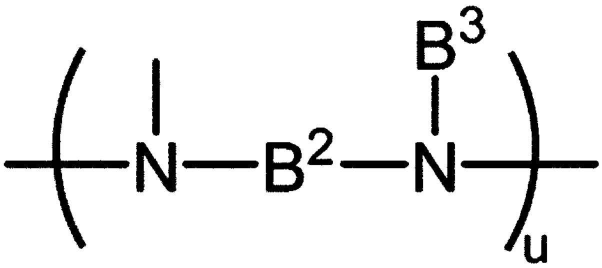

(II)

In the formula (II), $B^2$ represents a single bond or a hydrocarbon group having 1 to 20 carbon atoms, $B^3$ represents an alkyl group having 1 to 20 carbon atoms, and u represents an integer of 1 to 10. Each of $B^2$ and $B^3$, if present in a plural number, is respectively independent.

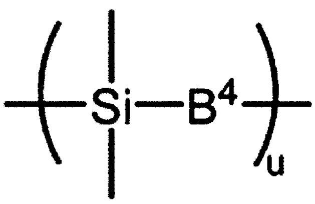

(III)

In the formula (III), $B^4$ represents a single bond or a hydrocarbon group having 1 to 20 carbon atoms, and u represents an integer of 1 to 10. $B^4$, if present in a plural number, is respectively independent.

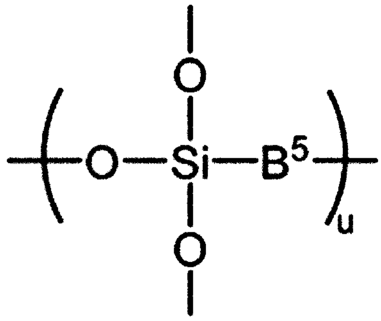

(IV)

In the formula (IV), $B^5$ represents a single bond or a hydrocarbon group having 1 to 20 carbon atoms, and u represents an integer of 1 to 10. $B^5$, if present in a plural number, is respectively independent.

[Formed Body]

A formed body of the present embodiment is a formed body containing the conjugated diene-based polymer of the present embodiment described above. From the viewpoint of handleability, it is preferably a sheet-like or block-like formed body.

The size and thickness of the sheet-like or block-like formed body is not especially limited, and examples include a sheet-like formed body with a thickness of about 1 cm, and a rectangular or cubic block-like formed body of 1,000 $cm^3$.

The formed body of the present embodiment is more preferably a block-like formed body, and it is preferable that the shape of the block is generally rectangular, and it is more preferably a block-like (bale) formed body of 1,000 $cm^3$ or more. In addition, it is further preferably a rectangular bale of 17.5 kg to 35 kg.

The forming method is preferably a method in which crumbs with a specific surface area of 0.7 $m^2/g$ to 3.2 $m^2/g$ are fabricated and the crumbs are compression-formed. From the viewpoint of formability, it is preferable to further perform a step of sieving the crumbs prior to forming.

Since the crumbs adhere to each other when compression-forming the crumbs, the specific surface area of the formed body is smaller compared to the specific surface area of the crumbs. The adherence of the crumbs at the time of compression forming can be adjusted by the molecular weight, composition and structure of the conjugated diene-based polymer, the composition of the softener component, the temperature and pressure at the time of compression. For example, in the case where the adherence of the crumbs is to be increased and the specific surface area of the bale is to be lowered, it is preferable to apply conditions that lower the molecular weight of the conjugated diene-based polymer, increase the amount of the softener component, and increase the temperature and pressure at the time of compression.

The specific surface area of the formed body of the present embodiment is preferably 0.005 to 0.05 $m^2/g$, and more preferably 0.01 to 0.04 $m^2/g$ from the viewpoint of a film packaging property. When the specific surface area of the formed body is 0.005 $m^2/g$ or more, bale expansion is suppressed, and when the specific surface area of the formed body is 0.05 $m^2/g$ or less, peeling off of the crumbs from the formed body is reduced, which is preferable.

The specific surface area of the formed body can be determined by the BET method.

Normally, the specific surface area of formed bodies with a large size may vary depending on the location, and therefore, it is preferable to collect from near the center portion of the formed body.

The crumbs are preferably sieved by particle size before forming, and then mixed in appropriate quantity ratios.

When the specific surface area of a formed body formed using crumbs after desolvation as they are exceeds the upper limit of the above-described range, it is preferable to increase the composition of crumbs with larger particle sizes and decrease the composition of crumbs with smaller particle sizes among the sieved crumbs, and when the specific surface area is below the lower limit, it is preferable to decrease the composition of crumbs with larger particle sizes and increase the composition of crumbs with smaller particle sizes.

The forming compression pressure for the formed body is preferably 3 MPa to 30 MPa, and more preferably 10 MPa to 20 MPa. When the compression pressure at the time of forming is 30 MPa or less, the apparatus can be designed compactly, resulting in good installation efficiency. When the compression pressure at the time of forming is 3 MPa or more, the formability is good. Good formability tends to result in a smooth surface of the formed body, no peeling off of the polymer after the forming step, and suppressed expansion after forming.

The temperature of the conjugated diene-based polymer or the rubber composition containing the conjugated diene-based polymer at the time of forming is preferably 30 to 120°C, and more preferably 50 to 100°C from the viewpoints of reducing residual solvent and suppressing thermal degradation.

A temperature of 30°C or more at the time of forming provides good formability, whereas a temperature of 120°C or less suppresses gel formation due to thermal degradation of the rubber composition, which is preferable.

As the temperature and pressure at the time of forming are higher, the specific surface area of the bale becomes smaller.

The pressure holding time at the time of forming is preferably 3 to 30 seconds, and more preferably 5 to 20 seconds. A pressure holding time at the time of compression of 30 seconds or less provides good production efficiency, whereas a pressure holding time of 5 seconds or more provides good formability.

In order to avoid adhesion among the formed bodies, it is preferable to package the formed body with a resin film (packaging sheet).

The type of a film resin that can be used is, for example, polyethylene, ethylene copolymer resin, polystyrene, high-impact polystyrene, or PET (polyethylene terephthalate).

From the viewpoints of handleability at the time of transportation of the formed body and the prevention of dew condensation from occurring in the gap between the packaging sheet and the bale, good adherence of the packaging sheet is preferable.

The formed body of the present embodiment is used in applications where it is accommodated in containers for transportation, for example. An expansion rate of the formed body after one day has passed after the forming of less than 5% indicates good storability in containers, which is preferable.

[Method for Producing Modified Conjugated Diene-based Polymer]

A method for producing a modified conjugated diene-based polymer of the present embodiment will be described in detail below.

Although the conjugated diene-based polymer described above can be definitely and easily obtained by using the method for producing a modified conjugated diene-based polymer of the present embodiment, the modified conjugated diene-based polymer of the present embodiment is not limited to those produced by the following production method.

The method for producing the modified conjugated diene-based polymer of the present embodiment is a method for producing the modified conjugated diene-based polymer of the present embodiment, the method including:

a step of polymerizing at least a conjugated diene compound in the presence of an organic lithium compound having at least one nitrogen atom in a molecule; and

a branching step of obtaining a branched modified conjugated diene-based polymer having a main chain branch structure, using a branching agent (hereinafter sometimes collectively referred to as polymerizing branching step),

wherein, in a step of coupling the branched modified conjugated diene-based polymer using a coupling agent and/or a step of modifying the branched modified conjugated diene-based polymer with a modifier having a nitrogen-containing group, the coupling agent and/or the modifier is added in excess.

The step of coupling using a coupling agent and/or the step of modifying with a modifier having a nitrogen-containing group may be a step of adding a coupling modifier.

In the method for producing the conjugated diene-based polymer of the present embodiment, it is preferable to add in excess a modifier having a coupling number of 4 or more as the coupling modifier.

The polymerization reaction of a conjugated diene compound and an aromatic vinyl compound is performed preferably through a growth reaction by a living anionic polymerization reaction, and thus, a conjugated diene-based polymer having an active end can be obtained. As a result, when a branching agent is added, the conjugated diene-based polymer and the branching agent efficiently react with each other. Besides, also when the production method of the present embodiment includes a coupling step described below, there is a tendency that a reaction with high efficiency can be performed.

Examples of a polymerization reaction mode include, but are not limited to, batch and continuous polymerization reaction modes.

In the continuous mode, one reactor or two or more connected reactors can be used. As a reactor for the continuous mode, for example, a tank or tubular reactor equipped with a stirrer is used. In the continuous mode, a monomer, an inert solvent described below, and a polymerization initiator described below are continuously fed to the reactor, a polymer solution containing a polymer is obtained in the reactor, and the polymer solution is continuously discharged.

As a reactor for the batch mode, for example, a tank reactor equipped with a stirrer is used. Preferably, in the batch mode, a monomer, an inert solvent described below, and a polymerization initiator described below are fed, the monomer is continuously or intermittently additionally fed if necessary, during the polymerization, a polymer solution containing a polymer is obtained in the reactor, and the polymer solution is discharged after completing the polymerization.

In the production method of the present embodiment, from the viewpoint that a conjugated diene-based polymer having an active end can be obtained at a high ratio, the polymerization reaction is caused to proceed preferably by the continuous polymerization reaction mode in which a polymer is continuously discharged to be supplied to a next reaction in a short period of time.

(Polymerizing Branching Step)

The polymerizing branching step in the method for producing the conjugated diene-based polymer of the present embodiment is a step of obtaining a conjugated diene-based polymer having a branch structure by adding a branching agent while polymerizing at least a conjugated diene compound and, if necessary, a vinyl aromatic compound, using, as a polymerization initiator, an organic lithium compound having at least one nitrogen atom in a molecule described later. Accordingly, in the polymerizing branching step, a polymerization reaction of at least a conjugated diene compound and an aromatic vinyl compound is a principal reaction before adding a branching agent, and after adding the branching agent, a branching reaction starts.

As monomers, that is, a conjugated diene compound and a vinyl aromatic compound, used in the polymerizing branching step, at least one of the above-described conjugated diene compounds and at least one of the above-described vinyl aromatic compounds may be used. From the viewpoint that a nitrogen atom can be introduced into a conjugated diene-based polymer, a derivative obtained by substitution so as to have at least one nitrogen atom in a molecule may be used as the conjugated diene compound or the vinyl aromatic compound.

<Polymerization Initiator>

In the polymerization step, a predetermined polymerization initiator is used.

Examples of the polymerization initiator include an organic lithium compound as described above, and preferably, an organic lithium compound having at least one nitrogen atom in a molecule is used.

Examples of the organic lithium compound include an organic monolithium compound, and another polymerization initiator may be used in combination.

The organic monolithium compound is not limited to the following, but examples thereof include a low molecular compound and an organic monolithium compound of a soluble oligomer. Furthermore, examples of the organic monolithium compound include, in terms of binding mode between an organic group and lithium therein, a compound having a carbon-lithium bond, a compound having a nitrogen-lithium bond, and a compound having a tin-lithium bond.

It is preferable that the amount of the organic monolithium compound to be used as a polymerization initiator is determined depending on the molecular weight of a conjugated diene-based polymer or a modified conjugated diene-based polymer to be obtained.

The amount of the monomer such as the conjugated diene compound to be used with respect to the amount of the polymerization initiator to be used relates to the degree of polymerization, that is, tends to relate to the number average molecular weight and/or the weight average molecular weight. Accordingly, in order to increase the molecular weight, adjustment in a direction to decrease the amount of the polymerization initiator may be performed, and in order to decrease the molecular weight, adjustment in a direction to increase the amount of the polymerization initiator may be performed.

From the viewpoint that the organic monolithium compound is used as one method for introducing a nitrogen atom into the conjugated diene-based polymer, it is preferably an alkyllithium compound having a substituted amino group or a substituted amino lithium compound. In this case, a conjugated diene-based polymer having a nitrogen atom derived from an amino group at a polymerization start end can be obtained. The substituted amino group refers to an amino group having a structure in which active hydrogen is absent or active hydrogen is protected.

The organic lithium compound having at least one nitrogen atom in a molecule as the polymerization initiator includes an organic lithium compound represented by any one of the following general formulas (1) to (5).

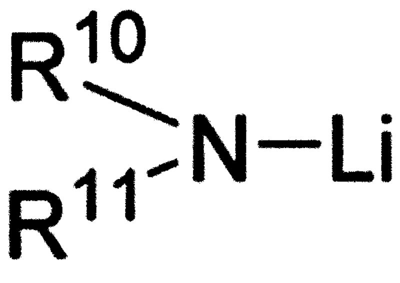

(1)

(In the formula (1), $R^{10}$ and $R^{11}$ each independently represent at least one selected from the group consisting of an alkyl group having 1 to 12 carbon atoms, a cycloalkyl group having 3 to 14 carbon atoms, an aralkyl group having 6 to 20 carbon atoms, and a protecting group; and $R^{10}$ and $R^{11}$ may form a cyclic structure together with the adjacent bonded

nitrogen atom, and in that case, $R^{10}$ and $R^{11}$ represent alkyl groups having 5 to 12 carbon atoms, which may have an unsaturated bond or a branch structure in a part thereof. The protecting group is an alkyl-substituted silyl group.)

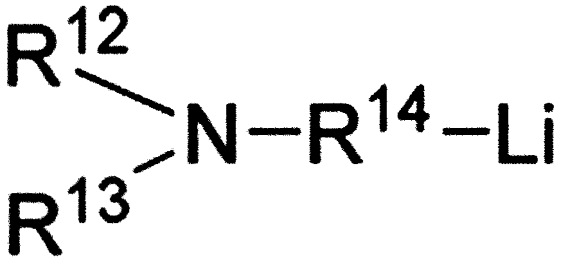

(2)

(In the formula (2), $R^{12}$ and $R^{13}$ each independently represent at least one selected from the group consisting of an alkyl group having 1 to 12 carbon atoms, a cycloalkyl group having 3 to 14 carbon atoms, an aralkyl group having 6 to 20 carbon atoms, and a protecting group; and $R^{12}$ and $R^{13}$ may form a cyclic structure together with the adjacent bonded nitrogen atom, and in that case, $R^{12}$ and $R^{13}$ represent alkyl groups having 5 to 12 carbon atoms, which may have an unsaturated bond or a branch structure in a part thereof. The protecting group is an alkyl-substituted silyl group. $R^{14}$ represents an alkylene group optionally having an aliphatic or aromatic substituent having 1 to 30 carbon atoms, or a polymer based on a conjugated diene having 1 to 20 carbon atoms.)

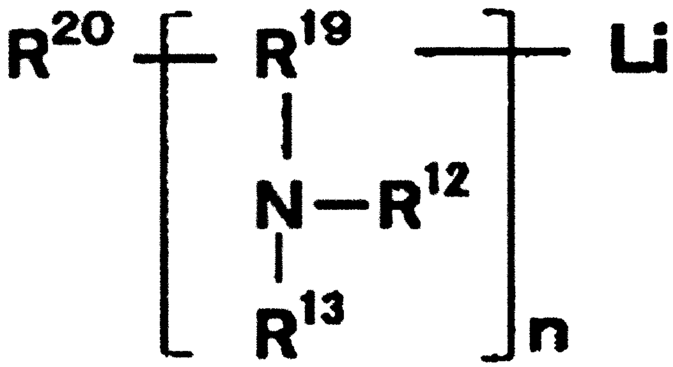

(3)

(In the formula (3), $R^{12}$ and $R^{13}$ each independently represent at least one selected from the group consisting of an alkyl group having 1 to 12 carbon atoms, a cycloalkyl group having 3 to 14 carbon atoms, an aralkyl group having 6 to 20 carbon atoms, and a protecting group; and $R^{12}$ and $R^{13}$ may form a cyclic structure together with the adjacent bonded nitrogen atom, and in that case, $R^{12}$ and $R^{13}$ represent alkyl groups having 5 to 12 carbon atoms, which may have an unsaturated bond or a branch structure in a part thereof. The protecting group is an alkyl-substituted silyl group. $R^{19}$ represents a hydrocarbon group optionally having an aliphatic or aromatic substituent having 1 to 30 carbon atoms. $R^{20}$ represents a hydrocarbon group optionally having a substituted amino group having 1 to 12 carbon atoms, and n represents an integer of 1 to 10.)

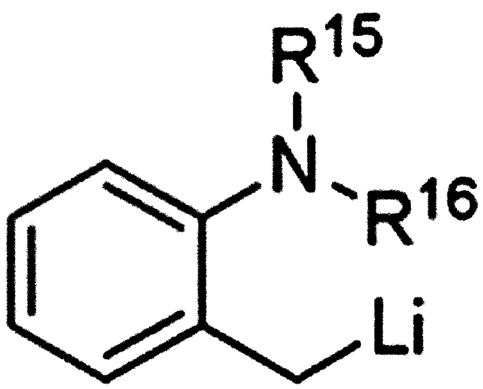

(4)

(In the formula (4), $R^{15}$ and $R^{16}$ each independently represent at least one selected from the group consisting of an alkyl group having 1 to 12 carbon atoms, a cycloalkyl group having 3 to 14 carbon atoms, an aryl group having 6 to 20 carbon atoms, and a protecting group; and $R^{15}$ and $R^{16}$ may form a cyclic structure together with the adjacent bonded nitrogen atom, and in that case, $R^{15}$ and $R^{16}$ represent alkyl groups having 5 to 12 carbon atoms, which may have a branch structure in a part thereof. The protecting group is an alkyl-substituted silyl group.)

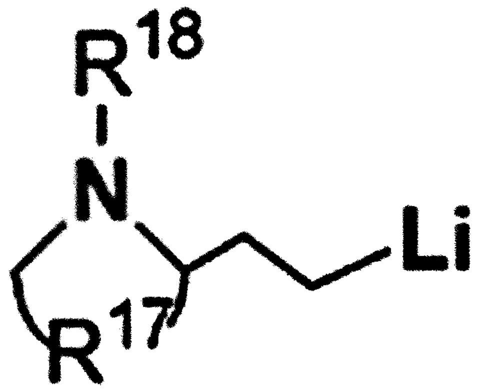

(5)

(In the formula (5), $R^{17}$ represents a hydrocarbon group having 2 to 10 carbon atoms, which may have an unsaturated bond or a branch structure in a part thereof. $R^{18}$ represents an alkyl group having 1 to 12 carbon atoms or a protecting group, which may have a branch structure in a part thereof. The protecting group is an alkyl-substituted silyl group.)

In the formula (1), examples of those represented by $R^{10}$ and $R^{11}$ include a methyl group, an ethyl group, a propyl group, a butyl group, an octyl group, a benzyl group, a cyclopropyl group, a cyclohexyl group, a 3-phenyl-1-propyl group, an isobutyl group, a decyl group, a heptyl group, and a phenyl group.

$R^{10}$ and $R^{11}$ are not limited to these, and may include analogs thereof as long as the above conditions are satisfied.

From the viewpoints of solubility in a solvent, reduction of hysteresis loss in a modified conjugated diene-based polymer composition described later, and control of a chain transfer reaction described later, a butyl group and a hexyl group are preferable, and a butyl group is more preferable.

Examples of the organic lithium compound having at least one nitrogen atom in a molecule represented by the formula (1) include, but are not limited to, ethylpropylaminolithium, ethylbutylaminolithium, ethylbenzylaminolithium, dibutylaminolithium, and dihexylaminolithium, among which dibutylaminolithium and dihexylaminolithium are preferable, and dibutylaminolithium is more preferable.

In the formula (1), when $R^{10}$ and $R^{11}$ form a cyclic structure together with the adjacent bonded nitrogen atom, examples of the organic lithium compound represented by the formula (1) include, but are not limited to, piperidinolithium, hexamethyleneiminolithium, lithium azacyclooctane, lithium-1,3,3-trimethyl-6-azabicyclo[3.2.1]octane, 1,2,3,6-tetrahydropyridinolithium, and 3,5-dimethylpiperidinolithium.

The organic lithium compound having at least one nitrogen atom in a molecule is not limited to these, and may include analogs thereof as long as the above conditions are satisfied. From the viewpoints of solubility of the polymerization initiator in a solvent, reduction of unpleasant odor of a modified conjugated diene-based polymer described later, and suppression of a chain transfer reaction, piperidinolithium, hexamethyleneiminolithium, lithium azacyclooctane, and lithium-1,3,3-trimethyl-6-azabicyclo[3.2.1]octane are preferable, piperidinolithium, hexamethyleneiminolithium, and 3,5-dimethylpiperidinolithium are more preferable, and piperidinolithium is further preferable.

In the formula (2), $R^{14}$ represents an alkylene group optionally having an aliphatic or aromatic substituent having 1 to 30 carbon atoms, or a polymer based on a conjugated diene having 1 to 20 carbon atoms. The conjugated diene-based polymer preferably represents a polymer containing a conjugated diene compound having 4 to 12 carbon atoms as a repeating unit. Examples of the conjugated diene compound include 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferable from the viewpoint of industrial availability. One of these may be singly used, or two or more of these may be used together.

In the formula (2), when $R^{14}$ represents an alkylene group having 1 to 30 carbon atoms, from the viewpoint of reactivity and interaction with an inorganic filler such as carbon and silica, $R^{14}$ preferably represents an alkylene group having 2 to 20 carbon atoms, and more preferably represents an alkylene group having 3 to 16 carbon atoms. Also, when $R^{14}$ represents an alkylene group having 1 to 30 carbon atoms, examples of the organic lithium compound represented by

the formula (2) include, but are not limited to, (3-(dimethylamino)-propyl)lithium, (3-(diethylamino)-propyl)lithium, (3-(dipropylamino)-propyl)lithium, (3-(dibutylamino)-propyl)lithium, (3-(dipentylamino)-propyl)lithium, (3-(dihexylamino)-propyl)lithium, (3-(dioctylamino)-propyl)lithium, (3-(ethylhexylamino)-propyl)lithium, (3-(didecylamino)-propyl)lithium, (3-(ethylpropylamino-propyl)lithium, (3-(ethylbutylamino-propyl)lithium, (3-(ethylbenzylamino)-propyl)lithium, (3-(methylphenethylamino)-propyl)lithium, (4-(dibutylamino)-butyl)lithium, (5-(dibutylamino)-pentyl)lithium, (6-(dibutylamino)-hexyl)lithium, (10-(dibutylamino)-decyl)lithium, (5-(dibutylamino)-1-phenylpentyl)lithium, (5-(dibutylamino)-1,1-diphenylpentyl)lithium, 3-N,N-bistrimethylsilylaminopropyllithium, 4-N-trimethylsilyl-N-methylaminobutyllithium, and 6-N-trimethylsilyl-N-butylaminohexyllithium.

The organic lithium compound having at least one nitrogen atom in a molecule is not limited to these, and may include analogs thereof as long as the above conditions are satisfied. From the viewpoint of reactivity and interaction with an inorganic filler such as carbon and silica, (3-(dibutylamino)-propyl)lithium is more preferable.

In the formula (2), when $R^{14}$ represents a conjugated diene-based polymer, examples of the organic lithium compound represented by the formula (2) include, but are not limited to, (4-(dimethylamino)-2-butenyl)lithium, (4-(diethylamino)-2-butenyl)lithium, (4-(dibutylamino)-2-butenyl)lithium, (4-(dipropylamino)-2-butenyl)lithium, (4-(diheptylamino)-2-butenyl)lithium, (4-(dihexylamino)-2-butenyl)lithium, (4-(dioctylamino)-2-butenyl)lithium, (4-(di-2-ethylhexylamino)-2-butenyl)lithium, (4-(didesylamino)-2-butenyl)lithium, (4-(ethylpropylamino)-2-butenyl)lithium, (4-(ethylbutylamino)-2-butenyl)lithium, (4-(ethylbenzylamino)-2-butenyl)lithium, (4-(methylphenethylamino)-2-butenyl)lithium, (4-(dimethylamino)-2-methyl-2-butenyl)lithium, (4-(diethylamino)-2-methyl-2-butenyl)lithium, (4-(dibutylamino)-2-methyl-2-butenyl)lithium, (4-(dipropylamino)-2-methyl-2-butenyl)lithium, (4-(diheptylamino)-2-methyl-2-butenyl)lithium, (4-(dihexylamino)-2-methyl-2-butenyl)lithium, (4-(dimethylamino)-3-methyl-2-butenyl)lithium, (4-(diethylamino)-3-methyl-2-butenyl)lithium, (4-(dibutylamino)-3-methyl-2-butenyl)lithium, (4-(dipropylamino)-3-methyl-2-butenyl)lithium, (4-(diheptylamino)-3-methyl-2-butenyl)lithium, (4-(dihexylamino)-3-methyl-2-butenyl)lithium, a reaction product of 1 mol of piperidinolithium with 3 mol of 1,3-butadiene, and a reaction product of 3-N,N-bistrimethylsilylaminopropyllithium with 3 mol of 1,3-butadiene.

The organic lithium compound having at least one nitrogen atom in a molecule is not limited to these, and may include analogs thereof as long as the above conditions are satisfied. From the viewpoints of reactivity as an initiator and control of a chain transfer reaction described later, (4-(dimethylamino)-2-butenyl)lithium, (4-(diethylamino)-2-butenyl)lithium, and (4-(dibutylamino)-2-butenyl)lithium are preferable, and (4-(dibutylamino)-2-butenyl)lithium is more preferable.

In the formula (2), when $R^{12}$ and $R^{13}$ form a cyclic structure together with the adjacent bonded nitrogen atom, examples of the organic lithium compound represented by the formula (2) include (3-(piperidinyl)propyl)lithium, (3-(hexamethyleneiminyl)propyl)lithium, (3-(heptamethyleneiminyl)propyl)lithium, (3-(octamethyleneiminyl)propyl)lithium, (3-(1,3,3-trimethyl-6-azabicyclo[3.2.1]octanyl)propyl)lithium, (3-(1,2,3,6-tetrahydropyridinyl)propyl)lithium, (2-(hexamethyleneiminyl)ethyl)lithium, (4-(hexamethyleneiminyl)butyl)lithium, (5-(hexamethyleneiminyl)pentyl)lithium, (6-(hexamethyleneiminyl)hexyl)lithium, (10-(hexamethyleneiminyl)decyl)lithium, (4-(piperidinyl)-2-butenyl)lithium, (4-(hexamethyleneiminyl)-2-butenyl)lithium, (4-(heptamethyleneiminyl)-2-butenyl)lithium, (4-(octamethyleneiminyl)-2-butenyl)lithium, (4-(1,3,3-trimethyl-6-azabicyclo[3.2.1]octanyl)-2-butenyl)lithium, (4-(1,2,3,6-tetrahydropyridinyl)-2-butenyl)lithium, (4-(hexamethyleneiminyl)-2-methyl-2-butenyl)lithium, and (4-(hexamethyleneiminyl)-3-methyl-2-butenyl)lithium.

The organic lithium compound having at least one nitrogen atom in a molecule is not limited to these, and may include analogs thereof as long as the above conditions are satisfied. From the viewpoints of reactivity and interaction with an inorganic filler such as carbon and silica, and control of a chain transfer reaction described later, (3-(piperidinyl)propyl)lithium, (3-(hexamethyleneiminyl)propyl)lithium, (3-(1,2,3,6-tetrahydropyridinyl)propyl)lithium, (4-(piperidinyl)-2-butenyl)lithium, and (4-(hexamethyleneiminyl)-2-butenyl)lithium are preferable, (3-(hexamethyleneiminyl)propyl)lithium, (4-(piperidinyl)-2-butenyl)lithium, and (4-(hexamethyleneiminyl)-2-butenyl)lithium are more preferable, and (4-(piperidinyl)-2-butenyl)lithium is further preferable.

In the formula (3), $R^{12}$ and $R^{13}$ are the same as $R^{12}$ and $R^{13}$ in the formula (2). The organic lithium compound having at least one nitrogen atom in a molecule represented by the formula (3) may be a reaction product of an organic monolithium compound with an organic unsaturated compound having a substituted amino group.

In that case, $R^{20}$ is an organic group derived from the organic monolithium compound, and $R^{19}$ is an alkylene compound derived from the organic unsaturated compound having a substituted amino group. When the organic monolithium compound has a substituted amino group, $R^{20}$ is a hydrocarbon group having a substituted amino group. As the organic unsaturated compound having a substituted amino group, a known organic unsaturated compound having a substituted amino group that undergoes an addition reaction with a lithium-based initiator is used, and examples thereof include a vinyl aromatic compound having a substituted amino group and a conjugated diene compound having a substituted amino group.

Examples of the organic lithium compound having at least one nitrogen atom in a molecule represented by the formula (3) include, but are not limited to, 1-(4-N,N-dimethylaminophenyl)hexyllithium, 1-(4-N,N-dimethylaminophenyl)-1-phenylhexyllithium, 1-(4-N,N-dimethylaminomethylphenyl)hexyllithium, 1-(4-N,N-bistrimethylsilylaminophenyl)hexyllithium, 1-(4-N-trimethylsilyl-N-ethylaminophenyl)hexyllithium, 1-(4-N,N-bistrimethylsilylaminophenyl)-1-phenylhexyllithium, 1-(4-N,N-dimethylaminophenyl)-4-methylpentyllithium, a reaction product of 1 mol of butyllithium with 2 mol of 4-N,N-dimethylaminostyrene, a reaction product of 1 mol of sec-butyllithium with 4 mol of 4-N,N-bistrimethylsilylaminostyrene, a reaction product of 1 mol of butyllithium with 4 mol of 2-N,N-dimethylamino-1,3-butadiene, a reaction product of 1 mol of piperidinolithium with 2 mol of 4-N,N-dimethylaminostyrene, and a reaction product of 3-N,N-bistrimethylsilylaminopropyllithium with 2 mol of 4-N,N-dimethylaminostyrene.

Examples of the organic lithium compound having at least one nitrogen atom in a molecule represented by the formula (4) include a reaction product of a N-substituted o-toluidine compound with an alkyllithium compound.

Examples of the organic lithium compound having at least one nitrogen atom in a molecule represented by the formula (4) include, but are not limited to, N,N-dimethyl-o-toluidinolithium, N,N-dimethyl-m-toluidinolithium, N,N-dimethyl-p-toluidinolithium, N,N-diethyl-o-toluidinolithium, N,N-diethyl-m-toluidinolithium, N,N-diethyl-p-toluidinolithium, N,N-dipropyl-o-toluidinolithium, N,N-dipropyl-m-toluidinolithium, N,N-dipropyl-p-toluidinolithium, N,N-dibutyl-o-toluidinolithium, N,N-dibutyl-m-toluidinolithium, N,N-dibutyl-p-toluidinolithium, o-piperidinotoluenolithium, p-piperidinotoluenolithium, o-pyrrolidinotoluenolithium, p-pyrrolidinotoluene, N,N,N',N'-tetramethyltoluylenediaminolithium, N,N,N',N'-tetraethyltoluylenediaminolithium, N,N,N',N'-tetrapropyltoluylenediaminolithium, N,N-dimethylxylidinolithium, N,N-diethylxylidinolithium, N,N-dipropylxylidinolithium, N,N-dimethylmesidinolithium, N,N-diethylmesidinolithium, (N,N-dimethylamino)toluylphenylmethylaminolithium, 1-(N,N-dimethylamino)-2-methylnaphthalenolithium, and 1-(N,N-dimethylamino)-2-methylanthracenolithium.

The organic lithium compound having at least one nitrogen atom in a molecule is not limited to these, and may include analogs thereof as long as the above conditions are satisfied. From the viewpoint of polymerization activity, N,N-dimethyl-o-toluidinolithium is more preferable.

Examples of the organic lithium compound having at least one nitrogen atom in a molecule represented by the formula (4) include, but are not limited to, 2-(2-methylpiperidinyl)-1-ethyllithium (for example, trade name "AI-250" manufactured by FMC Corporation).

The organic lithium compound is not limited to these, and may include analogs thereof as long as the above conditions are satisfied.

Before the polymerization step, an organic lithium compound having at least one nitrogen atom in a molecule or another organic lithium compound may be precedently prepared, and any known method can be applied for the preparation thereof.

In the above-described polymerization step, when obtaining a nitrogen-containing conjugated diene-based polymer, a step of copolymerizing at least a conjugated diene compound and a copolymerizable monomer having at least one nitrogen atom in a molecule may be carried out in the presence of an organic lithium compound.

As the copolymerizable monomer having at least one nitrogen atom in a molecule, a known organic unsaturated compound having a substituted amino group that undergoes copolymerization with a conjugated diene compound by a lithium-based initiator is used, and examples thereof include a vinyl aromatic compound having a substituted amino group and a conjugated diene compound having a substituted amino group.

The organic lithium compound is preferably an organic monolithium compound, which may or may not have a substituted amino group in a molecule. From the viewpoints of industrial availability and controllability of a polymerization reaction, an alkyllithium compound is preferable. In this case, a conjugated diene-based polymer having an alkyl group at a polymerization start end can be obtained.

Examples of the alkyllithium compound include, but are not limited to, n-butyllithium, sec-butyllithium, tert-butyllithium, n-hexyllithium, benzyllithium, phenyllithium, and stilbene lithium. As the alkyllithium compound, from the viewpoints of industrial availability and controllability of a polymerization reaction, n-butyllithium and sec-butyllithium are preferrable.

The substituted amino group is an amino group in which hydrogen atoms of the amino group are each independently substituted with at least one selected from the group consisting of an alkyl group having 1 to 12 carbon atoms, a cycloalkyl group having 3 to 14 carbon atoms, an aralkyl group having 6 to 20 carbon atoms, and a protecting group. The substituent may form a cyclic structure together with the adjacent bonded nitrogen atom, and in that case, the substituent represents an alkyl group having 5 to 12 carbon atoms, which may have an unsaturated bond or a branch structure in a part thereof. The protecting group is preferably an alkyl-substituted silyl group.

From the viewpoint that the conjugated diene-based polymer of the present embodiment is definitely and easily obtained, the polymerizing branching step is preferably performed in an inert solvent. Examples of such an inert solvent include, but are not limited to, hydrocarbon solvents such as a saturated hydrocarbon and an aromatic hydrocarbon. Specific examples of the hydrocarbon solvent include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons containing mixtures of any of these.

From the viewpoint that a conjugated diene-based polymer in which a conjugated diene compound and a vinyl

aromatic compound are randomly polymerized is obtained, for example, the following method as described in Japanese Patent Laid-Open No. 59-140211 may be employed for the polymerization reaction in the polymerizing branching step. Specifically, a method in which the polymerization reaction is started using the whole amount of the vinyl aromatic compound and a part of the conjugated diene compound, with the rest of the conjugated diene compound intermittently added during the polymerization reaction may be employed.

A polymerization temperature employed in the polymerization reaction in the polymerizing branching step is not especially limited, and is preferably a temperature at which living anion polymerization proceeds. From the viewpoint of improving productivity, the temperature is more preferably 0°C or more, and further preferably 0°C or more and 120°C or less. When the polymerization temperature in the polymerization reaction falls in the above-described range, there is a tendency that reactivity with a coupling modifier can be sufficiently improved in the coupling step described below. From a similar viewpoint, the polymerization temperature in the polymerization reaction is still further preferably 50°C or more and 100°C or less.

In the polymerizing branching step, a polar compound may be added. When the polar compound is added, there is a tendency that a conjugated diene-based polymer in which a vinyl aromatic compound and a conjugated diene compound are further randomly copolymerized can be obtained. Since the polar compound thus has a randomizing effect effective in copolymerization of the conjugated diene compound and the vinyl aromatic compound, it can be used as an agent for adjusting a distribution of the vinyl aromatic compound or adjusting the amount of styrene blocks. Besides, the polar compound can accelerate the polymerization reaction, and can be used as a vinylation agent for controlling the microstructure of the conjugated diene-based polymer.

Since the polar compound is thus used as a vinylation agent, a randomizing agent, and a polymerization accelerator, for example, when the polar compound is reduced for adjusting a vinylation rate or a randomization rate, a polymerization acceleration effect tends to be also reduced. Accordingly, in employing a method in which the branch number of a polymer is adjusted by reacting a coupling modifier with a polymerization terminal end, if the amount of the polar compound to be added is reduced, a polymerization time is elongated, and a ratio of deactivated polymerization terminal ends is increased. As a result, there is a tendency that the modification ratio is difficult to be increased by such a method. In other words, when the branch number of a modified conjugated diene-based polymer is to be adjusted by adjusting the amount of the polar compound to be added and by a coupling modifier, there is a tendency that the vinylation rate and the randomization rate are difficult to be controlled. In this regard, in the production method of the present embodiment, the branch number of a polymer can be increased by a branching agent described below, and hence, the branch number can be controlled independently of the vinylation rate and the randomization rate, which is advantageous in structural design of a conjugated diene-based polymer.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine. One of these polar compounds may be singly used, or two or more of these may be used together.

The amount of the polar compound to be added is not especially limited, and can be adjusted in accordance with the amount of polymerization active ends, namely, the amount of the polymerization initiator to be added. The amount of the polar compound to be added is preferably 0.010 mol or more and 1.0 mol or less, and more preferably 0.10 mol or more and 0.70 mol of less per mole of the polymerization initiator. Within the above-described range, the amount of the polar compound to be added may be 0.60 mol or less, or 0.50 mol or less per mole of the polymerization initiator. Alternatively, the amount may be 0.15 mol or more, or 0.20 mol or more per mole of the polymerization initiator. When the amount of the polar compound to be added is equal to or smaller than the upper limit, a conjugated diene-based polymer having a low Tg tends to be obtained. When the amount of the polar compound to be added is equal to or larger than the lower limit, there is a tendency that deactivation of a polymerization active end is suppressed to improve a coupling rate obtained in the coupling step described below. The amount of the polar compound to be added may fall in a range obtained by arbitrarily combining any of the upper limits and any of the lower limits.

The method for producing a modified conjugated diene-based polymer of the present embodiment may include, before the polymerizing branching step, a step of removing impurities. In particular, when the monomers, the polymerization initiator and/or the inert solvent contain allenes and acetylenes as impurities, the method preferably includes, before the polymerizing branching step, the step of removing impurities. When the step of removing impurities is included, a modified conjugated diene-based polymer having an active end at a high concentration tends to be obtained, and a modified conjugated diene-based polymer having a high modification ratio tends to be obtained in the coupling step described below. The step of removing impurities is not especially limited, and an example includes a step of performing treatment with an organic metal compound. The organic metal compound is not especially limited, and examples include organic lithium compounds, the organic lithium compounds are not especially limited, and an example includes n-butyllithium.

In the polymerizing branching step, a branching reaction is started in the modified conjugated diene-based polymer by adding a branching agent described below. After adding the branching agent, a polymerization reaction for growing the modified conjugated diene-based polymer and a branching reaction for branching the modified conjugated diene-based polymer are caused in competition with each other in the reaction system. Accordingly, in accordance with the type and the amount of the branching agent to be added, and the timing of adding the branching agent, the weight average molecular weight, the number average molecular weight, the ratio (Mw/Mn) therebetween and the absolute molecular weight of the modified conjugated diene-based polymer obtained in the polymerizing branching step, and the branch number, the number of branches, and the number of branch points in each branch point of the conjugated diene-based polymer can be controlled.

Besides, the total amount of active ends of the conjugated diene-based polymer in the reaction system can be reduced as compared with the amount of the polymerization initiator to be added by adding the branching agent during the polymerization of the modified conjugated diene-based polymer, and even when the amount of the polar compound to be added is small, a reaction at an initial stage of the polymerization can be accelerated to retain the activity of the polymerization active ends. As a result, in the conjugated diene-based polymer of the present invention having the amount of bound vinyl aromatic compound and the amount of vinyl bond respectively falling in the above-described prescribed ranges, the coupling rate of polymerization terminal ends and/or the modification ratio can be easily improved. It is, however, not essential to react the conjugated diene-based polymer of the present embodiment with the coupling modifier.

As described above, in the method for producing a modified conjugated diene-based polymer of the present embodiment, the amount of the polar compound to be added can be adjusted for purposes of controlling the microstructure such as the amount of bound vinyl aromatic compound and the amount of vinyl bond. If the branching agent is not added, the amount of the polar compound to be added usually employed for obtaining the amount of bound vinyl aromatic compound and the amount of vinyl bond in the above-described prescribed ranges is insufficient from the viewpoint of retaining the active ends of the conjugated diene-based polymer in the reaction system, and hence the activity of the polymerization active ends cannot be easily sufficiently retained. Besides, this amount of the polar compound to be added cannot provide sufficiently high randomization performance for the vinyl aromatic compound and the conjugated diene compound, and in the conjugated diene-based polymer of the present embodiment having the amount of bound vinyl aromatic compound and the amount of vinyl bond falling in the above-described prescribed ranges, a polymerization end tends to be the vinyl aromatic compound. In such a state, it tends to be difficult to obtain a conjugated diene-based polymer having a high coupling rate or modification ratio.

That is, in the method for producing a modified conjugated diene-based polymer of the present embodiment, the use of a branching agent allows the active ends of the polymer to be sufficiently retained and a high coupling rate and modification ratio to be achieved, even with the amount of the polar compound to be added, which is usually not easy to sufficiently retain the activity of the polymerization active ends.

The timing of adding the branching agent in the branching step is not especially limited, and can be appropriately selected in accordance with use and the like of the conjugated diene-based polymer to be produced.

From the viewpoints of improving the absolute molecular weight of the conjugated diene-based polymer to be obtained, and of improving the modification ratio in the coupling step, the timing of adding the branching agent is timing, after adding the polymerization initiator, when a raw material conversion rate is preferably 20% or more, more preferably 40% or more, further preferably 50% or more, still further preferably 65% or more, and even more preferably 75% or more. In other words, the timing of adding the branching agent is preferably timing when the polymerization reaction has been sufficiently stabilized. When the timing of adding the branching agent falls in the above-described range, a conjugated diene-based polymer having a further higher modification ratio in the coupling step can be obtained even if the amount of the polar compound to be added is small or none.

The branching agent is not especially limited, and for example, a compound represented by the following formula (10) or formula (11) can be used.

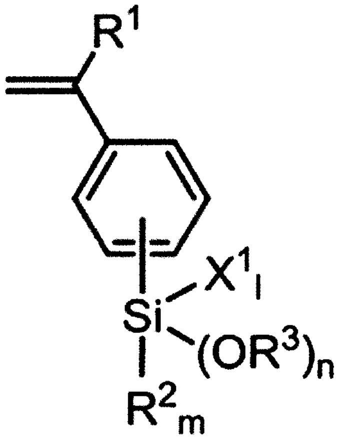

(1 0)

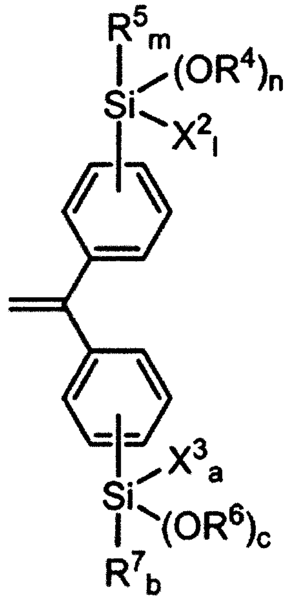

(1 1)

In the formula (10), R’ represents a hydrogen atom, or an alkyl group having 1 to 20 carbon atoms or an aryl group having 6 to 20 carbon atoms, and may have a branch structure in a part thereof.

$R^2$ to $R^3$ each independently represent an alkyl group having 1 to 20 carbon atoms or an aryl group having 6 to 20 carbon atoms, and may have a branch structure in a part thereof.

$R^1$ to $R^3$, if present in a plural number, are respectively independent.

$X^1$ represents an independent halogen atom.

m represents an integer of 0 to 2, n represents an integer of 0 to 3, and l represents an integer of 0 to 3.

(m + n + l) represents 3.

In the formula (11), $R^4$ to $R^7$ each independently represent an alkyl group having 1 to 20 carbon atoms or an aryl group having 6 to 20 carbon atoms, and may have a branch structure in a part thereof.

$R^4$ to $R^7$, if present in a plural number, are respectively independent.

$X^2$ to $X^3$ represent independent halogen atoms.

m represents an integer of 0 to 2, n represents an integer of 0 to 3, and l represents an integer of 0 to 3.

(m + n + l) represents 3.

a represents an integer of 0 to 3, b represents an integer of 0 to 2, and c represents an integer of 0 to 3. (a + b + c) represents 3.

In the present embodiment, the branching agent used in constructing the main chain branch structure of the conjugated diene-based polymer is preferably a compound represented by the formula (10) wherein $R^1$ is a hydrogen atom and m = 0, from the viewpoints of continuity of the polymerization and improvement of the branch number.

Alternatively, in the present embodiment, the branching agent used in constructing the main chain branch structure of the conjugated diene-based polymer is preferably a compound represented by the formula (11) wherein m = 0 and b = 0, from the viewpoint of improvement of the branch number.

Alternatively, in the present embodiment, the branching agent used in constructing the main chain branch structure of the conjugated diene-based polymer is more preferably a compound represented by the formula (10) wherein R' is a hydrogen atom, m = 0, and l = 0, from the viewpoints of continuity of the polymerization and improvement of the modification ratio and the branch number.

Alternatively, in the present embodiment, the branching agent used in constructing the main chain branch structure of the conjugated diene-based polymer is further preferably a compound represented by the formula (11) wherein m = 0, l = 0, a = 0, and b = 0, from the viewpoint of improvement of the modification ratio and the branch number.

Alternatively, in the present embodiment, the branching agent used in constructing the main chain branch structure of the conjugated diene-based polymer is more preferably a compound represented by the formula (10) wherein R' is a hydrogen atom, l = 0, and n = 3, from the viewpoints of continuity of the polymerization and improvement of the modification ratio and the branch number.

Examples of the branching agent represented by the formula (10) include, but are not limited to, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, triisopropoxy(2-vinylphenyl)silane, dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, diisopropoxymethyl(4-vinylphenyl)silane, dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl(3-vinylphenyl)silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, diisopropoxymethyl(2-vinylphenyl)silane, dimethylmethoxy(4-vinylphenyl)silane, dimethylethoxy(4-vinylphenyl)silane, dimethylpropoxy(4-vinylphenyl)silane, dimethylbutoxy(4-vinylphenyl)silane, dimethylisopropoxy(4-vinylphenyl)silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl)silane, dimethylisopropoxy(3-vinylphenyl)silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl)silane, and dimethylisopropoxy(2-vinylphenyl)silane.

Examples of the branching agent represented by the formula (10) also include trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, triisopropoxy(2-isopropenylphenyl)silane, dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, diisopropoxymethyl(2-isopropenylphenyl)silane, dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, dimethylisopropoxy(2-isopropenylphenyl)silane, trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, and dimethylbromo(2-vinylphenyl)silane.

Among these, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, and trichloro(4-vinylphenyl)silane are preferred, and trimethoxy(4-vinylphenyl)silane, triethoxy(4-vinylphenyl)silane, tripropoxy(4-vinylphenyl)silane, tributoxy(4-vinylphenyl)silane, and triisopropoxy(4-vinylphenyl)silane are more preferred.

Examples of the branching agent represented by the formula (11) include, but are not limited to, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, 1,1-bis(4-triisopropoxysilylphenyl)ethylene, 1,1-bis(3-trimethoxysilylphenyl)ethylene, 1,1-bis(3-triethoxysilylphenyl)ethylene, 1,1-bis(3-tripropoxysilylphenyl)ethylene, 1,1-bis(3-tripentoxysilylphenyl) ethylene, 1,1-bis(3-triisopropoxysilylphenyl)ethylene, 1,1-bis(2-trimethoxysilylphenyl)ethylene, 1,1-bis(2-triethoxysilylphenyl)ethylene, 1,1-bis(3-tripropoxysilylphenyl)ethylene, 1,1-bis(2-tripentoxysilylphenyl)ethylene, 1,1-bis(2-triisopropoxysilylphenyl)ethylene, 1,1-bis(4-(dimethylmethoxysilyl)phenyl)ethylene, 1,1-bis(4-(diethylmethoxysilyl)phenyl)ethylene, 1,1-bis(4-(dipropylmethoxysilyl)phenyl)ethylene, 1,1-bis(4-(dimethylethoxysilyl)phenyl)ethylene, 1,1-bis(4-(diethylethoxysilyl)phenyl)ethylene, and 1,1-bis(4-(dipropylethoxysilyl)phenyl)ethylene.

Among these, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, and 1,1-bis(4-triisopropoxysilylphenyl)ethylene are preferred, and 1,1-bis(4-trimethoxysilylphenyl)ethylene is more preferred.

The amount of the branching agent to be added is not especially limited, and can be appropriately selected in accordance with use and the like of the conjugated diene-based polymer to be obtained, and is preferably 0.020 mole or more and 0.50 mole or less, more preferably 0.025 mole or more and 0.40 mole or less, and further preferably 0.030 mole or more and 0.25 mole or less per mole of the polymerization initiator.

The amount of the branching agent to be added may be, within the above-described range, 0.040 mole or more, or 0.045 mole or more per mole of the polymerization initiator. Alternatively, the amount may be 0.20 mole or less, or 0.18 mole or less per mole of the polymerization initiator.

The amount of the branching agent to be added may fall in a range obtained by arbitrarily combining any of the upper limits and any of the lower limits. The amount of the branching agent to be added affects the branch number of the entire polymer, and as the amount added increases, the overall branch number and the branch number at the extreme value increase.

In the polymerizing branching step, the reaction temperature may be changed, or may not be changed after adding the branching agent.

In the polymerizing branching step, after adding the branching agent, a monomer of the conjugated diene-based polymer, may be further additionally added, the branching agent may be additionally added thereafter, and the additional addition of the branching agent and the monomer may be further repeated.

The monomer to be added is not especially limited, and from the viewpoint of improving the modification ratio in the coupling step, the same monomer as that added as the monomer initially in the polymerizing branching step is preferably added.

The amount of the monomer to be added may be 1.0% or more, 5.0% or more, 10.0% or more, 15.0% or more, or 20.0% or more of the total amount used as the monomer of the conjugated diene-based polymer. The amount of the monomer to be added may be 50.0% or less, 40.0% or less, or 35.0% or less.

When the amount of the monomer to be added falls in the above-described range, a molecular weight between a branch point generated by the addition of the branching agent and a branch point generated by the addition of the coupling modifier is increased, and hence, a molecular structure having a high linearity tends to be easily formed. When the conjugated diene-based polymer to be obtained has such a structure, entanglement among molecular chains of the conjugated diene-based polymer obtained in the form of a vulcanizate is increased, and hence, a vulcanizate excellent in abrasion resistance, steering stability and fracture strength tends to be easily obtained.

(Coupling Step)

In the method for producing a conjugated diene-based polymer of the present embodiment, it is preferable that the conjugated diene-based polymer having a branch structure obtained by the above-described polymerizing branching step is reacted with a coupling modifier to form a modified conjugated diene-based polymer. Such a coupling step can modify the conjugated diene-based polymer having a branch structure obtained by the polymerizing branching step with a nitrogen atom-containing functional group having affinity or binding reactivity with a filler. Besides, a plurality of conjugated diene-based polymers can be coupled. Therefore, in the production method including such a coupling step, the conjugated diene-based polymer of the present embodiment described above can be further definitely and easily obtained.

The coupling modifier is not especially limited as long as it is a reactive compound having a nitrogen atom-containing functional group having affinity or binding reactivity with a filler, and having 2 or more functional groups capable of reacting with an active end of the conjugated diene-based polymer.

An example of the coupling modifier includes a coupling modifier that contains a nitrogen atom, and further has a group containing a nitrogen atom and a silicon atom.

Examples of the coupling modifier having a nitrogen atom-containing group include, but are not limited to, an isocyanate compound, an isothiocyanate compound, an isocyanuric acid derivative, a nitrogen atom-containing carbonyl compound, a nitrogen atom-containing vinyl compound, a nitrogen atom-containing epoxy compound, an imine compound, and a nitrogen atom-containing alkoxysilane compound.

Preferable examples of the coupling modifier having a nitrogen atom-containing group include an amine

compound not having active hydrogen, a protected amine compound in which active hydrogen is substituted with a protecting group, an imine compound represented by a general formula, -N=C, and an alkoxysilane compound bonded to any of these nitrogen atom-containing compounds. An example of the amine compound not having active hydrogen includes a tertiary amine compound.

Examples of the isocyanate compound include, but are not limited to, 2,4-tolylene diisocyanate, 2,6-tolylene diisocyanate, diphenylmethane diisocyanate, polymeric diphenylmethane diisocyanate (C-MDI), phenyl isocyanate, isophorone diisocyanate, hexamethylene diisocyanate, butyl isocyanate, and 1,3,5-benzene triisocyanate.

Examples of the isothiocyanate compound include, but are not limited to, 2,4-tolylene diisothiocyanate, 2,6-tolylene diisothiocyanate, diphenylmethane diisothiocyanate, phenyl isothiocyanate, isophorone diisothiocyanate, hexamethylene diisothiocyanate, butyl isothiocyanate, and 1,3,5-benzene triisothiocyanate.

Examples of the isocyanuric acid derivative include, but are not limited to, 1,3,5-tris(3-trimethoxysilylpropyl) isocyanurate, 1,3,5-tris(3-triethoxysilylpropyl)isocyanurate, 1,3,5-tri(oxiran-2-yl)-1,3,5-triazinane-2,4,6-trione, 1,3,5-tris(isocyanatomethyl)-1,3,5-triazinane-2,4,6-trione, and 1,3,5-trivinyl-1,3,5-triazinane-2,4,6-trione.

Examples of the nitrogen atom-containing carbonyl compound include, but are not limited to, 1,3-dimethyl-2-imidazolidinone, 1-methyl-3-ethyl-2-imidazolidinone, 1-methyl-3-(2-methoxyethyl)-2-imidazolidinone, N-methyl-2-pyrolidone, N-methyl-2-piperidone, N-methyl-2-quinolone, 4,4'-bis(diethylamino)benzophenone, 4,4'-bis(dimethylamino) benzophenone, methyl-2-pyridyl ketone, methyl-4-pyridyl ketone, propyl-2-pyridyl ketone, di-4-pyridyl ketone, 2-benzoylpyridine, N,N,N',N'-tetramethylurea, N,N-dimethyl-N',N'-diphenylurea, methyl N,N-diethylcarbamate, N,N-diethylacetamide, N,N-dimethyl-N',N'-dimethylaminoacetamide, N,N-dimethyl picolinic acid amide, and N,N-dimethyl isonicotinic acid amide.

Examples of the nitrogen atom-containing vinyl compound include, but are not limited to, N,N-dimethylacrylamide, N,N-dimethylmethacrylamide, N-methylmaleimide, N-methylphthalimide, N,N-bistrimethylsilylacrylamide, morpholinoacrylamide, 3-(2-dimethylaminoethyl)styrene, (dimethylamino)dimethyl-4-vinylphenylsilane, 4,4'-vinylidene bis(N,N-dimethylaniline), 4,4'-vinylidene bis(N,N-dimethylaniline), 1,1-bis(4-morpholinophenyl)ethylene, and 1-phenyl-1-(4-N,N-dimethylaminophenyl)ethylene.

Examples of the nitrogen atom-containing epoxy compound include, but are not limited to, a hydrocarbon compound containing an epoxy group bonded to an amino group.

The hydrocarbon compound may further contain an epoxy group bonded to an ether group. Examples of such a nitrogen atom-containing epoxy compound include, but are not limited to, a compound represented by the following formula (12).

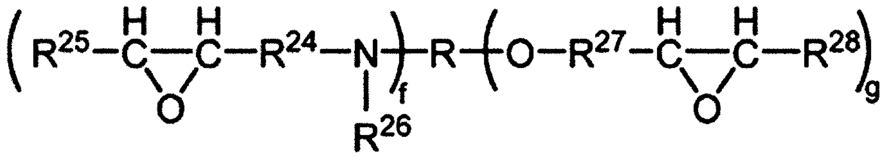

(12)

In the formula (12), R represents a bivalent or higher hydrocarbon group, or a bivalent or higher organic group having at least one polar group selected from a polar group having oxygen such as ether, epoxy or ketone, a polar group having sulfur such as thioether or thioketone, and a polar group having nitrogen such as a tertiary amino group or an imino group.

The bivalent or higher hydrocarbon group may be a saturated or unsaturated linear, branched or cyclic hydrocarbon group, and encompasses an alkylene group, an alkenylene group, a phenylene group and the like. The bivalent or higher hydrocarbon group is preferably a hydrocarbon group having 1 to 20 carbon atoms. Examples include methylene, ethylene, butylene, cyclohexylene, 1,3-bis(methylene)-cyclohexane, 1,3-bis(ethylene)-cyclohexane, o-, m- and p-phenylene, m- and p-xylene, and bis(phenylene)-methane.

In the formula (12), $R^{24}$ and $R^{27}$ are hydrocarbon groups having 1 to 10 carbon atoms, and $R^{24}$ and $R^{27}$ may be the same as or different from each other.

In the formula (12), $R^{25}$ and $R^{26}$ are hydrogen or hydrocarbon groups having 1 to 10 carbon atoms, and $R^{25}$ and $R^{28}$ may be the same as or different from each other.

In the formula (12), $R^{26}$ is a hydrocarbon group having 1 to 10 carbon atoms, or a structure of the following formula (13).

$R^{24}$, $R^{25}$ and $R^{26}$ may be a cyclic structure mutually bonded.

When $R^{26}$ is a hydrocarbon group, it may be a cyclic structure mutually bonded to R. In the case of the cyclic structure described above, N and R bonded to $R^{26}$ may be in the form of being directly bonded to each other.

In the formula (12), f is an integer of 1 or more, and g is an integer of 0 or 1 or more.

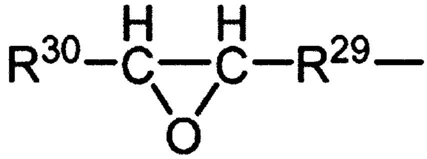

(13)

In the formula (13), $R^{29}$ and $R^{30}$ are defined the same respectively as $R^{24}$ and $R^{25}$ in the formula (12), and $R^{29}$ and $R^{30}$ may be the same as or different from each other.

The nitrogen atom-containing epoxy compound is preferably a nitrogen atom-containing epoxy compound having, in a molecule, 1 or more diglycidylamino groups and 1 or more glycidoxy groups.

Examples of the nitrogen atom-containing epoxy compound include, but are not limited to, N,N-diglycidyl-4-glycidoxyaniline, 1-N,N-diglycidylaminomethyl-4-glycidoxy-cyclohexane, 4-(4-glycidoxyphenyl)-(N,N-diglycidyl)aniline, 4-(4-glycidoxyphenoxy)-(N,N-diglycidyl)aniline, 4-(4-glycidoxybenzyl)-(N,N-diglycidyl)aniline, 4-(N,N'-diglycidyl-2-piperazinyl)-glycidoxybenzene, 1,3-bis(N,N-diglycidylaminomethyl)cyclohexane, N,N,N',N'-tetraglycidyl-m-xylenediamine, 4,4-methylene-bis(N,N-diglycidylaniline), 1,4-bis(N,N-diglycidylamino)cyclohexane, N,N,N',N'-tetraglycidyl-p-phenylenediamine, 4,4'-bis(diglycidylamino)benzophenone, 4-(4-glycidylpiperazinyl)-(N,N-diglycidyl)aniline, 2-[2-(N,N-diglycidylamino)ethyl]-1-glycidylpyrrolidine, N,N-diglycidylaniline, 4,4'-diglycidyl-dibenzylmethylamine, N,N-diglycidylaniline, N,N-diglycidyl ortho-toluidine, and N,N-diglycidylaminomethylcyclohexane.

Among these, preferable examples include N,N-diglycidyl-4-glycidoxyaniline, and 1,3-bis(N,N-diglycidylaminomethyl)cyclohexane.

Examples of the imine compound include, but are not limited to, N-butylpropan-2-imine, N-butyl-4-methylpentan-2-imine, N,N'-(propane 1,3-diyl)bis(4-methylpentan-2-imine), N,N'-(hexane 1,6-diyl)bis(4-methylpentan-2-imine), tris[2-(propan-2-ylideneamino)ethyl]amine, tris[2-(propan-2-ylideneamino)propyl]amine, N,N'-(1,4-phenylene)bis(4-methylpentan-2-imine), 1,1'-(1,4-phenylene)bis(N-propylethan-1-imine), N,N'-(propane 1,3-diyl)bis(1-phenylmethanimine), and N,N'-(hexane 1,6-diyl)bis(1-phenylmethanimine).

Examples of the nitrogen atom-containing alkoxysilane compound include, but are not limited to, 3-dimethylaminopropyltrimethoxysilane, 3-dimethylaminopropylmethyldimethoxysilane, 3-diethylaminopropyltriethoxysilane, 3-morpholinopropyltrimethoxysilane, 3-piperidinopropyltriethoxysilane, 3-hexamethyleneiminopropylmethyldiethoxysilane, 3-(4-methyl-1-piperazino)propyltriethoxysilane, 3-(4-methyl-1-piperazino)propyltrimethoxysilane, 1-[3-(triethoxysilyl)-propyl]-3-methylhexahydropyrimidine, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 3-dimethylamino-2-(dimethylaminomethyl)propyltrimethoxysilane, bis(3-dimethoxymethylsilylpropyl)-N-methylamine, bis(3-trimethoxysilylpropyl)-N-methylamine, bis(3-triethoxysilylpropyl)methylamine, tris(trimethoxysilyl)amine, tris(3-trimethoxysilylpropyl)amine, N,N,N',N'-tetra(3-trimethoxysilylpropyl)ethylenediamine, 3-isocyanatopropyltrimethoxysilane, 3-cyanopropyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2-2-dimethoxy-1-(4-triemthoxysilylbutyl)-1-aza-2-silacylcohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, 2,2-dimethoxy-8-(4-methylpiperazinyl)methyl-1,6-dioxa-2-silacyclooctane, and 2,2-dimethoxy-8-(N,N-diethylamino) methyl-1,6-dioxa-2-silacyclooctane.

Preferable examples of the nitrogen atom-containing alkoxysilane compound include, but are not limited to, tris(3-trimethoxysilylpropyl)amine, tris(3-triethoxysilylpropyl)amine, tris(3-tripropoxysilylpropyl)amine, bis(3-trimethoxysilylpropyl)-[3-(2,2-dimethoxy-1-aza-2-silacyclopentane)propyl]amine, tetrakis(3-trimethoxysilylpropyl)-1,3-propanediamine (also designated as "N,N,N',N'-tetrakis(3-trimethoxysilylpropyl)-1,3-propanediamine"), tris(3-trimethoxysilylpropyl)-[3-(1-methoxy-2-trimethylsilyl-1-sila-2-azacyclopentane)propyl]-1,3-propanediamine, tris(3-trimethoxysilylpropyl)-[3-(1-methoxy-2-methyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)propyl]-1,3-bisaminomethylcyclohexane, tetrakis(3-trimethoxysilylpropyl)-1,6-hexamethylenediamine, pentakis(3-trimethoxysilylpropyl)-diethylenetriamine, tris(3-trimethoxysilylpropyl)-methyl-1,3-propanediamine, tetrakis[3-(2,2-dimethoxy-1-aza-2-silacyclopentane)propyl]silane, bis(3-trimethoxysilylpropyl)-bis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-1-trimethylsilyl-1-sila-2-azacyclopentane)propyl]silane, 3-tris[2-(2,2-dimethoxy-1-aza-2-silacyclopentane)ethoxy]silyl-1-trimethoxysilylpropane, 1-[3-(1-methoxy-2-trimethylsilyl-1-sila-2-azacyclopentane)propyl]-3,4,5-tris(3-trimethoxysilylpropyl)-cyclohexane, 1-[3-(2,2-dimethoxy-1-aza-2-silacyclopentane)propyl]-3,4,5-tris(3-trimethoxysilylpropyl)-cyclohexane, 3,4,5-tris(3-trimethoxysilylpropyl)-cyclohexyl-[3-(2,2-dimethoxy-1-aza-2-silacyclopentane)propyl] ether, (3-trimethoxysilylpropyl)

phosphate, bis(3-trimethoxysilylpropyl)-[3-(2,2-dimethoxy-1-aza-2-silacyclopentane)propyl] phosphate, bis[3-(2,2-dimethoxy-1-aza-2-silacyclopentane)propyl]-(3-trimethoxysilylpropyl) phosphate, tris[3-(2,2-dimethoxy-1-aza-2-silacyclopentane)propyl]phosphate, N-(1,3-dimethylbutylidene)-3-(triethoxysilyl)-1-propanamine, N-(1,3-dimethylbutylidene)-3-(trimethoxysilyl)-1-propanamine, N-benzylidene-3-(triethoxysilyl)propan-1-amine, N-benzylidene-3-(trimethoxysilyl)propan-1-amine, 1,1-(1,4-phenylene)bis(N-(3-(triethoxysilyl)propyl)methanamine), 1,1-(1,4-phenylene)bis(N-(3(trimethoxysilyl)propyl)methanamine), 2-methoxy-2-methyl-1-(benzylideneaminoethyl)-1-aza-2-silacyclopentane, and 2-methoxy-2-methyl-1-(4-methoxybenzylideneaminoethyl)-1-aza-2-silacyclopentane.

Among the coupling modifiers having a nitrogen atom-containing group, an example of the protected amine compound in which active hydrogen is substituted with a protecting group includes a compound having, in a molecule, an unsaturated bond and a protected amine. Examples of such a compound include, but are not limited to, 4,4'-vinylidenebis[N,N-bis(trimethylsilyl)aniline], 4,4'-vinylidenebis[N,N-bis(triethylsilyl)aniline], 4,4'-vinylidenebis[N,N-bis(t-butyldimethylsilyl)aniline], 4,4'-vinylidenebis[N-methyl-N-(trimethylsilyl)aniline], 4,4'-vinylidenebis[N-ethyl-N-(trimethylsilyl)aniline], 4,4'-vinylidenebis[N-methyl-N-(triethylsilyl)aniline], 4,4'-vinylidenebis[N-ethyl-N-(triethylsilyl)aniline], 4,4'-vinylidenebis[N-methyl-N-(t-butyldimethylsilyl)aniline], 4,4'-vinylidenebis[N-ethyl-N-(t-butyldimethylsilyl)aniline], 1-(4-N,N-bis(trimethylsilyl)aminophenyl)-1-[4-N-methyl-N-(trimethylsilyl)aminophenyl]ethylene, and 1-[4-N,N-bis(trimethylsilyl)aminophenyl]-1-[4-N,N-dimethylaminophenyl]ethylene.

Among the coupling modifiers having a nitrogen atom-containing group, an example of the protected amine compound in which active hydrogen is substituted with a protecting group includes a compound containing, in a molecule, an alkoxysilane and a protected amine.

Examples of such a compound include, but are not limited to, N,N-bis(trimethylsilyl)aminopropyltrimethoxysilane, N,N-bis(trimethylsilyl)aminopropylmethyldimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethylmethyldiethoxysilane, N,N-bis(triethylsilyl)aminopropylmethyldiethoxysilane, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, and N-ethylidene-3-(trimethoxysilyl)-1-propanamine.

Examples also include N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-methyl(dimethoxysilyl)propan-1-amine, N-benzylidene-3-methyl(diethoxysilyl)propan-1-amine, N-4-methylbenzylidene-3-(triethoxysilyl)propan-1-amine, N-4-methylbenzylidene-3-(trimethoxysilyl)propan-1-amine, N-4-methylbenzylidene-3-methyl(dimethoxysilyl)propan-1-amine, N-4-methylbenzylidene-3-methyl(diethoxysilyl)propan-1-amine, N-naphtylidene-3-(triethoxysilyl)propan-1-amine, N-naphtylidene-3-(trimethoxysilyl)propan-1-amine, N-naphtylidene-3-methyl(dimethoxysilyl)propan-1-amine, 1,1-(1,4-phenylene)bis(N-(3methyl(dimethoxysilyl)propyl)methanamine), 1,1-(1,4-phenylene)bis(N-(3methyl(diethoxysilyl)propyl) methanamine), 2-ethoxy-2-methyl-1-(benzylideneaminoethyl)-1-aza-2-silacyclopentane, and 2-methoxy-2-methyl-1-(methylisobutylideneaminoethyl)-1-aza-2-silacyclopentane.

In the coupling step, it is more preferable to use a combination of two or more among the nitrogen atom-containing alkoxysilane compounds represented by any of the following formulas (14) to (18) as the coupling modifiers.

As such coupling modifiers, a coupling modifier having two or less alkoxysilyl groups and a coupling modifier having more than two alkoxysilyl groups can be used in combination.

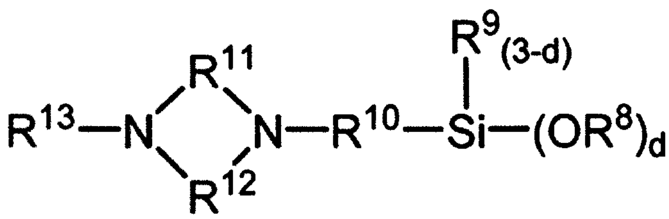

(14)

In the formula (14), $R^8$ to $R^{10}$ are hydrocarbon groups having 1 to 20 carbon atoms, an unsaturated bond may be

present therein, and they may be the same as or different from each other. $R^{11}$ and $R^{12}$ are aliphatic hydrocarbon groups having 1 to 6 carbon atoms, an unsaturated bond may be present therein, and they may be the same as or different from each other, and $R^{13}$ is a hydrocarbon group having 1 to 20 carbon atoms containing Si, O, or N and optionally substituted with an organic group having no active hydrogen, and an unsaturated bond may be present therein. d is an integer of 1 to 3.

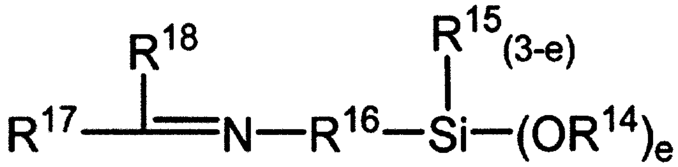

(15)

In the formula (15), $R^{14}$ to $R^{16}$ are hydrocarbon groups having 1 to 20 carbon atoms, an unsaturated bond may be present therein, and they may be the same as or different from each other.

$R^{17}$ and $R^{18}$ are hydrocarbon groups having 1 to 20 carbon atoms containing Si, O, or N and optionally substituted with an organic group having no active hydrogen, and an unsaturated bond may be present therein. e is an integer of 1 to 3.

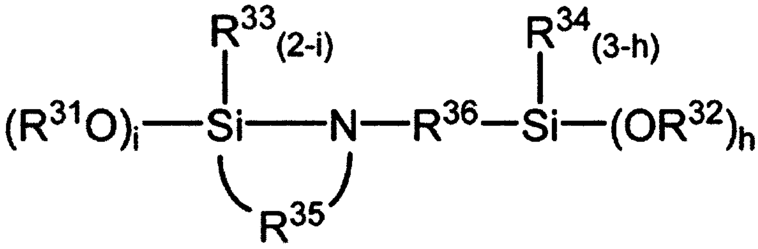

(16)

In the formula (16), $R^{31}$ to $R^{34}$ each independently represent an alkyl group having 1 to 20 carbon atoms or an aryl group having 6 to 20 carbon atoms, $R^{35}$ represents an alkylene group having 1 to 10 carbon atoms, and $R^{36}$ represents an alkylene group having 1 to 20 carbon atoms.

h represents an integer of 1 to 3, i represents an integer of 1 or 2, and (h + i) represents an integer of 4 or more. $R^{31}$ to $R^{34}$, if present in a plural number, are respectively independent.

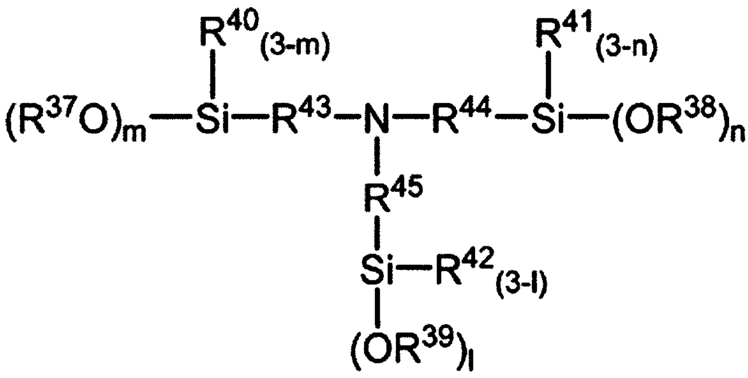

(17)

In the formula (17), $R^{37}$ to $R^{42}$ each independently represent an alkyl group having 1 to 20 carbon atoms or an aryl group having 6 to 20 carbon atoms, and $R^{43}$ to $R^{45}$ each independently represent an alkylene group having 1 to 20 carbon atoms.

m, n and l each independently represent an integer of 1 to 3, and (m + n + l) represents an integer of 4 or more. $R^{37}$ to $R^{42}$, if present in a plural number, are respectively independent.

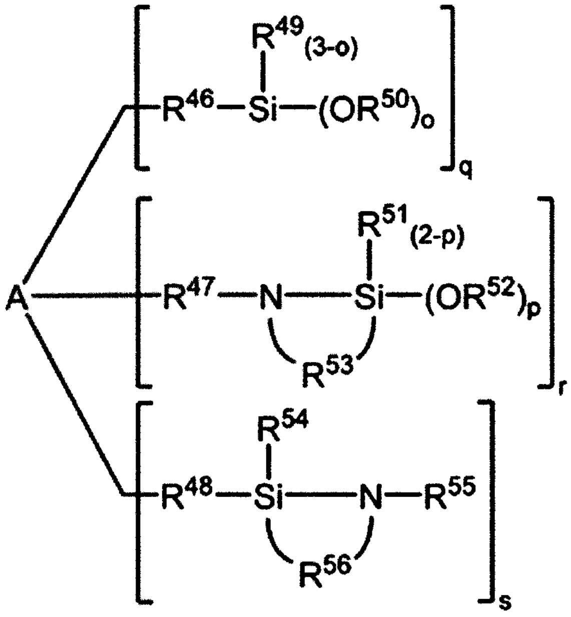

(18)

In the formula (18), $R^{46}$ to $R^{48}$ each independently represent a single bond or an alkylene group having 1 to 20 carbon atoms, $R^{49}$ to $R^{52}$ each independently represent an alkyl group having 1 to 20 carbon atoms, $R^{53}$ and $R^{56}$ each independently represent an alkylene group having 1 to 20 carbon atoms, $R^{54}$ represents an alkylene group or alkoxy group having 1 to 20 carbon atoms, and $R^{55}$ represents an alkyl group or trialkylsilyl group having 1 to 20 carbon atoms.

o represents an integer of 1 to 3, and p represents 1 or 2.

Each of $R^{46}$ to $R^{56}$, o and p, if present in a plural number, is respectively independent, and they may be the same as or different from each other.

q represents an integer of 0 to 6, r represents an integer of 0 to 6, s represents an integer of 0 to 6, and (q + r + s) is an integer of 4 to 10.

A represents a hydrocarbon group having 1 to 20 carbon atoms, or an organic group having at least one atom selected from the group consisting of an oxygen atom, a nitrogen atom, a silicon atom, a sulfur atom, and a phosphorus atom and having no active hydrogen.

Examples of the coupling modifier represented by the formula (14) include, but are not limited to, 1-methyl-4-(3-(trimethoxysilyl)propyl)piperazine, 1-methyl-4-(3-(triethoxysilyl)propyl)piperazine, 1-ethyl-4-(3-(trimethoxysilyl)propyl)piperazine, 1-ethyl-4-(3-(triethoxysilyl)propyl)piperazine, 1-propyl-4-(3-(trimethoxysilyl)propyl)piperazine, 1-propyl-4-(3-(triethoxysilyl)propyl)piperazine, 1-butyl-4-(3-(trimethoxysilyl)propyl)piperazine, 1-butyl-4-(3-(triethoxysilyl)propyl)piperazine, 1-trimethylsilyl-4-(3-(trimethoxysilyl)propyl)piperazine, 1-trimethylsilyl-4-(3-(triethoxysilyl)propyl)piperazine, 1-triethylsilyl-4-(3-(trimethoxysilyl)propyl)piperazine, 1-triethylsilyl-4-(3-(triethoxysilyl)propyl)piperazine, 1-(t-butyldimethylsilyl)-4-(3-(trimethoxysilyl)propyl)piperazine, 1-(t-butyldimethylsilyl)-4-(3-(triethoxysilyl)propyl)piperazine, 1-triisopropylsilyl-4-(3-(trimethoxysilyl)propyl)piperazine, and 1-triisopropylsilyl-4-(3-(triethoxysilyl)propyl)piperazine.

Among these, from the viewpoint of increasing reactivity and interaction between the conjugated diene-based polymer and the inorganic filler such as silica, and from the viewpoint of increasing processability, one represented by the formula (16) wherein d is 3 is preferred. Specifically, 1-methyl-4-(3-(trimethoxysilyl)propyl)piperazine and 1-methyl-4-(3-(triethoxysilyl)propyl)piperazine are preferred.

A reaction temperature, a reaction time, and other factors when reacting the coupling modifier having a nitrogen atom-containing group represented by the formula (14) with a polymerization active end are not especially limited, and the reaction is preferably performed at 0°C or more and 120°C or less for 30 seconds or more.

The amount of the coupling modifier represented by the formula (14) to be added corresponds to a total mole number of an alkoxy group ($OR^8$) bonded to a silyl group of the compound represented by the formula (14) of preferably 0.2 or more times and 2.5 or less times, more preferably 0.5 or more times and 2.0 or less times, and further preferably 1.0 or more times and 2.0 or less times of a mole number of the polymerization initiator to be added. From the viewpoint that the thus obtained modified conjugated diene-based polymer has a modification ratio, and a molecular weight respectively falling in more preferable ranges, the amount is preferably 0.2 times or more. Besides, from the viewpoint of suppressing deterioration of processability due to an excessively high branch number, the amount is preferably 2.5 times or less.

More specifically, the amounts of the polymerization initiator and the coupling modifier represented by the formula (14) to be added may be adjusted so that the mole number of the polymerization initiator can be preferably 1.5 times or more, and more preferably 1.7 times or more of the mole number of the coupling modifier represented by the

formula (14).

Examples of the coupling modifier represented by the formula (15) include, but are not limited to, N-(1,3-dimethylbutylidene)-3-(triethoxysilyl)-1-propanamine, N-(1,3-dimethylbutylidene)-3-(trimethoxysilyl)-1-propanamine, N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, N-ethylidene-3-(trimethoxysilyl)-1-propanamine, N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-(triethoxysilyl)propan-1-amine, N-benzylidene-3-(trimethoxysilyl)propan-1-amine, N-benzylidene-3-methyl(dimethoxysilyl)propan-1-amine, N-benzylidene-3-methyl(diethoxysilyl)propan-1-amine, N-4-methylbenzylidene-3-(triethoxysilyl)propan-1-amine, N-4-methylbenzylidene-3-(trimethoxysilyl)propan-1-amine, N-4-methylbenzylidene-3-methyl(dimethoxysilyl)propan-1-amine, N-4-methylbenzylidene-3-methyl(diethoxysilyl)propan-1-amine, N-naphtylidene-3-(triethoxysilyl)propan-1-amine, N-naphtylidene-3-(trimethoxysilyl)propan-1-amine, N-naphtylidene-3-methyl(dimethoxysilyl)propan-1-amine, 1,1-(1,4-phenylene)bis(N-(3(triethoxysilyl)propyl)methanamine), 1,1-(1,4-phenylene)bis(N-(3(trimethoxysilyl)propyl)methanamine), 1,1-(1,4-phenylene)bis(N-(3methyl(dimethoxysilyl)propyl)methanamine), 1,1-(1,4-phenylene)bis(N-(3methyl(diethoxysilyl)propyl)methanamine), 2-methoxy-2-methyl-1-(benzylideneaminoethyl)-1-aza-2-silacyclopentane, 2-methoxy-2-methyl-1-(p-methoxybenzylideneaminoethyl)-1-aza-2-silacyclopentane, 2-ethoxy-2-methyl-1-(benzylideneaminoethyl)-1-aza-2-silacyclopentane, and 2-methoxy-2-methyl-1-(methylisobutylideneaminoethyl)-1-aza-2-silacyclopentane.

A reaction temperature, a reaction time, and other factors when reacting the coupling modifier having a nitrogen atom-containing group represented by the formula (15) with a polymerization active end are not especially limited, and the reaction is preferably performed at 0°C or more and 120°C or less for 30 seconds or more.

The amount of the coupling modifier represented by the formula (15) to be added corresponds to a total mole number of an alkoxy group ($OR^{14}$) bonded to a silyl group of the compound represented by the formula (15) of preferably 0.2 or more times and 2.5 or less times, more preferably 0.5 or more times and 2.0 or less times, and further preferably 1.0 or more times and 2.0 or less times of a mole number of the polymerization initiator to be added. From the viewpoint that the thus obtained conjugated diene-based polymer has a modification ratio, and a molecular weight respectively falling in more preferable ranges, the amount is preferably 0.2 times or more. Besides, from the viewpoint of suppressing deterioration of processability due to an excessively high branch number, the amount is preferably 2.5 times or less.

More specifically, the amounts of the polymerization initiator and the coupling modifier represented by the formula (15) to be added may be adjusted so that the mole number of the polymerization initiator can be preferably 1.5 times or more, and more preferably 1.7 times or more of the mole number of the coupling modifier represented by the formula (15).

Examples of the coupling modifier having a nitrogen atom-containing group represented by the formula (16) include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy,2-methyl-1-(3-trimethoxysilylpropyl)-1-aza-2-silacyclopentane, 2-ethoxy,2-ethyl-1-(3-triethoxysilylpropyl)-1-aza-2-silacyclopentane, 2-methoxy,2-methyl-1-(3-dimethoxymethylsilylpropyl)-1-aza-2-silacyclopentane, and 2-ethoxy,2-ethyl-1-(3-diethoxyethylsilylpropyl)-1-aza-2-silacyclopentane.

Among these, from the viewpoint of reactivity and interaction between the functional group of the coupling modifier having a nitrogen atom-containing group and the inorganic filler such as silica, and from the viewpoint of processability, one wherein i represents 2 and h represents 3 is preferred. Specifically, 2,2-dimethoxy-1-(3-trimethoxysilylpropyl)-1-aza-2-silacyclopentane and 2,2-diethoxy-1-(3-triethoxysilylpropyl)-1-aza-2-silacyclopentane are preferred.

A reaction temperature and a reaction time in the coupling step using the coupling modifier represented by the formula (16) are not especially limited, and the reaction is performed at preferably 0°C or more and 120°C or less, and for preferably 30 seconds or more.

The amount of the coupling modifier represented by the formula (16) to be added corresponds to a total mole number of an alkoxy group bonded to a silyl group of the compound represented by the formula (16) of preferably 0.2 or more times and 2.5 or less times, more preferably 0.5 or more times and 2.0 or less times, and further preferably 1.0 or more times and 2.0 or less times of a mole number of the polymerization initiator to be added. From the viewpoint that the thus obtained conjugated diene-based polymer has a modification ratio, a molecular weight, and a branch structure respectively falling in more preferable ranges, the amount is preferably 0.2 times or more. Besides, from the viewpoint of suppressing deterioration of processability due to an excessively high branch number, the amount is preferably 2.5 times

or less.

More specifically, the amounts of the polymerization initiator and the coupling modifier represented by the formula (16) to be added may be adjusted so that the mole number of the polymerization initiator can be preferably 3.0 times or more, and more preferably 4.0 times or more of the mole number of the coupling modifier represented by the formula (16).

Examples of the modifier having a nitrogen atom-containing group represented by the formula (17) include, but are not limited to, tris(3-trimethoxysilylpropyl)amine, tris(3-methyldimethoxysilylpropyl)amine, tris(3-triethoxysilylpropyl) amine, tris(3-methyldiethoxysilylpropyl)amine, tris(trimethoxysilylmethyl)amine, tris(2-trimethoxysilylethyl)amine, and tris(4-trimethoxysilylbutyl)amine.

Among these, from the viewpoint of reactivity and interaction between the functional group of the modifier and the inorganic filler such as silica, and from the viewpoint of processability, one wherein n, m, and l all represent 3 is preferred. Preferable specific examples include tris(3-trimethoxysilylpropyl)amine, and tris(3-triethoxysilylpropyl)amine.

A reaction temperature, a reaction time, and other factors when reacting the modifier having a nitrogen atom-containing group represented by the formula (17) with a polymerization active end are not especially limited, and the reaction is preferably performed at 0°C or more and 120°C or less for 30 seconds or more.

The total mole number of an alkoxy group bonded to a silyl group of the coupling modifier represented by the formula (17) is preferably 0.2 or more times and 2.0 or less times, more preferably 0.5 or more times and 2.0 or less times, and further preferably 0.6 or more times and 1.6 or less times of a mole number of lithium constituting the polymerization initiator described above. From the viewpoint of obtaining sufficient modification ratio, molecular weight, and branch structure in the conjugated diene-based polymer, it is preferably 0.2 times or more, and from the viewpoint of the cost of coupling modifier, as well as that it is preferable to couple the polymer ends with each other to obtain a branched polymer component for improving processability, it is preferably 2.0 times or less.

The more specific mole number of the polymerization initiator is preferably 4.0 times or more, and more preferably 5.0 times or more, with respect to the mole number of the modifier.

In the formula (18), A is preferably represented by any one of the following general formulas (i) to (iv).

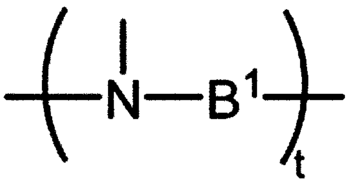

(i)

In the formula (i), $B^1$ represents a single bond or a hydrocarbon group having 1 to 20 carbon atoms, and t represents an integer of 1 to 10. $B^1$, if present in a plural number, is respectively independent.

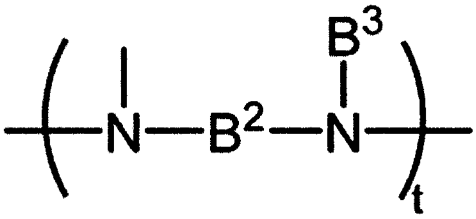

(ii)

In the formula (ii), $B^2$ represents a single bond or a hydrocarbon group having 1 to 20 carbon atoms, $B^3$ represents an alkyl group having 1 to 20 carbon atoms, and t represents an integer of 1 to 10. Each of $B^2$ and $B^3$, if present in a plural number, is respectively independent.

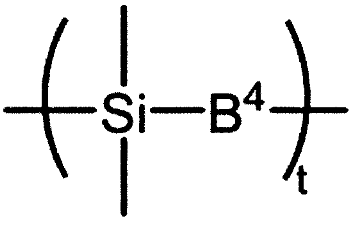

(iii)

In the formula (iii), $B^4$ represents a single bond or a hydrocarbon group having 1 to 20 carbon atoms, and t

represents an integer of 1 to 10. $B^4$, if present in a plural number, is respectively independent.

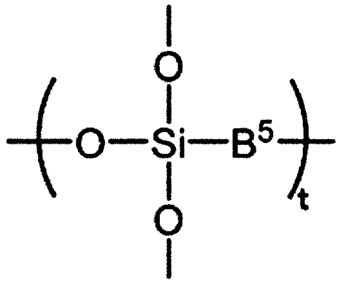

(i v)

In the formula (iv), $B^5$ represents a single bond or a hydrocarbon group having 1 to 20 carbon atoms, and t represents an integer of 1 to 10. $B^5$, if present in a plural number, is respectively independent.

Examples of the coupling modifier having a nitrogen atom-containing group when A in the formula (18) is represented by the formula (i) include, but are not limited to, tris(3-trimethoxysilylpropyl)amine, bis(3-trimethoxysilylpropyl)-[3-(2,2-dimethoxy-1-aza-2-silacyclopentane)propyl]amine, bis[3-(2,2-dimethoxy-1-aza-2-silacyclopentane)propyl]-(3-trimethoxysilylpropyl)amine, tris[3-(2,2-dimethoxy-1-aza-2-silacyclopentane)propyl]amine, tris(3-ethoxysilylpropyl)amine, bis(3-triethoxysilylpropyl)-[3-(2,2-diethoxy-1-aza-2-silacylopentane)propyl]amine, bis[3-(2,2-diethoxy-1-aza-2-silacyclopentane)propyl]-(3-triethoxysilylpropyl)amine, tris[3-(2,2-diethoxy-1-aza-2-silacyclopentane)propyl]amine, tetrakis(3-trimethoxysilylpropyl)-1,3-propanediamine, tris(3-trimethoxysilylpropyl)-[3-(2,2-dimethoxy-1-aza-2-silacyclopentane)propyl]-1,3-propanediamine, bis(3-trimethoxysilylpropyl)-bis[3-(2,2-dimethoxy-1-aza-2-silacyclopentane)propyl]-1,3-propanedimane, and tris[3-(2,2-dimethoxy-1-aza-2-silacyclopentane)propyl]-(3-trimethoxysilylpropyl)-1,3-propanediamine.

Examples also include tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-azacyclopentane)propyl]-1,3-propanediamine, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-propanediamine, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-propanediamine, tris[3-(2,2-dimethoxy-1-aza-2-silacyclopentane)propyl]-[3-(1-methoxy-2-trimethylsilyl-1-sila-2-azacyclopentane)propyl]-1,3-propanediamine, tetrakis(3-triethoxysilylpropyl)-1,3-propanediamine, tris(3-triethoxysilylpropyl)-[3-(2,2-diethoxy-1-aza-2-silacyclopentane)propyl]-1,3-propanediamine, bis(3-triethoxysilylpropyl)-bis[3-(2,2-diethoxy-1-aza-2-silacyclopentane)propyl]-1,3-propanediamine, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, bis [3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-propanediamine, tris[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)proypl]-1,3-bisaminomethycyclohexane, bis(3-trimethoxysilylpropyl)-bis[3-(2,2-dimethoxy-1-aza-2-silacyclopentane)propyl]-1,3-bisaminomethylcyclohexane, tris[3-(2,2-dimethoxy-1-aza-2-silacyclopentane)propyl]-(3-trimethoxysilylpropyl)-1,3-bisaminomethylcyclohexane, tetrakis[3-(2,2-dimethoxy-1-aza-2-silacyclopentane)propyl]-1,3-propanediamine, and tris(3-trimethoxysilylpropyl)-[3-(1-methoxy-2-trimethylsilyl-1-sila-2-azacyclopentane)propyl]-1,3-bisaminomethylcyclohexane.

Examples further include bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-bisaminomethylcyclohexane, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-biasminomethylcyclohexane, tris[3-(2,2-dimethoxy-1-aza-2-cyclopentane)propyl]-[3-(1-methoxy-2-trimethylsilyl-1-sila-2-azacyclopentane)propyl]-1,3-bisaminomethylcyclohexane, tetrakis(3-triethoxysilylpropyl)-1,3-propanediamine, tris(3-triethoxysilylpropyl)-[3-(2,2-diethoxy-1-aza-2-silacyclopentane)propyl]-1,3-bisaminomethylcyclohexane, bis(3-trimethoxysilylpropyl)-bis[3-(2,2-diethoxy-1-aza-2-silacyclopentane)propyl]-1,3-bisaminomethylcyclohexane, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-bisaminomethylcyclohexane, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-bisaminomethylcyclohexane, tris[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, tetrakis(3-trimethoxysilylpropyl)-1,6-hexamethylenediamine and pentakis(3-trimethoxysilylpropyl)-diethylenetriamine.

Examples of a coupling modifier having a nitrogen atom-containing group when A in the formula (18) is represented by the formula (ii) include, but are not limited to, tris(3-trimethoxysilylpropyl)-methyl-1,3-propanediamine, bis(2-trimethoxysilylpropyl)-[3-(2,2-dimethoxy-1-aza-2-silacyclopentane)propyl]-methyl-1,3-propanediamine, bis [3-(2,2-dimethoxy-1-aza-2-silacyclopentane)propyl]-(3-trimethoxysilylpropyl)-methyl-1,3-propanediamine, tris(3-triethoxysilylpropyl)-methyl-1,3-propanediamine, bis(2-triethoxysilylpropyl)-[3-(2,2-diethoxy-1-aza-2-silacyclopentane) propyl]-methyl-1,3-propanediamine, bis[3-(2,2-diethoxy-1-aza-2-silacyclopentane)propyl]-(3-triethoxysilylpropyl)-methyl-1,3-propanediamine, N1,N1'-(propane-1,3-diyl)bis(N1-methyl-N3,N3-bis(3-(trimethoxysilyl)propyl)-1,3-propanediamine) and N1-(3-(bis(3-(trimethoxysilyl)propyl)amino)propyl)-N1-methyl-N3-(3-(methyl(3-(trimethoxysilyl)propyl)amino)propyl)-N3-(3-(trimethoxysilyl)propyl)-1,3-propanediamine.

Examples of the coupling modifier having a nitrogen atom-containing group when A in the formula (18) is represented by the formula (iii) include, but are not limited to, tetrakis[3-(2,2-dimethoxy-1-aza-2-silacyclopentane)propyl] silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-2-trimethylsilyl-1-sila-2-azacyclopentane)propyl]silane, bis(3-trimethoxysilylpropyl)-bis[3-(2,2-dimethoxy-1-aza-2-silacyclopentane)propyl]silane, (3-trimethoxysilyl)-[3-(1-methoxy-2-trimethylsilyl-1-sila-2-azacyclopentane)-bis[3-(2,2-dimethoxy-1-aza-2-silacyclopentane)propyl]silane, bis[3-(1-methoxy-2-trimethylsilyl-1-sila-2-azacyclopentane)-bis[3-(2,2-dimethoxy-1-aza-2-silacyclopentane)propyl]silane, tris(3-trimethoxysilylpropyl)-[3-(2,2-dimethoxy-1-aza-2-silacyclopentane)propyl]silane, bis(3-trimethoxysilylpropyl)-[3-(1-methoxy-2-trimethylsilyl-1-sila-2-azacyclopentane)propyl]-[3-(2,2-dimethoxy-1-aza-2-silacyclopentane)propyl]silane, bis [3-(1-methoxy-2-trimethylsilyl-1-sila-2-azacyclopentane)propyl]-bis(3-trimethoxysilylpropyl)silane, and bis(3-trimethoxysilylpropyl)-bis[3-(1-methoxy-2-methyl-1-sila-2-azacyclopentane)propyl]silane.

Examples of the modifier having a nitrogen atom-containing group when A in the formula (18) is represented by formula (iv) include, but are not limited to, 3-tris[2-(2,2-dimethoxy-1-aza-2-silacyclopentane)ethoxy]silyl-1-(2,2-dimethoxy-1-aza-2-silacyclopentane)propane, and 3-tris[2-(2,2-dimethoxy-1-aza-2-silacyclopentane)ethoxy]silyl-1-trimethoxysilylpropane.

In the formula (18), A is preferably represented by the formula (i) or the formula (ii), and s represents 0.

Such coupling modifiers having a nitrogen atom-containing group tend to be easily available and also tend to be more excellent in abrasion resistance and a low hysteresis loss property when the conjugated diene-based polymer is formed into a vulcanizate. Examples of such a coupling modifier having a nitrogen atom-containing group include, but are not limited to, bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine.

In the formula (18), A is more preferably represented by the formula (i) or the formula (ii), and s represents 0, and in the formula (i) or the formula (ii), t represents an integer of 2 to 10.

This provides a tendency that abrasion resistance and a low hysteresis loss property when vulcanized are more excellent.

Examples of such a coupling modifier having a nitrogen atom-containing group include, but are not limited to, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and $N^1$-(3-(bis(3-(trimethoxysilyl) propyl)amino)propyl)-$N^1$-methyl-$N^3$-(3-(methyl(3-(trimethoxysilyl)propyl)amino)propyl)-$N^3$-(3-(trimethoxysilyl)propyl)-1,3-propanediamine.

The amount of the compound represented by the formula (18) to be added as the coupling modifier having a nitrogen atom-containing group can be adjusted so that the mole number of the conjugated diene-based polymer and the mole number of the coupling modifier react in a desired stoichiometric ratio, which tends to achieve a desired highly branched star structure.

It is preferable that the specific mole number of the polymerization initiator is preferably 5.0 times or more, and more preferably 6.0 times or more, with respect to the mole number of the coupling modifier.

In this case, the number of functional groups of the coupling modifier in the formula (18) ($(o-1) \times q + p \times r + s$) is preferably an integer of 5 to 10, and more preferably an integer of 6 to 10.

The method for producing a conjugated diene-based polymer of the present embodiment may include, after the step of adding a coupling modifier, and/or before the step of adding a coupling modifier, a condensation reaction step of causing a condensation reaction by adding a condensation accelerator.

The method for producing a conjugated diene-based polymer of the present embodiment may include a modifying step of further using a modifier except for the coupling modifier described above.

In the method for producing a conjugated diene-based polymer of the present embodiment, two coupling modifiers may be added, or three or more coupling modifiers may be added in the step of adding a coupling modifier.
In the case of adding two coupling modifiers, as the combination of coupling modifiers, it is preferable to use a combination of coupling modifiers with different numbers of functional groups.
Also, in the case of adding three or more coupling modifiers, it is preferable to include a combination of coupling modifiers with different numbers of functional groups.
In the step of adding a coupling modifier, it is preferable to add two coupling modifiers with different numbers of functional groups.
Examples of the combination of two coupling modifiers with different numbers of functional groups include a combination of a bifunctional or lower coupling modifier and a trifunctional or higher coupling modifier. A plurality of coupling modifiers are preferably added at the same time, and may or may not be mixed in advance.
The method for producing the conjugated diene-based polymer of the present embodiment may include a hydrogenating step of hydrogenating a conjugated diene portion. A method for hydrogenating a conjugated diene portion is not especially limited, and any of known methods can be employed.
As a preferable hydrogenating step, a method for hydrogenating a conjugated diene portion by blowing gaseous hydrogen into a polymer solution in the presence of a catalyst can be employed.
The catalyst to be used is not especially limited, and examples include heterogeneous catalysts such as a catalyst containing a noble metal supported on a porous inorganic substance; and homogenous catalysts such as a catalyst obtained by reacting a solubilized salt of nickel, cobalt or the like with organic aluminum or the like, and a catalyst using metallocene such as titanocene.
Among these catalysts, from the viewpoint that a milder hydrogenation condition can be selected, a titanocene catalyst is preferred. In addition, an example of a method for hydrogenating an aromatic group includes a method using a noble metal-supported catalyst.
Alternatively, an example of a hydrogenating step not using gaseous hydrogen includes a method in which a hydrogenation catalyst and a polymer solution are brought into contact with each other. Such a hydrogenation catalyst is not especially limited, and examples include (1) a supported heterogeneous hydrogenation catalyst obtained by supporting a metal such as Ni, Pt, Pd or Ru on carbon, silica, alumina or diatomite, (2) what is called a Ziegler catalyst using an organic acid salt of Ni, Co, Fe, Cr or the like, or a transition metal salt such as acetylacetone salt, and a reducing agent such as organic aluminum, and (3) what is called an organic metal complex such as an organic metal compound of Ti, Ru, Rh, Zr of the like. Furthermore, other examples of the hydrogenation catalyst are not especially limited but include known hydrogenation catalysts described in, for example, Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, Japanese Patent Publication No. 2-9041, and Japanese Patent Laid-Open No. 8-109219. A preferable hydrogenation catalyst is a reaction mixture of a titanocene compound and a reducing organic metal compound.
In the method for producing a conjugated diene-based polymer of the present embodiment, after the coupling step with a coupling modifier, a deactivator, and/or a neutralizer may be added if necessary to the resultant polymer solution.
Examples of the deactivator include, but are not limited to, water, and alcohols such as methanol, ethanol and isopropanol.
Examples of the neutralizer include, but are not limited to, carboxylic acids such as stearic acid, oleic acid and versatic acid (a mixture of highly branched carboxylic acids having 9 to 11 carbon atoms, and containing a principal component having 10 carbon atoms), an aqueous solution of an inorganic acid, and a carbon dioxide gas.
The method for producing a conjugated diene-based polymer of the present embodiment may include a step of obtaining the resultant conjugated diene-based polymer from the polymer solution. As a method for this, any of known methods can be employed, and for example, the following methods can be employed.
Namely, examples of the method include a method in which the polymer is filtered after separating the solvent by steam stripping or the like, and the resultant is dehydrated and dried to obtain the polymer, a method in which the solution is concentrated in a flushing tank, and the resultant is devolatilized by using a bent extruder or the like to obtain the polymer, and a method in which the solution is directly devolatilized by using a drum dryer or the like to obtain the polymer.

[Rubber Composition]

A rubber composition of the present embodiment contains a rubber component containing the conjugated diene-based polymer of the present embodiment described above.
When the conjugated diene-based polymer of the present embodiment is compounded in a tire, the oil component contained in a bale formed body is also inevitably contained in the tire. When the amount of oil extension is reduced, the oil component to be contained in the tire also decreases, which in turn has the merit of increasing the

flexibility in composition when designing the tire.

To the conjugated diene-based polymer of the present embodiment and a sheet-like or block-like formed body (also referred to as bale) thereof, a softener component described later may be added. In the above formed body (bale), from the viewpoint of improving the formulation flexibility and designing when producing the rubber composition, the rubber softener is preferably 2 parts by mass or less, more preferably 1.5 parts by mass or less, further preferably 1 part by mass or less, still further preferably less than 1 part by mass, with respect to 100 parts by mass of the conjugated diene-based polymer, and it is most preferable that the softener is not added.

The rubber softener is not especially limited, and examples include an extender oil, a liquid rubber, and a resin.

It is preferable to provide the conjugated diene-based polymer and a sheet-like or block-like formed body obtained therefrom in a state where no rubber softener is added, from the viewpoint of improving the formulation flexibility and designing when producing a rubber composition using the formed body.

In general, there is an upper limit on the total amount of the rubber softener with respect to the entire rubber composition. However, when a rubber softener is added to a sheet-like or block-like formed body of the conjugated diene-based polymer, a rubber composition produced by compounding that formed body also contains the rubber softener, which thus puts pressure on the total amount of the rubber softener with respect to the entire rubber composition and restricts the flexibility in the type and amount of a rubber softener to be added that needs to be compounded when producing the rubber composition. From the viewpoint of improving the flexibility in selecting the type and amount of a rubber softener to be compounded in accordance with the performance required for the rubber composition, it is preferable to reduce the amount of the softener to be added to a sheet-like or block-like formed body of the conjugated diene-based polymer.

Although not especially limited, for example, by reducing the extender oil to be added to the conjugated diene-based polymer of the present embodiment and a sheet-like or block-like formed body obtained therefrom, it is possible to compound a resin such as extender oil in a larger amount when producing a rubber composition using them. This is preferred from the viewpoint of further improving the fracture strength of the rubber composition and a vulcanizate obtained therefrom.

From the viewpoint of preventing gel formation, and from the viewpoint of improving stability in processing, the rubber composition using the conjugated diene-based polymer of the present embodiment and a sheet-like or block-like formed body obtained therefrom may further contain a rubber stabilizer.

The rubber stabilizer is not limited to the following, any of known ones can be used, and examples include antioxidants such as 2,6-di-tert-butyl-4-hydroxytoluene (hereinafter also referred to as "BHT"), n-octadecyl-3-(4'-hydroxy-3',5'-di-tert-butylphenol)propionate, and 2-methyl-4,6-bis[(octylthio)methyl]phenol.

A bale of the present embodiment contains 100 parts by mass of the modified conjugated diene-based polymer of the present embodiment and 2 parts by mass or less of a softener component. Also, the bale of the present embodiment may contain 100 parts by mass of the modified conjugated diene-based polymer of the present embodiment and less than 1 part by mass of a softener component.

A rubber composition of the present embodiment contains 100 parts by mass of a rubber component and 5.0 parts by mass or more and 150 parts by mass or less of a filler, and the rubber component contains 10 parts by mass or more of the modified conjugated diene-based polymer of the present embodiment or the bale of the present embodiment with respect to 100 parts by mass of the total amount of the rubber component.

The rubber composition of the present embodiment contains 100 parts by mass of a rubber component, and 5.0 parts by mass or more and 150 parts by mass or less of a filler.

The rubber component preferably contains 10 parts by mass or more of the conjugated diene-based polymer of the present embodiment with respect to 100 parts by mass of the total amount of the rubber component.

When the filler is dispersed in the rubber component containing the conjugated diene-based polymer of the present embodiment, a rubber composition further excellent in processability in vulcanization, and further excellent in a low hysteresis loss property, fracture performance, and abrasion resistance of a vulcanizate obtained therefrom can be obtained. When the rubber component contains the conjugated diene-based polymer of the present embodiment at a prescribed rate, low fuel composition performance, processability, and abrasion resistance are further improved.

Examples of the filler include, but are not limited to, a silica-based inorganic filler, carbon black, a metal oxide, and a metal hydroxide. Among these, a silica-based inorganic filler is preferred. In particular, when the rubber composition of the present embodiment is used in a tire, a vehicle component such as an anti-vibration rubber, or a vulcanized rubber for shoes or the like, a silica-based inorganic filler is particularly preferably contained. One of these fillers may be singly used, or two or more of these may be used together.

The silica-based inorganic filler is not especially limited, any of known fillers can be used, a solid particle containing $SiO_2$ or $Si_3Al$ as a constituent unit is preferred, and a solid particle containing $SiO_2$ or $Si_3Al$ as a principal component of a constituent unit is more preferred. Here, the principal component refers to a component contained in the silica-based inorganic filler in an amount of over 50% by mass, preferably 70% by mass or more, and more preferably 80% by mass or more.

Specific examples of the silica-based inorganic filler include, but are not limited to, silica, clay, talc, mica,

diatomite, wollastonite, montmorillonite, zeolite and inorganic fibrous substances such as glass fiber. Alternatively, a silica-based inorganic filler having a hydrophobized surface, and a mixture of a silica-based inorganic filler and an inorganic filler except for silica may be used. Among these, from the viewpoint of further improving strength and abrasion resistance of the rubber composition, silica or glass fiber is preferred, and silica is more preferred. The silica is not especially limited, and examples include dry silica, wet silica and synthetic silicate silica. Among these silica, wet silica is preferred from the viewpoint of further improving fracture strength of the resultant rubber composition.

From the viewpoint of more definitely obtaining a rubber composition having practically good abrasion resistance and fracture strength, a nitrogen adsorption specific surface area, obtained by the BET adsorption method, of the silica-based inorganic filler is preferably 100 $m^2/g$ or more and 300 $m^2/g$ or less, and more preferably 170 $m^2/g$ or more and 250 $m^2/g$ or less. Besides, a silica-based inorganic filler having a comparatively small specific surface area (for example, a specific surface area of less than 200 $m^2/g$) and a silica-based inorganic filler having a comparatively large specific surface area (for example, 200 $m^2/g$ or more) can be used in combination if necessary. In the present embodiment, when a silica-based inorganic filler having a comparatively large specific surface area (of, for example, 200 $m^2/g$ or more) is used in particular, the conjugated diene-based polymer further improves dispersibility of silica. As a result, the resultant rubber composition tends to have further excellent abrasion resistance, fracture strength, and low hysteresis loss property.

Examples of carbon black include, but are not limited to, carbon blacks of SRF, FEF, HAF, ISAF and SAF classes. Among these, a carbon black having a nitrogen adsorption specific surface area of 50 $m^2/g$ or more and dibutyl phthalate (DBP) oil absorption of 80 mL/100 g or less is preferred.

The metal oxide is not especially limited as long as it is a solid particle containing a principal component of a constituent unit represented by chemical formula $M_xO_y$ (wherein M represents a metal atom, and x and y each independently represent an integer of 1 to 6), and examples include alumina, titanium oxide, magnesium oxide, and zinc oxide.

Examples of the metal hydroxide include, but are not limited to, aluminum hydroxide, magnesium hydroxide, and zirconium hydroxide.

A content of the filler in the rubber composition of the present embodiment is 5.0 parts by mass or more and 150 parts by mass, preferably 20 parts by mass or more and 100 parts by mass or less, and more preferably 30 parts by mass or more and 90 parts by mass or less with respect to 100 parts by mass of the rubber component. When the filler is contained in the above-described range, there is a tendency that the rubber composition is further excellent in processability in vulcanization, and is further excellent in a low hysteresis loss property, fracture performance, and abrasion resistance of a vulcanizate obtained therefrom.

From the viewpoint of definitely imparting performances required in use as a tire or the like such as dry grip performance and conductivity, the rubber composition of the present embodiment preferably contains 0.5 parts by mass or more and 100 parts by mass or less of carbon black with respect to 100 parts by mass of the rubber component containing the conjugated diene-based polymer. From a similar viewpoint, the rubber composition contains carbon black in an amount of more preferably 3.0 parts by mass or more and 100 parts by mass or less, and further preferably 5.0 parts by mass or more and 50 parts by mass or less with respect to 100 parts by mass of the rubber component containing the conjugated diene-based polymer.

The rubber composition of the present embodiment may further contain a silane coupling agent. When the rubber composition contains a silane coupling agent, interaction between the rubber component and the filler can be further improved.

Preferable examples of the silane coupling agent include, but are not limited to, a compound containing, in one molecule, a sulfur bond portion and an alkoxysilyl group or silanol group portion. Examples of such a compound include, but are not limited to, bis-[3-(triethoxysilyl)-propyl]-tetrasulfide, bis-[3-(triethoxysilyl)-propyl]-disulfide and bis-[2-(triethoxysilyl)-ethyl]-tetrasulfide.

In the rubber composition of the present embodiment, a content of the silane coupling agent is preferably 0.1 parts by mass or more and 30 parts by mass or less, more preferably 0.5 parts by mass or more and 20 parts by mass or less, and further preferably 1.0 part by mass or more and 15 parts by mass or less with respect to 100 parts by mass of the filler. When the content of the silane coupling agent falls in the above-described range, there is a tendency that the interaction between the rubber component and the filler can be further improved.

The rubber composition of the present embodiment may contain, as the rubber component, a rubber-like polymer different from the conjugated diene-based polymer of the present embodiment (hereinafter simply referred to as the "rubber-like polymer"). The conjugated diene-based polymer of the present embodiment and the aforementioned rubber-like polymer are collectively referred to as "rubber component".

Examples of the rubber-like polymer include, but are not limited to, a conjugated diene-based polymer and a hydrogenated product thereof, a random copolymer of a conjugated diene-based compound and a vinyl aromatic compound, and a hydrogenated product thereof, a block copolymer of a conjugated diene-based compound and a vinyl aromatic compound, and a hydrogenated product thereof, a non-diene-based polymer, and a natural rubber.

Examples of the rubber-like polymer include, but are not limited to, a butadiene rubber and a hydrogenated

product thereof, an isoprene rubber and a hydrogenated product thereof, styrene-based elastomers such as a styrene-butadiene rubber and a hydrogenated product thereof, a styrene-butadiene block copolymer and a hydrogenated product thereof, and a styrene-isoprene block copolymer and a hydrogenated product thereof, and an acrylonitrile-butadiene rubber and a hydrogenated product thereof.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an $\alpha,\beta$-unsaturated nitrile-acrylic acid ester-conjugated diene copolymer rubber, a urethane rubber and a polysulfide rubber.

Examples of the natural rubber include, but are not limited to, smoked sheets of RSS Nos. 3 to 5, SMR and epoxidized natural rubber.

The rubber-like polymer may be in the form of a modified rubber imparted with a functional group having polarity such as a hydroxyl group or an amino group. When the rubber composition of the present embodiment is used in a tire, the rubber-like polymer is preferably one or more selected from the group consisting of a butadiene rubber, an isoprene rubber, a styrene-butadiene rubber, a natural rubber, and a butyl rubber.

The weight average molecular weight of the rubber-like polymer is preferably 2,000 or more and 2,000,000 or less, and more preferably 5,000 or more and 1,500,000 or less from the viewpoints of abrasion resistance, fracture strength, and balance between a low hysteresis loss property and processability of the resultant rubber composition. As the rubber-like polymer, a low molecular weight rubber-like polymer, that is, what is called a liquid rubber, can be used. One of these rubber-like polymers may be singly used, or two or more of these may be used together.

When the rubber composition of the present embodiment contains the conjugated diene-based polymer and the rubber-like polymer, a content ratio (in a mass ratio) of the conjugated diene-based polymer to the rubber-like polymer is, in terms of (the conjugated diene-based polymer/the rubber-like polymer), preferably 10/90 or more and 100/0 or less, more preferably 20/80 or more and 90/10 or less, and further preferably 30/70 or more and 80/20 or less.

In other words, the rubber component contains, with respect to 100 parts by mass of the total amount of the rubber component, preferably 10 parts by mass or more and 100 parts by mass or less, more preferably 20 parts by mass or more and 90 parts by mass or less, and further preferably 30 parts by mass or more and 80 parts by mass or less of the conjugated diene-based polymer of the present embodiment. When the ratio of the conjugated diene-based polymer contained in the rubber component falls in the above-described range, a vulcanizate of the rubber composition tends to be further excellent in abrasion resistance and a low hysteresis loss property.

The rubber composition of the present embodiment includes a softener component (for example, a rubber softener) in addition to the rubber component from the viewpoint of further improving the processability.

The softener component is not especially limited, and examples include a liquid rubber, a resin, and an extender oil.

The liquid rubber is not especially limited, and examples include liquid polybutadiene, and liquid styrene-butadiene rubber.

When a liquid rubber is used as the softener component, not only the above-described effect can be attained, but also the glass transition temperature of the resultant conjugated diene-based polymer composition can be lowered, and therefore, abrasion resistance, a low hysteresis loss property, and a low temperature characteristic of a vulcanizate obtained therefrom tend to be further improved.

Examples of the resin include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenol-formaldehyde resin, a xylene-formaldehyde resin, a monoolefin oligomer, a diolefin oligomer, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol. One of these resins may be singly used, or two or more of these may be used together. When such a resin is hydrogenated, all unsaturated groups may be hydrogenated, or some may be left not hydrogenated.

When a resin is used as the softener component, not only the above-described effect can be attained, but also fracture strength of a vulcanizate of the conjugated diene-based polymer composition tends to be further improved.

To the rubber composition of the present embodiment, it is suitable to add a resin as the softener component in addition to the rubber component from the viewpoint of further improving the fracture strength of a vulcanizate obtained therefrom.

To the rubber composition of the present embodiment, a softener component may be added in addition to the rubber component from the viewpoint of further improving the processability, and a mineral oil, or a liquid or low molecular weight synthetic softener is suitable.

Examples of the extender oil include an aroma oil, a naphthenic oil and a paraffin oil. Among these, from the

viewpoint of environmental safety, and from the viewpoint of oil bleeding prevention and improvement of wet grip performance, an aroma-alternative oil containing 3% by mass or less of a polycyclic aromatic (PCA) component according to the IP 346 is preferred. The aroma-alternative oil is not especially limited, and examples include TDAE (Threated Distillate Aromatic Extracts), and MES (Mild Extraction Solvate) mentioned in Kautschuk Gummi Kunststoffe 52 (12) 799 (1999), and RAE (Residual Aromatic Extracts).

A mineral oil-based rubber softener, which is used for softening, expanding and improving processability of a rubber and is designated as a process oil or an extender oil, is a mixture of an aromatic ring, a naphthene ring and a paraffin chain. In particular, one in which the number of carbon atoms of the paraffin chain is 50% or more is designated as a paraffin-based softener, one in which the number of carbon atoms of the naphthene ring is 30% or more and 45% or less is designated as a naphthene-based softener, and one in which the number of carbon atoms belonging to aromatic carbons exceeds 30% of the number of all carbon atoms is designated as an aromatic-based softener. The rubber composition of the present embodiment preferably contains, as a rubber softener, one having an appropriate aromatic content. When such a rubber softener is contained, compatibility with the conjugated diene-based polymer is further improved.

The content of the softener component in the rubber composition of the present embodiment is expressed as a sum of the amount of the softener component precedently added to the conjugated diene-based polymer of the present embodiment and the above-described rubber-like polymer, and the amount of the softener component added in forming the rubber composition.

In the rubber composition of the present embodiment, the content of the softener component is preferably 0 part by mass or more and 100 parts by mass or less, more preferably 10 parts by mass or more and 90 parts by mass or less, and further preferably 30 parts by mass or more and 90 parts by mass or less with respect to 100 parts by mass of the rubber component. When the content of the rubber softener is 100 parts by mass or less with respect to 100 parts by mass of rubber component, bleeding out can be suppressed, and the stickiness of the surface of the rubber composition can be further suppressed.

As for a method for producing the rubber composition of the present embodiment, there is no particular limitation on the method for mixing the conjugated diene-based polymer of the present embodiment, a rubber-like polymer other than the conjugated diene-based polymer of the present embodiment, a filler, a silane coupling agent, if necessary, a rubber softener, and the like. Examples thereof include a melt-kneading method using a general mixer such as an open roll, a Banbury mixer, a kneader, a single shaft screw extruder, a twin shaft screw extruder, or a multi-shaft screw extruder, and a method in which the respective components are melted and mixed followed by removal of a solvent by heating. Among these methods, the melt-kneading method using a roll, a Banbury mixer, a kneader or an extruder is preferred from the viewpoint of productivity and high kneadability. Besides, the rubber component, the filler, the silane coupling agent, and the additive may be kneaded all together, or may be mixed dividedly in plural times.

The rubber composition of the present embodiment may be in the form of a vulcanizate obtained by vulcanization with a vulcanizing agent. Examples of the vulcanizing agent include, but are not limited to, radical generators such as organic peroxides and azo compounds, oxime compounds, nitroso compounds, polyamine compounds, sulfur and sulfur compounds. The sulfur compounds encompass sulfur monochloride, sulfur dichloride, disulfide compounds, high molecular weight polysulfide compounds and the like.

In the rubber composition of the present embodiment, the content of the vulcanizing agent is preferably 0.01 parts by mass or more and 20 parts by mass or less, and more preferably 0.1 parts by mass or more and 15 parts by mass or less with respect to 100 parts by mass of the rubber component. As a vulcanization method, any of conventionally known methods can be employed. A vulcanization temperature is preferably 120°C or more and 200°C or less, and more preferably 140°C or more and 180°C or less.

For the vulcanization of the rubber composition, a vulcanization accelerator and/or a vulcanization aid may be used if necessary. As the vulcanization accelerator, any of conventionally known materials can be used, and examples include, but are not limited to, sulphenamide-based, guanidine-based, thiuram-based, aldehyde-amine-based, aldehyde-ammonia-based, thiazole-based, thiourea-based and dithiocarbamate-based vulcanization accelerators.

Besides, examples of the vulcanization aid include, but are not limited to, zinc oxide and stearic acid.

The contents of the vulcanization accelerator and the vulcanization aid are respectively preferably 0.01 parts by mass or more and 20 parts by mass or less, and more preferably 0.1 parts by mass or more and 15 parts by mass or less with respect to 100 parts by mass of the rubber component.

The rubber composition of the present embodiment may contain, as long as the effects of the present embodiment are not impaired, various additives such as another softener and filler excluding those described above, a heat resistance stabilizer, an antistatic agent, a weathering stabilizer, an anti-aging agent, a colorant and a lubricant. As the softener, any of known softeners can be used. The filler is not especially limited, and specific examples include calcium carbonate, magnesium carbonate, aluminum sulfate and barium sulfate. As the heat resistance stabilizer, the antistatic agent, the weathering stabilizer, the anti-aging agent, the colorant and the lubricant, any of known materials can be respectively used.

[Tire]

A tire of the present embodiment contains the rubber composition of the present embodiment described above.

Examples of the tire of the present embodiment include, but are not limited to, various tires such as a fuel-efficient tire, an all-season tire, a high-performance tire and a studless tire, and the rubber composition of the present embodiment can be suitably used in various tire portions such as a tread, a carcass, a sidewall and a bead.

It is noted that each numerical range described above as a preferable range or the like may be a numerical range obtained by arbitrarily combining any one of values described as the upper limits and any one of values described as the lower limits even when not particularly stated.

## Examples

The present embodiment will now be described in more detail with reference to specific examples and comparative examples, and it is noted that the present invention is not limited to the following examples and comparative examples at all.

Various physical properties of the examples and comparative examples were measured by the following methods.

(Physical Property 1) Average Molecular Weight measured by GPC Measurement

An unmodified conjugated diene-based polymer and a modified conjugated diene-based polymer were used as a sample for performing GPC measurement using a GPC measurement apparatus (trade name "HLC-8320GPC" manufactured by Tosoh Corporation) including a series of three columns using a polystyrene-based gel as a filler, and an RI detector (trade name "HLC8020" manufactured by Tosoh Corporation). On the basis of a calibration curve obtained using standard polystyrene, a weight average molecular weight (Mw), a number average molecular weight (Mn) and a molecular weight distribution (Mw/Mn) were obtained.

As an eluent, a 5 mmol/L triethylamine-THF (tetrahydrofuran) solution was used. As the columns, trade name "TSKguardcolumn Super MP(HZ)-H" manufactured by Tosoh Corporation connected, as a guard column at a previous stage, to a series of three columns of trade name "TSKgel Super Multipore HZ-H" manufactured by Tosoh Corporation were used.

Ten (10) mg of a sample for the measurement was dissolved in 10 mL of THF to obtain a measurement solution, and 10 μL of the measurement solution was injected into the GPC measurement apparatus for performing the measurement under conditions of an oven temperature of 40°C and a THF flow rate of 0.35 mL/min.

Measurement results thus obtained were defined as the respective average molecular weights of the sample.

(Physical Property 2) Mooney Viscosity of Polymer

An unmodified conjugated diene-based polymer and a modified conjugated diene-based polymer were used as a sample to measure a Mooney viscosity by using a Mooney viscometer (trade name "VR1132" manufactured by Ueshima Seisakusho Co., Ltd.) in accordance with ISO 289 with an L-type rotor used.

A measurement temperature was 110°C when an unmodified conjugated diene-based polymer was used as a sample. A measurement temperature was 100°C when a modified conjugated diene-based polymer was used as a sample.

After a sample was preheated at the test temperature for 1 minute, the rotor was rotated at 2 rpm, and a torque was measured 4 minutes after to measure a Mooney viscosity ($ML_{(1+4)}$).

(Physical Property 3) Mooney Stress Relaxation

An unmodified conjugated diene-based polymer and a modified conjugated diene-based polymer were used as samples to measure a Mooney viscosity by using a Mooney viscometer (trade name "VR1132" manufactured by Ueshima Seisakusho Co., Ltd.) in accordance with ISO 289 with an L-type rotor used. Then, the rotation of the rotor was immediately stopped, the torque was recorded in Mooney units every 0.1 second from 1.6 seconds to 5 seconds after the stoppage, the slope of the straight line obtained by log-log plotting both torque and time (seconds) was determined, and its absolute value was used as a Mooney stress relaxation (MSR).

A measurement temperature was 110°C when an unmodified conjugated diene-based polymer was used as a sample. A measurement temperature was 100°C when a modified conjugated diene-based polymer was used as a sample.

(Physical Properties 4 and 8) Branch Number (Bn) and Absolute Molecular Weight

A modified conjugated diene-based polymer was used as a sample, and a GPC measurement apparatus (trade name "GPCmax VE-2001" manufactured by Malvern Panalytical Ltd.) including a series of three columns using a polystyrene-based gel as a filler, and three detectors including a light scattering detector, an RI detector, and a viscosity detector (trade name "TDA305" manufactured by Malvern Panalytical Ltd.) connected in the stated order were used to perform measurement. Based on standard polystyrene, an absolute molecular weight was obtained from results obtained by using the light scattering detector and the RI detector, and an intrinsic viscosity was obtained from results obtained by using the RI detector and the viscosity detector.

A straight-chain polymer was assumed to follow an intrinsic viscosity $[\eta_0] = 10^{-3.498}M^{0.711}$, and a contracting factor (g') was calculated as a ratio of an intrinsic viscosity corresponding to each molecular weight. In the equation, M represents an absolute molecular weight.

As an eluent, THF containing 5 mmol/L of triethylamine was used.

As the columns, columns of trade names "TSKgel G4000HXL", "TSKgel G5000HXL" and "TSKgel G6000HXL" manufactured by Tosoh Corporation were connected to be used.

Twenty (20) mg of a sample for the measurement was dissolved in 10 mL of THF to obtain a measurement solution, and 100 μL of the measurement solution was injected into the GPC measurement apparatus for performing the measurement under conditions of an oven temperature of 40°C and a THF flow rate of 1 mL/min.

By the above measurement, an absolute molecular weight distribution curve and a branch number distribution curve of the modified conjugated diene-based polymer were obtained, and a branch number (Bn), defined as $g' = 6Bn/\{(Bn + 1)(Bn + 2)\}$, was calculated using a contracting factor (g').

(Physical Property 5) Modification Ratio

A modification ratio of a modified conjugated diene-based polymer was measured by column adsorption GPC as follows.

Column adsorption GPC is a method for obtaining a modification ratio of a modified polymer by utilizing a characteristic that a modified basic polymer component of the modified conjugated diene-based polymer easily adsorbs onto a GPC column using a silica-based gel as a filler.

The modified conjugated diene-based polymer was used as a sample to measure a sample solution containing the sample and low molecular weight internal standard polystyrene with a polystyrene-based column. Besides, the same sample solution was measured with a silica-based column. A difference between a chromatogram obtained by the measurement with the polystyrene-based column and a chromatogram obtained by the measurement with the silica-based column was obtained to measure the amount of adsorption onto the silica-based column of the modified conjugated diene-based polymer, and thus, a modification ratio was obtained.

<Preparation of Sample Solution>:

Ten (10) mg of a sample and 5 mg of standard polystyrene were dissolved in 10 mL of THF to obtain a sample solution. A modification ratio of a modified conjugated diene-based polymer was measured under the following measurement conditions:

<GPC Measurement Conditions in Using Polystyrene-based Column>

The GPC measurement was performed using an apparatus of trade name "HLC-8320GPC" manufactured by Tosoh Corporation and a reflex index (RI) detector (trade name "HLC8020" manufactured by Tosoh Corporation).

A 5 mmol/L triethylamine-THF solution was used as an eluent, and 10 μL of a sample solution was injected into the GPC apparatus to obtain a chromatogram under conditions of a column oven temperature of 40°C and a THF flow rate of 0.35 mL/min.

As the columns, a series of three columns of trade name "TSKgel Super Multipore HZ-H" manufactured by Tosoh Corporation were connected with a column of trade name "TSKguardcolumn SuperMP(HZ)-H" manufactured by Tosoh Corporation connected as a guard column at a previous stage to be used.

<GPC Measurement Conditions Using Silica-based Column>

The GPC measurement was performed using an apparatus of trade name "HLC-8320GPC" manufactured by Tosoh Corporation and an RI detector (trade name "HLC8020" manufactured by Tosoh Corporation).

THF was used as an eluent, and 50 μL of a sample solution was injected into the GPC apparatus to obtain a

chromatogram under conditions of a column oven temperature of 40°C and a THF flow rate of 0.5 mL/min.

A series of columns of trade names "Zorbax PSM-1000S", "PSM-300S" and "PSM-60S" manufactured by Agilent Technologies Japan Ltd., and a guard column of trade name "DIOL 4.6 x 12.5 mm 5 micron" connected at a previous stage were used.

Calculation method for modification ratio:

In the chromatogram obtained by using the polystyrene-based column, assuming that the whole peak area was 100, a peak area P1 of the sample and a peak area P2 of standard polystyrene were obtained. Besides, in the chromatogram obtained by using the silica-based column, assuming that the whole peak area was 100, a peak area P3 of the sample and that a peak area P4 of standard polystyrene were obtained. A modification ratio (%) was obtained in accordance with the following equation:

$$\text{Modification ratio (\%)} = [1 - (P2 \times P3)/(P1 \times P4)] \times 100$$

wherein P1 + P2 = P3 + P4 = 100

(Physical Property 6) Amount of Bound Vinyl Aromatic Monomer Unit (Amount of Bound Styrene)

A modified conjugated diene-based polymer was used as a sample, and 100 mg of the sample was dissolved in 100 mL of chloroform to obtain a measurement sample.

Each sample was measured with a spectrophotometer (trade name "UV-2450" manufactured by Shimadzu Corporation) to obtain an absorption spectrum. Based on absorbance of UV light (in the vicinity of 254 nm) derived from a phenyl group of styrene, the amount of bound styrene (% by mass) in 100% by mass of the modified conjugated diene-based polymer was calculated.

(Physical Property 7) Amount of Vinyl Bond in Bound Conjugated Diene (Amount of 1,2-Vinyl Bond in Bound Butadiene)

A modified conjugated diene-based polymer was used as a sample, and 50 mg of the sample was dissolved in 10 mL of carbon disulfide to obtain a measurement sample.

An infrared spectrum of each sample was measured in a range of 600 to 1,000 $cm^{-1}$ with Fourier transform infrared spectrophotometer (trade name "FT-IR230" manufactured by JASCO Corporation).

In accordance with the Hampton method (method described by R. R. Hampton, Analytical Chemistry 21, 923 (1949)), an amount of 1,2-vinyl bond (mol%) in bound butadiene was obtained based on absorbance at a prescribed wavelength.

(Physical Property 9) Glass Transition Temperature

A modified conjugated diene-based polymer was used as a sample to perform DSC measurement in accordance with ISO 22768: 2006 with a differential scanning calorimeter (trade name "DSC 3200S" manufactured by Mac Science). A DSC curve was recorded with the temperature increased from -100°C at 20°C/min under a flow of 50 mL/min of helium, and a peak top (infection point) in a DSC differential curve thus obtained was defined as the glass transition temperature.

(Physical Property 10) Content of Antioxidant (Stabilizer) (Stabilizer Content)

The content of the antioxidant in the modified conjugated diene-based polymer was measured by an HPLC analysis method as follows.

The HPLC analysis method is a method that involves using LC1260 Infinity or an equivalent instrument manufactured by Agilent Technologies with a column Eclipse Plus C18 1.8 μm, 4.6 × 100 mm manufactured by Agilent, adding 5.0 μL of a sample solution whose concentration has been adjusted to 100 mg/10 mL (using a solvent of THF:MeOH = 1:1), setting the column temperature to 35°C and the flow rate to 2.5 mL/min, changing the composition of the developing solvent using THF (tetrahydrofuran) and methanol according to a time table described later, performing separation, and analyzing the UV detection intensity, thereby determining the amount of antioxidant added to the modified conjugated diene-based polymer.

(Physical Property 11) Nitrogen Atom Content (ppm by mass)

The modified conjugated diene-based polymer was used as a sample, and the measurement was carried out in accordance with JIS-2609: Crude petroleum and petroleum products - Determination of nitrogen content, chemiluminescence method.

As the measurement apparatus, a trace total nitrogen analyzer ("TN-2100H", manufactured by Mitsubishi Chemical Analytech Co., Ltd.) was used.

In the measurement method, under a flow of argon gas, the sample was thermally decomposed and then subjected to oxidative combustion with oxygen gas, and the resulting nitrogen monoxide was allowed to undergo an oxidation reaction with ozone gas under dehydrating conditions. The emission intensity at 590 to 2500 nm was detected, and from the area value of the emission intensity, the nitrogen content was determined.

(Physical Property 12) Content of Silicon Atoms (ppm by mass)

The content of silicon atoms was measured by using 0.5 g of the modified conjugated diene-based polymer as a sample and using an ultraviolet and visible spectrophotometer (trade name "UV-1800" manufactured by Shimadzu Corporation) in accordance with JIS K 0101 44.3.1, and quantified by the molybdenum blue absorption spectrophotometry.

When silicon atoms were detected (lower detection limit: 10 ppm by mass), it was determined that the sample contained silicon atoms.

Using this method, the presence of silicon atoms in the modified conjugated diene-based polymers of Examples and Comparative Examples was confirmed.

(Example 1) Modified Conjugated Diene-based Polymer (A1)

Two tank pressure vessels, each of which had an internal volume of 10 L and a ratio (L/D) of internal height (L) and diameter (D) of 4.0, had an inlet at a bottom and an outlet at a top, and was equipped with a stirrer and a temperature controlling jacket, were connected to each other as polymerizing branching reactors.

1,3-Butadiene, styrene and n-hexane, from which a water content had been precedently removed, were mixed under conditions of 18.5 g/min, 6.2 g/min and 117.4 g/min, respectively to be continuously supplied to the bottom of the first reactor. In the supply, immediately before the mixed solution entered the first reactor, n-butyllithium to be used for residual impurity inactivation was continuously added under a condition of 0.096 mmol/min while being mixed with a static mixer. Besides, at the same time as the supply of 1,3-butadiene, styrene, n-hexane, and n-butyllithium, 2,2-bis(2-oxolanyl) propane as the polar compound and a mixed solution of piperidinolithium (also referred to as "1-lithiopiperidine", abbreviated as "a-1" in the tables) and n-butyllithium (the molar ratio of piperidinolithium and n-butyllithium was set to 0.75:0.25), as a lithium amide precedently adjusted as the polymerization initiator were supplied under conditions of respectively 0.049 mmol/min and 0.221 mmol/min to the bottom of the first reactor in which the reaction solution was vigorously stirred with the stirrer. It is noted that the internal temperature of the first reactor was kept at 82°C.

A conjugated diene-based polymer solution generated through a polymerization reaction caused in the first reactor was continuously taken out from the top of the first reactor to be continuously supplied to the bottom of the second reactor. When the polymerization was sufficiently stabilized, while copolymerizing 1,3-butadiene and styrene, trimethoxy(4-vinylphenyl)silane (also referred to as "c-1") as the branching agent was supplied from the bottom of the second reactor under a condition of 0.011 mmol/min, and furthermore, additional 1,3-butadiene was added under a condition of 6.2 g/min to perform the polymerizing branching step.

It is noted that the internal temperature of the second reactor was kept at 86°C. A small amount of the conjugated diene-based polymer solution was taken out from the outlet of the second reactor, an antioxidant (BHT) was added thereto to obtain an amount of 0.2 g per 100 g of the conjugated diene-based polymer, and then the solvent was removed after adding the antioxidant (BHT). For the thus obtained conjugated diene-based polymer, various molecular weights as measured by GPC, a Mooney viscosity at 110°C, and a Mooney stress relaxation were measured.

Physical properties are shown in Table 1 to Table 3 (Physical Properties 1-1, 1-2, 1-3, Physical Property 2, and Physical Property 3).

Next, a conjugated diene-based polymer solution flowing out of the top of the second reactor was supplied to the static mixer. Furthermore, to the conjugated diene-based polymer solution continuously flowing in the static mixer, tetrakis(3-trimethoxysilylpropyl)-1,3-propanediamine (also referred to as "b-1") was continuously added as the coupling modifiers under a condition of 0.031 mmol/min, respectively, and thus, the conjugated diene-based polymer was coupled. Here, a time until the addition of the coupling modifier to the polymer solution flowing out of the outlet of the second reactor was 4.8 min, the temperature of the polymer solution at which the coupling modifier was added was 68°C. Besides, a difference between the temperature of the polymer solution at the outlet of the second reactor and the temperature of the

polymer solution in adding the coupling modifier was 2°C.

Next, to the polymer solution flowing out of the static mixer, a solution of an antioxidant (BHT) in n-hexane was continuously added so that the content of the antioxidant (BHT) was 0.5 parts by mass with respect to 100 parts by mass of the conjugated diene-based polymer to complete the coupling reaction. The solvent was removed by steam stripping, and thus, a modified conjugated diene-based polymer (A1) was obtained by forming into a bale. Physical properties of the thus obtained modified conjugated diene-based polymer (A1) were measured.

Measurement results are shown in Table 1.

(Example 2) Modified Conjugated Diene-based Polymer (A2)

A modified conjugated diene-based polymer (A2) was obtained in the same manner as in Example 1 except that b-1 as the coupling modifier was supplied at 0.044 mmol/min.

Physical properties of the modified conjugated diene-based polymer (A2) are shown in Table 1.

(Example 3) Modified Conjugated Diene-based Polymer (A3)

A modified conjugated diene-based polymer (A3) was obtained in the same manner as in Example 1 except that b-1 as the coupling modifier was supplied at 0.054 mmol/min.

Physical properties of the modified conjugated diene-based polymer (A3) are shown in Table 1.

(Example 4) Modified Conjugated Diene-based Polymer (A4)

A modified conjugated diene-based polymer (A4) was obtained in the same manner as in Example 1 except that b-1 as the coupling modifier was supplied at 0.062 mmol/min.

Physical properties of the modified conjugated diene-based polymer (A4) are shown in Table 1.

(Example 5) Modified Conjugated Diene-based Polymer (A5)

A modified conjugated diene-based polymer (A5) was obtained in the same manner as in Example 1 except that b-1 as the coupling modifier was supplied at 0.070 mmol/min.

Physical properties of the modified conjugated diene-based polymer (A5) are shown in Table 1.

(Example 6) Modified Conjugated Diene-based Polymer (A6)

A modified conjugated diene-based polymer (A6) was obtained in the same manner as in Example 1 except that a mixed solution of lithium amide/n-butyllithium as the polymerization initiator was supplied at 0.173 mmol/min, that 2,2-bis(2-oxolanyl)propane as the polar compound was supplied at 0.037 mmol/min, that c-1 as the branching agent was supplied at 0.009 mmol/min, and that b-1 as the coupling modifier was supplied at 0.054 mmol/min.

Physical properties of the modified conjugated diene-based polymer (A6) are shown in Table 1.

(Example 7) Modified Conjugated Diene-based Polymer (A7)

A modified conjugated diene-based polymer (A7) was obtained in the same manner as in Example 1 except that a mixed solution of lithium amide/n-butyllithium as the polymerization initiator was supplied at 0.154 mmol/min, that 2,2-bis(2-oxolanyl)propane as the polar compound was supplied at 0.037 mmol/min, that c-1 as the branching agent was supplied at 0.009 mmol/min, and that b-1 as the coupling modifier was supplied at 0.054 mmol/min.

Physical properties of the modified conjugated diene-based polymer (A7) are shown in Table 1.

(Example 8) Modified Conjugated Diene-based Polymer (A8)

A modified conjugated diene-based polymer (A8) was obtained in the same manner as in Example 1 except that 1,3-butadiene was supplied at 16.0 g/min, that additional 1,3-butadiene was supplied at 8.6 g/min, and that b-1 as the coupling modifier was supplied at 0.054 mmol/min.

Physical properties of the modified conjugated diene-based polymer (A8) are shown in Table 1.

(Example 9) Modified Conjugated Diene-based Polymer (A9)

A modified conjugated diene-based polymer (A9) was obtained in the same manner as in Example 1 except that

1,3-butadiene was supplied at 13.6 g/min, that additional 1,3-butadiene was supplied at 11.1 g/min, and that b-1 as the coupling modifier was supplied at 0.054 mmol/min.

Physical properties of the modified conjugated diene-based polymer (A9) are shown in Table 1.

(Example 10) Modified Conjugated Diene-based Polymer (A10)

A modified conjugated diene-based polymer (A10) was obtained in the same manner as in Example 1 except that 1,3-butadiene was supplied at 19.7 g/min, that styrene was supplied at 4.6 g/min, and that 2,2-bis(2-oxolanyl)propane as the polar compound was supplied at 0.080 mmol/min.

Physical properties of the modified conjugated diene-based polymer (A10) are shown in Table 1.

(Example 11) Modified Conjugated Diene-based Polymer (A11)

A modified conjugated diene-based polymer (A11) was obtained in the same manner as in Example 1 except that 1,3-butadiene was supplied at 19.7 g/min, that styrene was supplied at 4.6 g/min, that 2,2-bis(2-oxolanyl)propane as the polar compound was supplied at 0.080 mmol/min, and that b-1 as the coupling modifier was supplied at 0.044 mmol/min.

Physical properties of the modified conjugated diene-based polymer (A11) are shown in Table 1.

(Example 12) Modified Conjugated Diene-based Polymer (A12)

A modified conjugated diene-based polymer (A12) was obtained in the same manner as in Example 1 except that 1,3-butadiene was supplied at 19.7 g/min, that styrene was supplied at 4.6 g/min, that 2,2-bis(2-oxolanyl)propane as the polar compound was supplied at 0.080 mmol/min, and that b-1 as the coupling modifier was supplied at 0.054 mmol/min.

Physical properties of the modified conjugated diene-based polymer (A12) are shown in Table 1.

(Example 13) Modified Conjugated Diene-based Polymer (A13)

A modified conjugated diene-based polymer (A13) was obtained in the same manner as in Example 1 except that 1,3-butadiene was supplied at 19.7 g/min, that styrene was supplied at 4.6 g/min, that 2,2-bis(2-oxolanyl)propane as the polar compound was supplied at 0.080 mmol/min, and that b-1 as the coupling modifier was supplied at 0.062 mmol/min.

Physical properties of the modified conjugated diene-based polymer (A13) are shown in Table 1.

(Example 14) Modified Conjugated Diene-based Polymer (A14)

A modified conjugated diene-based polymer (A14) was obtained in the same manner as in Example 1 except that 1,3-butadiene was supplied at 19.7 g/min, that styrene was supplied at 4.6 g/min, that 2,2-bis(2-oxolanyl)propane as the polar compound was supplied at 0.080 mmol/min, and that b-1 as the coupling modifier was supplied at 0.070 mmol/min. Physical properties of the modified conjugated diene-based polymer (A14) are shown in Table 1.

(Example 15) Modified Conjugated Diene-based Polymer (A15)

A modified conjugated diene-based polymer (A15) was obtained in the same manner as in Example 1 except that 1,3-butadiene was supplied at 20.8 g/min, that styrene was supplied at 6.9 g/min, that 2,2-bis(2-oxolanyl)propane as the polar compound was supplied at 0.104 mmol/min, that additional 1,3-butadiene was supplied at 6.9 g/min, that c-1 as the branching agent was supplied at 0.011 mmol/min, that b-1 as the coupling modifier was supplied at 0.031 mmol/min, that the temperature of the first reactor was set to 68°C, and that the temperature of the second reactor was set to 70°C. Physical properties of the modified conjugated diene-based polymer (A15) are shown in Table 1.

(Example 16) Modified Conjugated Diene-based Polymer (A16)

A modified conjugated diene-based polymer (A16) was obtained in the same manner as in Example 1 except that 1,3-butadiene was supplied at 20.8 g/min, that styrene was supplied at 6.9 g/min, that 2,2-bis(2-oxolanyl)propane as the polar compound was supplied at 0.104 mmol/min, that additional 1,3-butadiene was supplied at 6.9 g/min, that c-1 as the branching agent was supplied at 0.011 mmol/min, that b-1 as the coupling modifier was supplied at 0.044 mmol/min, that the temperature of the first reactor was set to 68°C, and that the temperature of the second reactor was set to 70°C. Physical properties of the modified conjugated diene-based polymer (A16) are shown in Table 2.

(Example 17) Modified Conjugated Diene-based Polymer (A17)

A modified conjugated diene-based polymer (A17) was obtained in the same manner as in Example 1 except that 1,3-butadiene was supplied at 20.8 g/min, that styrene was supplied at 6.9 g/min, that 2,2-bis(2-oxolanyl)propane as the polar compound was supplied at 0.104 mmol/min, that additional 1,3-butadiene was supplied at 6.9 g/min, that c-1 as the branching agent was supplied at 0.011 mmol/min, that b-1 as the coupling modifier was supplied at 0.054 mmol/min, that the temperature of the first reactor was set to 68°C, and that the temperature of the second reactor was set to 70°C. Physical properties of the modified conjugated diene-based polymer (A17) are shown in Table 2.

(Example 18) Modified Conjugated Diene-based Polymer (A18)

A modified conjugated diene-based polymer (A18) was obtained in the same manner as in Example 1 except that 1,3-butadiene was supplied at 20.8 g/min, that styrene was supplied at 6.9 g/min, that 2,2-bis(2-oxolanyl)propane as the polar compound was supplied at 0.104 mmol/min, that additional 1,3-butadiene was supplied at 6.9 g/min, that c-1 as the branching agent was supplied at 0.011 mmol/min, that b-1 as the coupling modifier was supplied at 0.062 mmol/min, that the temperature of the first reactor was set to 68°C, and that the temperature of the second reactor was set to 70°C. Physical properties of the modified conjugated diene-based polymer (A18) are shown in Table 2.

(Example 19) Modified Conjugated Diene-based Polymer (A19)

A modified conjugated diene-based polymer (A19) was obtained in the same manner as in Example 1 except that 1,3-butadiene was supplied at 20.8 g/min, that styrene was supplied at 6.9 g/min, that 2,2-bis(2-oxolanyl)propane as the polar compound was supplied at 0.104 mmol/min, that additional 1,3-butadiene was supplied at 6.9 g/min, that c-1 as the branching agent was supplied at 0.011 mmol/min, that b-1 as the coupling modifier was supplied at 0.070 mmol/min, that the temperature of the first reactor was set to 68°C, and that the temperature of the second reactor was set to 70°C. Physical properties of the modified conjugated diene-based polymer (A19) are shown in Table 2.

(Example 20) Modified Conjugated Diene-based Polymer (A20)

A modified conjugated diene-based polymer (A20) was obtained in the same manner as in Example 1 except that 1,3-butadiene was supplied at 16.2 g/min, that styrene was supplied at 9.2 g/min, that 2,2-bis(2-oxolanyl)propane as the polar compound was supplied at 0.045 mmol/min, that additional 1,3-butadiene was supplied at 5.4 g/min, that c-1 as the branching agent was supplied at 0.011 mmol/min, that b-1 as the coupling modifier was supplied at 0.031 mmol/min, that the temperature of the first reactor was set to 68°C, and that the temperature of the second reactor was set to 74°C. Physical properties of the modified conjugated diene-based polymer (A20) are shown in Table 2.

(Example 21) Modified Conjugated Diene-based Polymer (A21)

A modified conjugated diene-based polymer (A21) was obtained in the same manner as in Example 1 except that 1,3-butadiene was supplied at 16.2 g/min, that styrene was supplied at 9.2 g/min, that 2,2-bis(2-oxolanyl)propane as the polar compound was supplied at 0.045 mmol/min, that additional 1,3-butadiene was supplied at 5.4 g/min, that c-1 as the branching agent was supplied at 0.011 mmol/min, that b-1 as the coupling modifier was supplied at 0.044 mmol/min, that the temperature of the first reactor was set to 68°C, and that the temperature of the second reactor was set to 74°C. Physical properties of the modified conjugated diene-based polymer (A21) are shown in Table 2.

(Example 22) Modified Conjugated Diene-based Polymer (A22)

A modified conjugated diene-based polymer (A22) was obtained in the same manner as in Example 1 except that 1,3-butadiene was supplied at 16.2 g/min, that styrene was supplied at 9.2 g/min, that 2,2-bis(2-oxolanyl)propane as the polar compound was supplied at 0.045 mmol/min, that additional 1,3-butadiene was supplied at 5.4 g/min, that c-1 as the branching agent was supplied at 0.011 mmol/min, that b-1 as the coupling modifier was supplied at 0.054 mmol/min, that the temperature of the first reactor was set to 68°C, and that the temperature of the second reactor was set to 74°C. Physical properties of the modified conjugated diene-based polymer (A22) are shown in Table 2.

(Example 23) Modified Conjugated Diene-based Polymer (A23)

A modified conjugated diene-based polymer (A23) was obtained in the same manner as in Example 1 except that 1,3-butadiene was supplied at 16.2 g/min, that styrene was supplied at 9.2 g/min, that 2,2-bis(2-oxolanyl)propane as the

polar compound was supplied at 0.045 mmol/min, that additional 1,3-butadiene was supplied at 5.4 g/min, that c-1 as the branching agent was supplied at 0.011 mmol/min, that b-1 as the coupling modifier was supplied at 0.062 mmol/min, that the temperature of the first reactor was set to 68°C, and that the temperature of the second reactor was set to 74°C. Physical properties of the modified conjugated diene-based polymer (A23) are shown in Table 2.

(Example 24) Modified Conjugated Diene-based Polymer (A24)

A modified conjugated diene-based polymer (A24) was obtained in the same manner as in Example 1 except that 1,3-butadiene was supplied at 16.2 g/min, that styrene was supplied at 9.2 g/min, that 2,2-bis(2-oxolanyl)propane as the polar compound was supplied at 0.045 mmol/min, that additional 1,3-butadiene was supplied at 5.4 g/min, that c-1 as the branching agent was supplied at 0.011 mmol/min, that b-1 as the coupling modifier was supplied at 0.070 mmol/min, that the temperature of the first reactor was set to 68°C, and that the temperature of the second reactor was set to 74°C. Physical properties of the modified conjugated diene-based polymer (A24) are shown in Table 2.

(Example 25) Modified Conjugated Diene-based Polymer (A25)

A modified conjugated diene-based polymer (A25) was obtained in the same manner as in Example 1 except that 1,3-butadiene was supplied at 17.2 g/min, that styrene was supplied at 5.7 g/min, that 2,2-bis(2-oxolanyl)propane as the polar compound was supplied at 0.060 mmol/min, that additional 1,3-butadiene was supplied at 7.9 g/min, that c-1 as the branching agent was supplied at 0.011 mmol/min, that b-1 as the coupling modifier was supplied at 0.031 mmol/min, that the temperature of the first reactor was set to 83°C, and that the temperature of the second reactor was set to 88°C. Physical properties of the modified conjugated diene-based polymer (A25) are shown in Table 2.

(Example 26) Modified Conjugated Diene-based Polymer (A26)

A modified conjugated diene-based polymer (A26) was obtained in the same manner as in Example 1 except that 1,3-butadiene was supplied at 17.2 g/min, that styrene was supplied at 5.7 g/min, that 2,2-bis(2-oxolanyl)propane as the polar compound was supplied at 0.060 mmol/min, that additional 1,3-butadiene was supplied at 7.9 g/min, that c-1 as the branching agent was supplied at 0.011 mmol/min, that b-1 as the coupling modifier was supplied at 0.044 mmol/min, that the temperature of the first reactor was set to 83°C, and that the temperature of the second reactor was set to 88°C. Physical properties of the modified conjugated diene-based polymer (A26) are shown in Table 2.

(Example 27) Modified Conjugated Diene-based Polymer (A27)

A modified conjugated diene-based polymer (A27) was obtained in the same manner as in Example 1 except that 1,3-butadiene was supplied at 17.2 g/min, that styrene was supplied at 5.7 g/min, that 2,2-bis(2-oxolanyl)propane as the polar compound was supplied at 0.060 mmol/min, that additional 1,3-butadiene was supplied at 7.9 g/min, that c-1 as the branching agent was supplied at 0.011 mmol/min, that b-1 as the coupling modifier was supplied at 0.054 mmol/min, that the temperature of the first reactor was set to 83°C, and that the temperature of the second reactor was set to 88°C. Physical properties of the modified conjugated diene-based polymer (A27) are shown in Table 2.

(Example 28) Modified Conjugated Diene-based Polymer (A28)

A modified conjugated diene-based polymer (A28) was obtained in the same manner as in Example 1 except that 1,3-butadiene was supplied at 17.2 g/min, that styrene was supplied at 5.7 g/min, that 2,2-bis(2-oxolanyl)propane as the polar compound was supplied at 0.060 mmol/min, that additional 1,3-butadiene was supplied at 7.9 g/min, that c-1 as the branching agent was supplied at 0.011 mmol/min, that b-1 as the coupling modifier was supplied at 0.062 mmol/min, that the temperature of the first reactor was set to 83°C, and that the temperature of the second reactor was set to 88°C. Physical properties of the modified conjugated diene-based polymer (A28) are shown in Table 2.

(Example 29) Modified Conjugated Diene-based Polymer (A29)

A modified conjugated diene-based polymer (A29) was obtained in the same manner as in Example 1 except that 1,3-butadiene was supplied at 17.2 g/min, that styrene was supplied at 5.7 g/min, that 2,2-bis(2-oxolanyl)propane as the polar compound was supplied at 0.060 mmol/min, that additional 1,3-butadiene was supplied at 7.9 g/min, that c-1 as the branching agent was supplied at 0.011 mmol/min, that b-1 as the coupling modifier was supplied at 0.070 mmol/min, that the temperature of the first reactor was set to 83°C, and that the temperature of the second reactor was set to 88°C. Physical properties of the modified conjugated diene-based polymer (A29) are shown in Table 2.

(Comparative Example 1) Modified Conjugated Diene-based Polymer (B1)

A modified conjugated diene-based polymer (B1) was obtained in the same manner as in Example 1 except that n-butyllithium as the polymerization initiator was used. Physical properties of the modified conjugated diene-based polymer (B1) are shown in Table 3.

(Comparative Example 2) Modified Conjugated Diene-based Polymer (B2)

A modified conjugated diene-based polymer (B2) was obtained in the same manner as in Example 1 except that n-butyllithium as the polymerization initiator was supplied at 0.071 mmol/min, that b-1 as the coupling modifier was supplied at 0.054 mmol/min, that 2,2-bis(2-oxolanyl)propane as the polar compound was supplied at 0.055 mmol/min, that c-1 as the branching agent was supplied at 0.0016 mmol/min, and b-1 as the coupling modifier was supplied at 0.071 mmol/min. Physical properties of the modified conjugated diene-based polymer (B2) are shown in Table 3.

(Comparative Example 3) Modified Conjugated Diene-based Polymer (B3)

In the same manner as in Example 1 except that n-butyllithium as the polymerization initiator was used, as for the polymerization temperature, the internal temperature of the first reactor was kept at 92°C and the internal temperature of the second reactor was kept at 95°C.
A modified conjugated diene-based polymer (B3) was obtained. Physical properties of the modified conjugated diene-based polymer (B3) are shown in Table 3.

(Comparative Example 4) Modified Conjugated Diene-based Polymer (B4)

A modified conjugated diene-based polymer (B4) was obtained in the same manner as in Example 1 except that n-butyllithium as the polymerization initiator was used, that 1,3-butadiene was supplied at 16.2 g/min, that styrene was supplied at 9.24 g/min, that 2,2-bis(2-oxolanyl)propane as the polar compound was supplied at 0.104 mmol/min, that additional 1,3-butadiene was supplied at 5.4 g/min, that c-1 as the branching agent was supplied at 0.011 mmol/min, that b-1 as the coupling modifier was supplied at 0.054 mmol/min, that the temperature of the first reactor was set to 68°C, and that the temperature of the second reactor was set to 70°C. Physical properties of the modified conjugated diene-based polymer (B4) are shown in Table 3.

[Table 1]

[Table 2]

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|---|
| Modified Conjugated Diene-based Polymer | | | - | A1 | A2 | A3 | A4 | A5 | A6 | A7 | A8 | A9 | A10 | A11 | A12 | A13 | A14 | A15 |
| Polymerization Conditions | Butadiene | | (g/min) | 18.5 | 18.5 | 18.5 | 18.5 | 18.5 | 18.5 | 18.5 | 16.0 | 13.6 | 19.7 | 19.7 | 19.7 | 19.7 | 19.7 | 20.8 |
| | Additional Butadiene | | (g/min) | 6.2 | 6.2 | 6.2 | 6.2 | 6.2 | 6.2 | 6.2 | 8.6 | 11.1 | 6.6 | 6.6 | 6.6 | 6.6 | 6.6 | 6.9 |
| | Styrene | | (g/min) | 6.2 | 6.2 | 6.2 | 6.2 | 6.2 | 6.2 | 6.2 | 6.2 | 6.2 | 4.6 | 4.6 | 4.6 | 4.6 | 4.6 | 3.1 |
| | n-Hexane | | (g/min) | 117.4 | 117.4 | 117.4 | 117.4 | 117.4 | 117.4 | 117.4 | 117.4 | 117.4 | 117.4 | 117.4 | 117.4 | 117.4 | 117.4 | 117.4 |
| | n-Butyllithium for Treating Impurity | | (mmol/min) | 0.096 | 0.096 | 0.096 | 0.096 | 0.096 | 0.096 | 0.096 | 0.096 | 0.096 | 0.096 | 0.096 | 0.096 | 0.096 | 0.096 | 0.096 |
| | Initiator: Lithium Amide/ n-Butyllithium | Type | - | a-1 | a-1 | a-1 | a-1 | a-1 | a-1 | a-1 | a-1 | a-1 | a-1 | a-1 | a-1 | a-1 | a-1 | a-1 |
| | | Amount Added | (mmol/min) | 0.221 | 0.221 | 0.221 | 0.221 | 0.221 | 0.173 | 0.154 | 0.221 | 0.221 | 0.221 | 0.221 | 0.221 | 0.221 | 0.221 | 0.221 |
| | Polar Compound | | (mmol/min) | 0.049 | 0.049 | 0.049 | 0.049 | 0.049 | 0.042 | 0.037 | 0.049 | 0.049 | 0.080 | 0.080 | 0.080 | 0.080 | 0.080 | 0.104 |
| | Branching Agent | Used or not | - | c-1 | c-1 | c-1 | c-1 | c-1 | c-1 | c-1 | c-1 | c-1 | c-1 | c-1 | c-1 | c-1 | c-1 | c-1 |
| | | Amount Added | (mmol/min) | 0.011 | 0.011 | 0.011 | 0.011 | 0.011 | 0.010 | 0.009 | 0.011 | 0.011 | 0.011 | 0.011 | 0.011 | 0.011 | 0.011 | 0.011 |
| | Coupling Agent | Type | - | b-1 | b-1 | b-1 | b-1 | b-1 | b-1 | b-1 | b-1 | b-1 | b-1 | b-1 | b-1 | b-1 | b-1 | b-1 |
| | | Amount Added | (mmol/min) | 0.031 | 0.044 | 0.054 | 0.062 | 0.070 | 0.054 | 0.054 | 0.054 | 0.054 | 0.031 | 0.044 | 0.054 | 0.062 | 0.070 | 0.031 |
| Physical Properties | Start-end Modified Conjugated Diene-based Polymer | (Physical Property 1-1) Number Average Molecular Weight | (g/mol) | 204,070 | 204,070 | 204,070 | 204,070 | 204,070 | 255,000 | 204,070 | 204,070 | 231,000 | 235,000 | 235,000 | 235,000 | 235,000 | 235,000 | 204,070 |
| | | (Physical Property 1-2) Weight Average Molecular Weight | (g/mol) | 351,000 | 351,000 | 351,000 | 351,000 | 351,000 | 480,000 | 351,000 | 351,000 | 436,000 | 441,000 | 441,000 | 441,000 | 441,000 | 441,000 | 351,000 |
| | | (Physical Property 1-3) Mw/Mn | - | 1.72 | 1.72 | 1.72 | 1.72 | 1.72 | 1.88 | 1.72 | 1.72 | 1.89 | 1.88 | 1.88 | 1.88 | 1.88 | 1.88 | 1.72 |
| | | (Physical Property 2) Mooney Viscosity (110°C) | - | 31 | 31 | 31 | 31 | 31 | 65.0 | 31 | 31 | 55.4 | 33 | 33.0 | 33.0 | 33.0 | 33.0 | 31.0 |
| | | (Physical Property 3) MSR (110°C) | - | 0.825 | 0.825 | 0.825 | 0.825 | 0.825 | 0.785 | 0.826 | 0.840 | 0.793 | 0.861 | 0.861 | 0.861 | 0.861 | 0.861 | 0.825 |
| | | (Physical Property 5) Modification Ratio | (mass%) | 75 | 75 | 75 | 75 | 75 | 75 | 75 | 75 | 75 | 75 | 75 | 75 | 75 | 75 | 79 |
| | Both-end Modified Conjugated Diene-based Polymer | (Physical Property 1-1) Number Average Molecular Weight | (g/mol) | 442,308 | 436,111 | 424,157 | 417,614 | 414,706 | 53,179 | 422,905 | 422,222 | 436,416 | 458,791 | 452,778 | 441,011 | 434,659 | 432,353 | 442,308 |
| | | (Physical Property 1-2) Weight Average Molecular Weight | (g/mol) | 805,000 | 785,000 | 755,000 | 735,000 | 705,000 | 92,000 | 757,000 | 760,000 | 755,000 | 835,000 | 815,000 | 785,000 | 765,000 | 735,000 | 805,000 |
| | | (Physical Property 1-3) Mw/Mn | - | 1.82 | 1.80 | 1.78 | 1.76 | 1.70 | 1.73 | 1.79 | 1.80 | 1.73 | 1.82 | 1.80 | 1.78 | 1.76 | 1.70 | 1.82 |
| | | (Physical Property 2) Mooney Viscosity (100°C) | - | 135 | 131 | 120 | 133 | 136 | 150 | 120 | 120 | 115 | 138 | 135 | 126 | 137 | 140 | 135 |
| | | (Physical Property 3) MSR (100°C) | - | 0.250 | 0.260 | 0.270 | 0.280 | 0.310 | 0.230 | 0.270 | 0.270 | 0.280 | 0.250 | 0.260 | 0.270 | 0.280 | 0.310 | 0.250 |
| | | (Physical Property 4) Branch Number Bn | - | 7 | 6.8 | 6 | 5.5 | 5 | 6.2 | 6 | 6 | 6.1 | 7 | 6.8 | 6.0 | 5.5 | 5.0 | 7.0 |
| | | (Physical Property 5) Modification Ratio | (mass%) | 93 | 95 | 96 | 96 | 97 | 80 | 96 | 96 | 71 | 93 | 95 | 96 | 96 | 97 | 95 |
| | | (Physical Property 6) Amount of Bound Styrene | (mass%) | 20 | 20 | 20 | 20 | 20 | 20 | 20 | 20 | 20 | 15 | 15 | 15 | 15 | 15 | 10 |
| | | (Physical Property 7) Amount of Vinyl Bond | (mol%) | 20 | 20 | 20 | 20 | 20 | 20 | 20 | 20 | 20 | 30 | 29 | 31 | 30 | 30 | 40 |
| | | (Physical Property 8) Absolute Molecular Weight | (g/mol) | 870,000 | 851,595 | 822,000 | 800,500 | 770,400 | 990,000 | 825,000 | 827,000 | 817,000 | 900,000 | 881,595 | 852,000 | 830,500 | 800,400 | 870,000 |
| | | (Physical Property 9) Glass Transition Temperature | (°C) | -60 | -60 | -60 | -60 | -60 | -60 | -60 | -60 | -60 | -60 | -60 | -60 | -60 | -60 | -60 |
| | | (Physical Property 10) Stabilizer Content | phr | 0.50 | 0.50 | 0.50 | 0.48 | 0.47 | 0.45 | 0.45 | 0.45 | 0.45 | 0.45 | 0.45 | 0.45 | 0.47 | 0.48 | 0.50 |
| | | (Physical Property 11) Nitrogen Atom Content | ppm by mass | 129 | 140 | 150 | 157 | 164 | 128 | 119 | 150 | 150 | 129 | 140 | 150 | 157 | 164 | 129 |
| | | (Physical Property 12) Silicon Content | ppm by mass | 164 | 209 | 248 | 277 | 305 | 247 | 247 | 249 | 249 | 163 | 209 | 248 | 277 | 305 | 163 |

| | | | | Example 16 | Example 17 | Example 18 | Example 19 | Example 20 | Example 21 | Example 22 | Example 23 | Example 24 | Example 25 | Example 26 | Example 27 | Example 28 | Example 29 |
|---|---|---|---|---|---|---|---|---|---|---|---|---|---|---|---|---|---|
| Modified Conjugated Diene-based Polymer | | | - | A16 | A17 | A18 | A19 | A20 | A21 | A22 | A23 | A24 | A25 | A26 | A27 | A28 | A29 |
| Polymerization Conditions | Butadiene | | (g/min) | 20.8 | 20.8 | 20.8 | 20.8 | 16.2 | 16.2 | 16.2 | 16.2 | 16.2 | 17.2 | 17.2 | 17.2 | 17.2 | 17.2 |
| | Additional Butadiene | | (g/min) | 6.9 | 6.9 | 6.9 | 6.9 | 5.4 | 5.4 | 5.4 | 5.4 | 5.4 | 5.7 | 5.7 | 5.7 | 5.7 | 5.7 |
| | Styrene | | (g/min) | 3.1 | 3.1 | 3.1 | 3.1 | 9.2 | 9.2 | 9.2 | 9.2 | 9.2 | 7.9 | 7.9 | 7.9 | 7.9 | 7.9 |
| | n-Hexane | | (g/min) | 117.4 | 117.4 | 117.4 | 117.4 | 117.4 | 117.4 | 117.4 | 117.4 | 117.4 | 117.4 | 117.4 | 117.4 | 117.4 | 117.4 |
| | n-Butyllithium for Treating Impurity | | (mmol/min) | 0.096 | 0.096 | 0.096 | 0.096 | 0.096 | 0.096 | 0.096 | 0.096 | 0.096 | 0.096 | 0.096 | 0.096 | 0.096 | 0.096 |
| | Initiator: Lithium Amide/ n-Butyllithium | Type | - | a-1 | a-1 | a-1 | a-1 | a-1 | a-1 | a-1 | a-1 | a-1 | a-1 | a-1 | a-1 | a-1 | a-1 |
| | | Amount Added | (mmol/min) | 0.221 | 0.221 | 0.221 | 0.221 | 0.221 | 0.221 | 0.221 | 0.221 | 0.221 | 0.221 | 0.221 | 0.221 | 0.221 | 0.221 |
| | Polar Compound | | (mmol/min) | 0.104 | 0.104 | 0.104 | 0.104 | 0.045 | 0.045 | 0.045 | 0.045 | 0.045 | 0.060 | 0.060 | 0.060 | 0.060 | 0.060 |
| | Branching Agent | Used or not | - | c-1 | c-1 | c-1 | c-1 | c-1 | c-1 | c-1 | c-1 | c-1 | c-1 | c-1 | c-1 | c-1 | c-1 |
| | | Amount Added | (mmol/min) | 0.011 | 0.011 | 0.011 | 0.011 | 0.011 | 0.011 | 0.011 | 0.011 | 0.011 | 0.024 | 0.024 | 0.024 | 0.024 | 0.024 |
| | Coupling Agent | Type | - | b-1 | b-1 | b-1 | b-1 | b-1 | b-1 | b-1 | b-1 | b-1 | b-1 | b-1 | b-1 | b-1 | b-1 |
| | | Amount Added | (mmol/min) | 0.044 | 0.054 | 0.062 | 0.070 | 0.031 | 0.044 | 0.054 | 0.062 | 0.070 | 0.031 | 0.044 | 0.054 | 0.062 | 0.070 |
| Physical Properties | Start-end Modified Conjugated Diene-based Polymer | (Physical Property 1-1) Number Average Molecular Weight | (g/mol) | 204,070 | 204,070 | 204,070 | 204,070 | 231,000 | 231,000 | 231,000 | 231,000 | 231,000 | 261,000 | 261,000 | 261,000 | 261,000 | 261,000 |
| | | (Physical Property 1-2) Weight Average Molecular Weight | (g/mol) | 351,000 | 351,000 | 351,000 | 351,000 | 430,000 | 430,000 | 430,000 | 430,000 | 430,000 | 542,000 | 542,000 | 542,000 | 542,000 | 542,000 |
| | | (Physical Property 1-3) Mw/Mn | - | 1.72 | 1.72 | 1.72 | 1.72 | 1.86 | 1.86 | 1.86 | 1.86 | 1.86 | 2.08 | 2.08 | 2.08 | 2.08 | 2.08 |
| | | (Physical Property 2) Mooney Viscosity (110°C) | - | 31.0 | 31.0 | 31.0 | 31.0 | 37.0 | 37.0 | 37.0 | 37.0 | 37.0 | 72.5 | 72.5 | 72.5 | 72.5 | 72.5 |
| | | (Physical Property 3) MSR (110°C) | - | 0.825 | 0.825 | 0.825 | 0.825 | 0.890 | 0.890 | 0.890 | 0.890 | 0.890 | 0.561 | 0.561 | 0.561 | 0.561 | 0.561 |
| | | (Physical Property 5) Modification Ratio | (mass%) | 79 | 79 | 79 | 79 | 70 | 70 | 70 | 70 | 70 | 75 | 75 | 75 | 75 | 75 |
| | Both-end Modified Conjugated Diene-based Polymer | (Physical Property 1-1) Number Average Molecular Weight | (g/mol) | 436,111 | 424,157 | 417,614 | 414,706 | 453,297 | 452,778 | 447,727 | 420,000 | 414,706 | 442,308 | 436,111 | 424,157 | 417,614 | 414,706 |
| | | (Physical Property 1-2) Weight Average Molecular Weight | (g/mol) | 785,000 | 755,000 | 735,000 | 705,000 | 825,000 | 815,000 | 788,000 | 735,000 | 705,000 | 805,000 | 785,000 | 755,000 | 735,000 | 705,000 |
| | | (Physical Property 1-3) Mw/Mn | - | 1.80 | 1.78 | 1.76 | 1.70 | 1.82 | 1.80 | 1.76 | 1.75 | 1.70 | 1.82 | 1.80 | 1.78 | 1.76 | 1.70 |
| | | (Physical Property 2) Mooney Viscosity (100°C) | - | 131 | 120 | 133 | 136 | 135 | 131 | 120 | 133 | 136 | 108 | 116 | 125 | 133 | 137 |
| | | (Physical Property 3) MSR (100°C) | - | 0.260 | 0.270 | 0.280 | 0.310 | 0.250 | 0.260 | 0.270 | 0.280 | 0.310 | 0.300 | 0.310 | 0.300 | 0.280 | 0.275 |
| | | (Physical Property 4) Branch Number Bn | - | 6.8 | 6.0 | 5.5 | 5.0 | 7.2 | 6.8 | 6.1 | 5.4 | 4.5 | 5.5 | 5.7 | 6.2 | 6.7 | 7.3 |
| | | (Physical Property 5) Modification Ratio | (mass%) | 95 | 96 | 98 | 98 | 95 | 96 | 96 | 98 | 98 | 74 | 73 | 75 | 72 | 71 |
| | | (Physical Property 6) Amount of Bound Styrene | (mass%) | 10 | 10 | 10 | 10 | 30 | 30 | 30 | 30 | 30 | 25 | 25 | 25 | 25 | 25 |
| | | (Physical Property 7) Amount of Vinyl Bond | (mol%) | 40 | 40 | 40 | 40 | 21 | 21 | 21 | 21 | 21 | 25 | 25 | 25 | 25 | 25 |
| | | (Physical Property 8) Absolute Molecular Weight | (g/mol) | 851,595 | 822,000 | 800,500 | 770,400 | 900,000 | 871,595 | 842,000 | 820,500 | 800,400 | 520,000 | 540,000 | 563,000 | 664,000 | 700,000 |
| | | (Physical Property 9) Glass Transition Temperature | (°C) | -60 | -60 | -60 | -60 | -45 | -45 | -45 | -45 | -45 | -50 | -50 | -50 | -50 | -50 |
| | | (Physical Property 10) Stabilizer Content | phr | 0.48 | 0.49 | 0.50 | 0.45 | 0.46 | 0.45 | 0.47 | 0.45 | 0.50 | 0.45 | 0.48 | 0.49 | 0.44 | 0.43 |
| | | (Physical Property 11) Nitrogen Atom Content | ppm by mass | 140 | 150 | 157 | 164 | 129 | 140 | 150 | 157 | 164 | 129 | 140 | 150 | 157 | 164 |
| | | (Physical Property 12) Silicon Content | ppm by mass | 209 | 248 | 277 | 305 | 164 | 209 | 249 | 277 | 305 | 175 | 220 | 260 | 288 | 317 |

[Table 3]

| | | | | Comparative Example 1 | Comparative Example 2 | Comparative Example 3 | Comparative Example 4 |
|---|---|---|---|---|---|---|---|
| Modified Conjugated Diene-based Polymer | | | - | B1 | B2 | B3 | B4 |
| Polymerization Conditions | Butadiene | | (g/min) | 18.5 | 18.5 | 18.5 | 16.2 |
| | Additional Butadiene | | (g/min) | 6.2 | 6.2 | 6.2 | 5.4 |
| | Styrene | | (g/min) | 6.2 | 6.2 | 6.2 | 9.2 |
| | n-Hexane | | (g/min) | 117.4 | 117.4 | 117.4 | 117.4 |
| | n-Butyllithium for Treating Impurity | | (mmol/min) | 0.096 | 0.1 | 0.1 | 0.1 |
| | Initiator: n-Butyllithium | | (mmol/min) | 0.221 | 0.310 | 0.220 | 0.220 |
| | Polar Compound | | (mmol/min) | 0.049 | 0.060 | 0.050 | 0.100 |
| | Branching Agent | Used or not | - | c-1 | c-1 | c-1 | c-1 |
| | | Amount Added | (mmol/min) | 0.011 | 0.016 | 0.011 | 0.011 |
| | Coupling Agent | Type | - | b-1 | b-1 | b-1 | b-1 |
| | | Amount Added | (mmol/min) | 0.031 | 0.071 | 0.054 | 0.054 |
| Physical Properties | Start-end Modified Conjugated Diene-based Polymer | (Physical Property 1-1) Number Average Molecular Weight | (g/mol) | 204,070 | 116,860 | 202,830 | 204,070 |
| | | (Physical Property 1-2) Weight Average Molecular Weight | (g/mol) | 351,000 | 201,000 | 430,000 | 351,000 |
| | | (Physical Property 1-3) Mw/Mn | - | 1.72 | 1.72 | 2.12 | 1.72 |
| | | (Physical Property 2) Mooney Viscosity (110°C) | - | 33 | 33 | 47 | 33 |
| | | (Physical Property 3) MSR (110°C) | - | 0.825 | 0.825 | 0.552 | 0.825 |
| | | (Physical Property 5) Modification Ratio | (mass%) | 0 | 0 | 0 | 0 |
| | Both-end Modified Conjugated Diene-based Polymer | (Physical Property 1-1) Number Average Molecular Weight | (g/mol) | 442,308 | 292,105 | 230,631 | 447,222 |
| | | (Physical Property 1-2) Weight Average Molecular Weight | (g/mol) | 805,000 | 555,000 | 512,000 | 805,000 |
| | | (Physical Property 1-3) Mw/Mn | - | 1.82 | 1.90 | 2.22 | 1.80 |
| | | (Physical Property 2) Mooney Viscosity (100°C) | - | 139 | 95 | 135 | 137 |
| | | (Physical Property 3) MSR (100°C) | - | 0.250 | 0.380 | 0.270 | 0.250 |
| | | (Physical Property 4) Branch Number Bn | - | 6.5 | 6.8 | 3.5 | 6.8 |
| | | (Physical Property 5) Modification Ratio | (mass%) | 75 | 80 | 55 | 80 |
| | | (Physical Property 6) Amount of Bound Styrene | (mass%) | 20 | 20 | 20 | 30 |
| | | (Physical Property 7) Amount of Vinyl Bond | (mol%) | 20 | 20 | 20 | 40 |
| | | (Physical Property 8) Absolute Molecular Weight | (g/mol) | 870,000 | 613,594 | 613,594 | 881,595 |
| | | (Physical Property 9) Glass Transition Temperature | (°C) | -60 | -60 | -60 | -30 |
| | | (Physical Property 10) Stabilizer Content | phr | 0.50 | 0.51 | 0.52 | 0.52 |
| | | (Physical Property 11) Nitrogen Atom Content | ppm by mass | 28 | 64 | 30 | 49 |
| | | (Physical Property 12) Silicon Content | ppm by mass | 164 | 313 | 144 | 249 |

[Evaluation of Bale of Modified Conjugated Diene-based Polymer]

(Evaluation 1) Appearance of Bale (Presence or Absence of Cracks/Collapses)

Regarding each of the bales of modified conjugated diene-based polymers produced by the methods described in Examples and Comparative Examples, visual observation was made on the appearance, such as the presence or absence of external cracks or collapses, and evaluation was made based on the following criteria by panelists each on a scale of 1 to 4. The appearance of the bale is an index of bale formability of the modified conjugated diene-based polymer.

IV: Crumbs are not clamped and could not be formed into a bale.

III: Although the polymer could be formed into a bale, it exhibited collapses over time.

II: Cracks, collapses, and other defects of 5% or less were observed on the bale surface.

I: Cracks, collapses, or other defects were not observed on the bale surface at all.

[Fabrication and Evaluation of Rubber Compositions]

(Evaluation of Rubber Compositions)

The modified conjugated diene-based polymers A1 to A29 and B1 to B4 shown in Table 1 to Table 7 were respectively used as raw materials to obtain rubber compositions in accordance with the following composition:

· Modified conjugated diene-based polymer (any one of A1 to A29 and B1 to B4): 70 parts by mass (excluding oil)
· Butadiene rubber (trade name "BR150", manufactured by Ube Industries, Ltd.): 30 parts by mass
· Silica (trade name "Ultrasil 7000GR", manufactured by Evonik Degussa, nitrogen adsorption specific surface area: 170 $m^2$/g): 75.0 parts by mass
· Carbon black (trade name "Seast KH (N339)", manufactured by Tokai Carbon Co., Ltd.): 5.0 parts by mass
· Silane coupling agent: (trade name "Si75", manufactured by Evonik Degussa, bis(triethoxysilylpropyl)disulfide): 6.0 parts by mass
· S-RAE oil (trade name "Process NC140", manufactured by JX Nippon Oil & Energy Corporation): 32.0 parts by mass
· Zinc oxide: 2.5 parts by mass
· Stearic acid: 2.0 parts by mass
· Anti-aging agent (N-(1,3-dimethylbutyl)-N'-phenyl-p-phenylenediamine): 2.0 parts by mass
· Sulfur: 1.7 parts by mass
· Vulcanization accelerator 1 (N-cyclohexyl-2-benzothiazylsulfinamide): 1.7 parts by mass
· Vulcanization accelerator 2 (diphenylguanidine): 2.0 parts by mass

Specifically, the above-described materials were kneaded by the following method to obtain a rubber composition. A closed kneader (having an internal volume of 0.5 L) equipped with a temperature controller was used to knead, as a first stage of kneading, the modified conjugated diene-based polymer (any one of A1 to A29 and B1 to B4), the butadiene rubber, the fillers (silica and carbon black), the silane coupling agent, the S-RAE oil, zinc oxide and stearic acid under conditions of a filling ratio of 65% and a rotor rotation speed of 30 to 50 rpm. Here, the temperature of the closed kneader was controlled to obtain each rubber composition (compound) at a discharging temperature of 155 to 160°C.
Next, after cooling the compound obtained as described above to room temperature, as a second stage of the kneading, the anti-aging agent was added thereto, and the resultant was kneaded again under the same conditions as those for the first stage of the kneading to improve dispersibility of the silica. Also in this case, the discharging temperature for the compound was adjusted to 155 to 160°C by the temperature control of the kneader. After cooling, as a third stage of the kneading, sulfur and the vulcanization accelerators 1 and 2 were added thereto, and the resultant was kneaded by an open roll set to 70°C. Thereafter, the resultant was shaped and vulcanized at 160°C for 20 minutes by a vulcanizing press. The rubber compositions before the vulcanization, and the rubber compositions after the vulcanization were evaluated.
Specifically, the evaluations were performed as described below. Evaluation results are shown in Table 4 to Table 7.

(Evaluation 2) Clamping Property of Discharged Substance

Regarding each of the modified conjugated diene-based polymers before vulcanization produced by the methods described in Examples and Comparative Examples, a clump (shape) obtained immediately after being discharged from the pressurizing kneader (immediately after being discharged after completing the kneading with the pressurizing kneader in the first stage of the kneading) was visually observed to perform evaluation based on the following criteria by panelists each on a scale of 1 to 4. A clumping property is an index of processability of a vulcanizate.

IV: A sheet end portion was smooth by 60% or less, and processability was very poor.

III: A sheet end portion was smooth by more than 60% and 80% or less, and processability was poor.

II: A sheet end portion was smooth by more than 80% and 90% or less, and processability was excellent.

I: A sheet end portion was smooth over 90%, and processability was very excellent.

(Evaluations 3 and 4) Viscoelastisity Parameter (Fuel Economy/Wet Grip Performance)

A viscoelasticity testing machine "ARES" manufactured by Rheometric Scientific, Inc. was used to measure a viscoelasticity parameter in a torsion mode. Each measurement value was shown as an index obtained assuming that a

result obtained in the rubber composition of Comparative Example 1 was 100. Here, a tan δ measured at 50°C at a frequency of 10 Hz and strain of 3% was used as an index of a low hysteresis loss property, namely, fuel efficiency, and each measured value is shown as an index obtained assuming that a result of Comparative Example 1 was 100. A larger index indicates better fuel efficiency, and one having such a value over 65 was evaluated as excellent in fuel efficiency. Besides, a tan δ measured at 0°C at a frequency of 10 Hz and strain of 1% was used as an index of wet grip performance, and each measured value is shown as an index obtained assuming that a result of Comparative Example 1 was 100. A larger index indicates better wet grip performance, and one having such a value over 65 was evaluated as excellent in wet grip performance.

(Evaluations 5 and 6) Tensile Strength and Tensile Elongation

Tensile strength and tensile elongation were measured in accordance with a tensile test method according to JIS K6251. Each measured value was shown as an index obtained assuming that a result of Comparative Example 1 was 100. A larger index indicates better tensile strength and tensile elongation, leading to excellent fracture performance.

(Evaluation 7) Abrasion Resistance

An Acron abrasion tester (manufactured by Yasuda Seiki Seisakusho, Ltd.) was used to measure an abrasion amount through 1,000 rotations at a load of 44.4 N in accordance with JIS K6264-2. Each measured value was shown as an index obtained assuming that a result of Comparative Example 1 was 100. A larger index indicates better abrasion resistance, and one having such a value over 80 was evaluated as excellent in abrasion resistance.

[Table 4]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Conjugated Diene-based Polymer, or Modified Conjugated Diene-based Polymer | | A1 | A2 | A3 | A4 | A5 | A6 | A7 | A8 | A9 | A10 |
| Bale Formability | (Evaluation 1) Appearance (Presence or Absence of Cracks/Collapses) | I | I | I | II | II | II | I | II | I | I |
| Processability | (Evaluation 2) Clamping Property of Discharged Substance | I | I | I | II | II | II | I | II | I | I |
| Physical Properties | (Evaluation 3) Viscoelasticity Parameter (Fuel Economy) | 120 | 125 | 125 | 125 | 125 | 120 | 130 | 115 | 115 | 125 |
| | (Evaluation 4) Viscoelasticity Parameter (Wet Grip Performance) | 100 | 100 | 100 | 100 | 100 | 100 | 100 | 100 | 100 | 100 |
| | (Evaluation 5) Tensile Strength | 105 | 115 | 115 | 115 | 115 | 120 | 105 | 110 | 117 | 110 |
| | (Evaluation 6) Tensile Elongation | 102 | 110 | 110 | 110 | 110 | 115 | 100 | 105 | 112 | 105 |
| | (Evaluation 7) Abrasion Resistance | 125 | 137 | 135 | 137 | 140 | 145 | 125 | 143 | 135 | 125 |

[Table 5]

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Conjugated Diene-based Polymer, or Modified Conjugated Diene-based Polymer | | A11 | A12 | A13 | A14 | A15 | A16 | A17 | A18 | A19 | A20 |
| Bale Formability | (Evaluation 1) Appearance (Presence or Absence of Cracks/Collapses) | I | I | II | II | I | I | I | II | II | I |
| Processability | (Evaluation 2) Clamping Property of Discharged Substance | I | I | II | II | I | I | I | II | II | I |
| Physical Properties | (Evaluation 3) Viscoelasticity Parameter (Fuel Economy) | 125 | 125 | 125 | 125 | 125 | 125 | 125 | 125 | 125 | 117 |
| | (Evaluation 4) Viscoelasticity Parameter (Wet Grip Performance) | 100 | 100 | 100 | 100 | 100 | 100 | 100 | 100 | 100 | 110 |
| | (Evaluation 5) Tensile Strength | 112 | 112 | 112 | 112 | 109 | 111 | 111 | 111 | 111 | 120 |
| | (Evaluation 6) Tensile Elongation | 108 | 108 | 108 | 108 | 104 | 107 | 107 | 107 | 107 | 113 |
| | (Evaluation 7) Abrasion Resistance | 130 | 135 | 137 | 140 | 125 | 130 | 135 | 137 | 140 | 110 |

[Table 6]

| | | Example 21 | Example 22 | Example 23 | Example 24 | Example 25 | Example 26 | Example 27 | Example 28 | Example 29 |
|---|---|---|---|---|---|---|---|---|---|---|
| Conjugated Diene-based Polymer, or Modified Conjugated Diene-based Polymer | | A21 | A22 | A23 | A24 | A25 | A26 | A27 | A28 | A29 |
| Bale Formability | (Evaluation 1) Appearance (Presence or Absence of Cracks/Collapses) | I | I | I | I | I | I | I | I | I |
| Processability | (Evaluation 2) Clamping Property of Discharged Substance | I | I | I | I | I | I | I | I | I |
| Physical Properties | (Evaluation 3) Viscoelasticity Parameter (Fuel Economy) | 117 | 117 | 117 | 117 | 117 | 117 | 117 | 117 | 117 |
| | (Evaluation 4) Viscoelasticity Parameter (Wet Grip Performance) | 110 | 110 | 110 | 110 | 110 | 110 | 110 | 110 | 110 |
| | (Evaluation 5) Tensile Strength | 122 | 122 | 122 | 122 | 117 | 119 | 119 | 119 | 119 |
| | (Evaluation 6) Tensile Elongation | 116 | 116 | 116 | 116 | 110 | 113 | 113 | 113 | 113 |
| | (Evaluation 7) Abrasion Resistance | 115 | 120 | 122 | 125 | 110 | 115 | 120 | 122 | 125 |

[Table 7]

| | | Comparative Example 1 | Comparative Example 2 | Comparative Example 3 | Comparative Example 4 |
|---|---|---|---|---|---|
| Conjugated Diene-based Polymer, or Modified Conjugated Diene-based Polymer | | B1 | B2 | B3 | B4 |
| Bale Formability | (Evaluation 1) Appearance (Presence or Absence of Cracks/Collapses) | IV | III | IV | III |
| Processability | (Evaluation 2) Clamping Property of Discharged Substance | IV | III | IV | III |
| Physical Properties | (Evaluation 3) Viscoelasticity Parameter (Fuel Economy) | 100 | 110 | 71 | 60 |
| | (Evaluation 4) Viscoelasticity Parameter (Wet Grip Performance) | 100 | 100 | 98 | 150 |
| | (Evaluation 5) Tensile Strength | 100 | 80 | 98 | 110 |
| | (Evaluation 6) Tensile Elongation | 100 | 87 | 95 | 120 |
| | (Evaluation 7) Abrasion Resistance | 100 | 75 | 85 | 55 |

The modified conjugated diene-based polymers of the present invention exhibited excellent bale formability, processability, and fuel efficiency. It is also found that the vulcanizates thereof are excellent in performance balance of abrasion resistance, fracture performance, and a low hysteresis loss property.

The disclosure of Japanese Patent Application No. 2023-126215, filed on August 2, 2023, is incorporated herein by reference in its entirety. All publications, patent applications, and technical standards cited herein are incorporated herein by reference to the same extent as if each publication, patent application, or technical standard were individually and specifically indicated to be incorporated by reference.

## Industrial Applicability

The modified conjugated diene-based polymer and the method for producing the modified conjugated diene-based polymer, as well as the modified conjugated diene-based polymer composition, the rubber composition, and the like, of the present invention exhibit excellent formation retainability of the modified conjugated diene-based polymer, and a vulcanizate obtained therefrom is excellent in performance balance of abrasion resistance, fracture performance, and a low hysteresis loss property, and therefore, are industrially applicable in applications such as a tire, resin modification, interior and exterior of a vehicle, an anti-vibration rubber, and shoes.

## Claims

**1.** A modified conjugated diene-based polymer, satisfying the following <condition (i)> to <condition (vi)>:

<condition (i)>
a Mooney viscosity measured at 100°C is 100 or more and 180 or less;
<condition (ii)>
a Mooney stress relaxation measured at 100°C is in a range of 0.10 to 0.40;
<condition (iii)>
a glass transition temperature is -95°C to -45°C;
<condition (iV)>
a content of silicon atoms is 100 ppm by mass or more with respect to a total amount of the modified conjugated diene-based polymer;

<condition (V)>

a content of nitrogen atoms is 50 ppm by mass or more with respect to a total amount of the modified conjugated diene-based polymer; and <condition (Vi)>
a content of an antioxidant is 0.5 parts by mass or less with respect to 100 parts by mass of the modified conjugated diene-based polymer.

**2.** The modified conjugated diene-based polymer according to claim 1, wherein the Mooney viscosity measured at 100°C of the <condition (i)> is 105 or more and 180 or less.

**3.** The modified conjugated diene-based polymer according to claim 1, wherein the Mooney stress relaxation measured at 100°C of the <condition (ii)> is 0.10 to 0.35.

**4.** The modified conjugated diene-based polymer according to claim 1, wherein the glass transition temperature of the <condition (iii)> is -95°C to - 55°C.

**5.** The modified conjugated diene-based polymer according to claim 1, wherein the content of nitrogen atoms of the <condition (V)> is 80 ppm by mass or more with respect to a total amount of the modified conjugated diene-based polymer.

**6.** The modified conjugated diene-based polymer according to claim 1, wherein a molecular weight distribution (PDI; MWD) is 1.4 to 2.5.

**7.** The modified conjugated diene-based polymer according to claim 1, wherein an amount of 1,2-vinyl bond is 45.0 mol% or less with respect to a total mass of the modified conjugated diene-based polymer.

**8.** The modified conjugated diene-based polymer according to claim 1, wherein a branch number (Bn) measured by viscosity detector-equipped GPC-light scattering measurement is 2 or more.

**9.** The modified conjugated diene-based polymer according to claim 1,

having a nitrogen atom at least at one end, and
having at least one branched chain with a star structure,
wherein the branched chain with a star structure has a portion derived from a vinyl-based monomer containing an alkoxysilyl group or a halosilyl group, and
wherein the portion derived from a vinyl-based monomer containing an alkoxysilyl group or a halosilyl group has a further main chain branch structure and has a coupling structure centered on a nitrogen-containing alkoxysilane substituent.

**10.** The modified conjugated diene-based polymer according to claim 1,

wherein, in the coupling structure centered on a nitrogen-containing alkoxysilane substituent, a nitrogen-containing alkoxysilane modifier residue has at least four silicon atoms and alkoxy groups and/or hydroxy groups, and
wherein a modified conjugated diene-based polymer chain having a main chain branch structure is bonded to the silicon atoms, and in the modifier residue, a number of the alkoxy groups and/or the hydroxy groups is larger than a number of the silicon atoms on average.

**11.** A bale comprising 100 parts by mass of the modified conjugated diene-based polymer according to claim 1 and 2 parts by mass or less of a softener component.

**12.** A bale comprising 100 parts by mass of the modified conjugated diene-based polymer according to claim 1 and less than 1 part by mass of a softener component.

**13.** A method for producing the modified conjugated diene-based polymer according to claim 1, the method comprising:

a step of polymerizing at least a conjugated diene compound in the presence of an organic lithium compound having at least one nitrogen atom in a molecule; and

a branching step of obtaining a branched conjugated diene-based polymer having a main chain branch structure, using a branching agent,
wherein, in a step of coupling the branched conjugated diene-based polymer using a coupling agent and/or a step of modifying the branched conjugated diene-based polymer with a modifier having a nitrogen-containing group, the coupling agent and/or the modifier is added in excess.

**14.** A rubber composition comprising:

100 parts by mass of a rubber component; and
5.0 parts by mass or more and 150 parts by mass or less of a filler,
wherein the rubber component contains 10 parts by mass or more of the modified conjugated diene-based polymer according to claim 1 or the bale according to claim 11 with respect to 100 parts by mass of a total amount of the rubber component.

**15.** A tire comprising the rubber composition according to claim 14.

## INTERNATIONAL SEARCH REPORT

International application No.
**PCT/JP2024/027614**

### A. CLASSIFICATION OF SUBJECT MATTER

***C08F 36/04***(2006.01)i; ***B60C 1/00***(2006.01)i; ***C08F 297/04***(2006.01)i; ***C08K 3/013***(2018.01)i; ***C08L 9/00***(2006.01)i; ***C08L 53/02***(2006.01)i
FI: C08F36/04; B60C1/00 Z; C08F297/04; C08K3/013; C08L9/00; C08L53/02

According to International Patent Classification (IPC) or to both national classification and IPC

### B. FIELDS SEARCHED

Minimum documentation searched (classification system followed by classification symbols)

C08F36/04; B60C1/00; C08F297/04; C08K3/013; C08L9/00; C08L53/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2021-165356 A (ASAHI KASEI KABUSHIKI KAISHA) 14 October 2021 (2021-10-14) paragraphs [0190]-[0216], comparative examples 3, 6 | 1-8, 13-15<br>9-12 |
| A | JP 2022-054761 A (ASAHI KASEI KABUSHIKI KAISHA) 07 April 2022 (2022-04-07) claims 1-7, paragraphs [0125]-[0153], reference examples 6, 8, 14 | 1-15 |
| A | WO 2021/044921 A1 (ASAHI KASEI KABUSHIKI KAISHA) 11 March 2021 (2021-03-11) paragraphs [0358]-[0386], examples 22-25, 27-29 | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/027614**

| Patent document cited in search report | Publication date (day/month/year) | Patent family member(s) | Publication date (day/month/year) |
|---|---|---|---|
| JP 2021-165356 A | 14 October 2021 | (Family: none) | |
| JP 2022-054761 A | 07 April 2022 | (Family: none) | |
| WO 2021/044921 A1 | 11 March 2021 | US 2022/0372197 A1<br>paragraphs [0494]-[0539], examples 22-25, 27-29<br>EP 4026704 A1<br>CN 114341206 A<br>KR 10-2022-0041162 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019131810 A
- JP 2005290355 A
- JP 11189616 A
- WO 07114203 A
- JP 2018534375 A
- JP 59140211 A
- JP 428704 A
- JP 436636 A
- JP 63004841 A
- JP 1037970 A
- JP 1053851 A
- JP 2009041 A
- JP 8109219 A
- JP 2023126215 A


### Non-patent literature cited in the description


- **R. R. HAMPTON**. *Analytical Chemistry*, 1949, vol. 21, 923